# EUROPÄISCHE PATENTSCHRIFT

(11) **EP 3 554 767 B1**
(45) Veröffentlichungstag und Bekanntmachung des Hinweises auf die Patenterteilung: **06.03.2024**
(21) Anmeldenummer: 17825483.5
(22) Anmeldetag: 18.12.2017
(51) Int. Cl.: B25F 3/00

(54) **ANTRIEBSBASISMODUL**
DRIVE BASE MODUL
MODULE DE BASE DE LECTEUR

(30) Priorität: 19.12.2016 DE 102016225383; 15.12.2017 DE 102017222869
(43) Veröffentlichungstag der Anmeldung: 23.10.2019
(73) Patentinhaber: Robert Bosch GmbH, 70442 Stuttgart (DE)
(72) Erfinder: CZIRJAK, Peter, 3530 Miskolc (HU); MEIER, Dominik, 80799 München (DE); PURPER, Anne, 72622 Nuertingen (DE); GERGELY, Laszlo, 3561 Felsoezsolca (HU); SZELL, Istvan, 70771 Leinfelden-Echterdingen (DE); HAMPEL, Thomas, 71106 Magstadt (DE); BERES, Aniko, 3300 Eger (HU); VARGA, Zoltan, 3521 Miskolc (HU); GARCIA-FRANCO, Dennis, 70197 Stuttgart (DE); SCHLACHTER, Guenther, 71111 Waldenbuch (DE); HESSE, Hendrik, 70771 Leinfelden-Echterdingen (DE); ETZEL, Timo, 73765 Neuhausen A.D.F (DE); SIMKO, Bence, 3780 Edeleny (HU); FRIEDMANN, Daniel-Philipp, 70182 Stuttgart (DE)
(86) Internationale Anmeldenummer: PCT/EP2017/083224
(87) Internationale Veröffentlichungsnummer: WO 2018/114750

(56) Entgegenhaltungen:
- EP-A1- 2 177 322
- WO-A1-2016/100213
- WO-A1-2016/196984
- DE-A1-102008 003 484
- DE-A1-102011 089 343
- DE-A1-102012 216 189

## Beschreibung

### Stand der Technik

Es sind bereits Antriebsbasismodule mit einer kabelgebundenen Antriebseinheit und mit einer Informationsausgabeeinheit, beispielsweise einem Display oder LEDs, welche zu einer visuellen Rückmeldung vorgesehen sind, bekannt. Eine haptische Rückmeldung kann einem Nutzer durch einen Widerstand und/oder einen Anschlag eines Betätigungselements, welches zu einer Betätigung der Antriebseinheit vorgesehen ist, gegeben sein.

Aus US 20130228355 A1 ist bereits ein Antriebsbasismodul zu einer Verbindung mit verschiedenen Aufsatzvorrichtungen vorgeschlagen worden, das zumindest eine Verbindungsvorrichtung umfasst, die zumindest eine Schnittstelle zu einer antriebstechnischen Verbindung mit zumindest einer Aufsatzvorrichtung auf-weist, und das zumindest eine Antriebseinheit zu einem Antrieb der Aufsatzvor-richtung in einem mit der Verbindungsvorrichtung verbundenen Zustand der Aufsatzvorrichtung aufweist.

Die DE 10 2008 003 484 A1 beschreibt ein Elektrowerkzeug mit einem Elektromotor, wobei das Elektrowerkzeug ein Mittel zur Überwachung von wenigstens einem Parameter des Elektrowerkzeugs und eine Arbeitsfeldbeleuchtung aufweist.

In der WO 2016/100213 A1 wird ein veränderbares elektrisches Werkzeug offenbart, das in einer ersten und zweiten Konfiguration betrieben werden kann. Das Werkzeug umfasst eine Basiseinheit, die dazu ausgebildet ist, ein erstes Modul oder ein zweites Modul aufzunehmen.

EP 2 177 322 A1 offenbart den Oberbegriff des Anspruches 1.

Sitz: Stuttgart, Registergericht: Amtsgericht Stuttgart, HRB 14000;
Aufsichtsratsvorsitzender: Prof. Dr. Stefan Asenkerschbaumer; Geschäftsführung: Dr. Stefan Hartung, Dr. Christian Fischer, Filiz Albrecht, Dr. Markus Forschner, Dr. Markus Hevn, Rolf Naiork

### Offenbarung der Erfindung

Die Erfindung geht aus von einem Antriebsbasismodul, insbesondere handgehaltenem Antriebsbasismodul, vorteilhaft einer modular aufgebauten multifunktionalen handgehaltenen Maschine, zu einer Verbindung mit verschiedenen Aufsatz-vorrichtungen, mit zumindest einer Verbindungsvorrichtung, die zumindest eine Schnittstelle zu einer antriebstechnischen und/oder zu einer datentechnischen Verbindung mit zumindest einer Aufsatzvorrichtung aufweist, und mit zumindest einer Antriebseinheit, insbesondere einem Elektromotor, zu einem Antrieb der Aufsatzvorrichtung in einem mit der Verbindungsvorrichtung verbundenen Zustand der Aufsatzvorrichtung, sowie insbesondere mit zumindest einer Akkueinheit.

Es wird vorgeschlagen, dass das Antriebsbasismodul zumindest eine Informationsausgabeeinheit umfasst, die zumindest dazu vorgesehen ist, einem Bediener akustisch und/oder haptisch Informationen auszugeben. Durch die erfindungsgemäße Ausgestaltung des Antriebsbasismoduls kann insbesondere ein hoher Nutzerkomfort erreicht werden. Vorteilhaft kann ein Bediener auch während einem Betrieb leicht wahrnehmbar mit Informationen versorgt werden. Besonders vorteilhaft kann ein Bediener mit akustischen, vorzugsweise zu visuellen und/oder haptischen Informationen redundanten, Informationen versorgt werden. Es können vorteilhaft betriebsbedingte und/oder sicherheitsbedingte Informationen ausgegeben werden und/oder es kann ein Bediener vor kritischen Situationen gewarnt werden.

Unter einem "Antriebsbasismodul" soll insbesondere ein zumindest mit einer Antriebsfunktion ausgestattetes Basismodul einer modular aufgebauten multifunktionalen Maschine, insbesondere einer multifunktionalen tragbaren Werkzeugmaschine, verstanden werden, das zumindest zum Antrieb einer Aufsatzvorrichtung vorgesehen ist, insbesondere in zumindest einem mit dem Basismodul verbundenen Zustand der Aufsatzvorrichtung. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Vorzugsweise ist die Antriebseinheit des Antriebsbasismoduls als Elektromotor, als Hydraulikmotor, als Pneumatikmotor, als elektromechanischer Aktor, als Piezoaktor, als Verbrennungsmotor und/oder als ein Hybridmotor ausgebildet. Unter einer "Aufsatzvorrichtung" soll insbesondere eine Vorrichtung verstanden werden, die dazu vorgesehen ist, zumindest mechanisch und/oder elektronisch zu einer Ermöglichung eines Antriebs und/oder einer Übertragung von elektronischen Signalen mit dem Antriebsbasismodul verbunden zu werden und die dazu vorgesehen ist eine Funktion, insbesondere eine Handwerkzeugmaschinenfunktion, zu erfüllen. Vorzugsweise ist die Aufsatzvorrichtung dazu vorgesehen eine Schraub-, Bohr-, Schlagbohr-, Hammerbohr-, Hammer-, Säge-, Fräs-, Pump-, Abpump-, Press-, Saug-, Tacker-, Stanz-, Gebläse-, Auftrags-, Ausleucht- und/oder Schleiffunktion zu erfüllen. Des Weiteren ist denkbar, dass die Aufsatzvorrichtung eine Mehrzahl von Funktionen, insbesondere individuell auswählbare Funktionen, vereint. Ebenso ist denkbar, dass die Aufsatzvorrichtung zumindest eine von einer Handwerkzeugmaschinenfunktion verschiedene Funktion erfüllt. Vorzugsweise umfasst die Aufsatzvorrichtung eine zur Verbindungsvorrichtung des Antriebsbasismoduls komplementäre Verbindungsvorrichtung mit einer komplementären antriebstechnischen und/oder komplementären datentechnischen Schnittstelle, wobei die komplementäre antriebstechnische und/oder datentechnische Schnittstelle der komplementären Verbindungsvorrichtung der Aufsatzvorrichtung dazu vorgesehen ist, mit der antriebstechnischen und/oder datentechnischen Schnittstelle der Verbindungsvorrichtung des Antriebsbasismoduls verbunden zu werden. Es ist denkbar, dass die Aufsatzvorrichtung eine Elektronikeinheit umfasst, die über die komplementäre Verbindungsvorrichtung der Aufsatzvorrichtung datentechnisch mit dem Antriebsbasismodul verbindbar ist, insbesondere mittels einer Verbindung der komplementären Verbindungsvorrichtung der Aufsatzvorrichtung und der Verbindungsvorrichtung des Antriebsbasismoduls. Vorzugsweise ist die Elektronikeinheit der Aufsatzvorrichtung dazu vorgesehen, mittels einer kontaktierenden und/oder kontaktlosen Verbindung Informationen an das Antriebsbasismodul zu übertragen. Bevorzugt umfasst die Schnittstelle der Verbindungsvorrichtung zumindest einen elektrischen Kontakt zu einer Übertragung von elektrischen Signalen und/oder Energie an zumindest eine an der Verbindungsvorrichtung angeordneten Aufsatzvorrichtung. Es ist denkbar, dass die datentechnische Schnittstelle der Verbindungsvorrichtung eine Vielzahl an elektrischen Kontakten aufweist, wobei zumindest ein Teil der elektrischen Kontakte zu einer digitalen und/oder analogen Informationsübertragung genutzt wird. Unter "datentechnisch" soll insbesondere mit einem Signalaustausch, vorteilhaft mit einem, vorzugsweise leitergebundenen, elektrischen Signalaustausch und/oder mit einem, vorzugsweise kabellosen, Signalaustausch über elektromagnetische Wellen, verstanden werden.

Insbesondere weist die antriebstechnische Schnittstelle der Verbindungsvorrichtung und/oder der komplementären Verbindungsvorrichtung zumindest ein Kraft- und/oder Formschlusselement und vorteilhaft eine Mehrzahl an Kraft- und/oder Formschlusselementen auf, welches/welche vorzugsweise dazu vorgesehen ist/sind, ein Drehmoment abzustützen. Vorteilhaft weist die antriebstechnische und/oder datentechnische Schnittstelle der Verbindungsvorrichtung und/oder der komplementären Verbindungsvorrichtung zumindest einen elektrischen Kontakt und besonders vorteilhaft eine Mehrzahl an elektrischen Kontakten auf, welcher/welche vorzugsweise dazu vorgesehen ist/sind, Signale und/oder Daten zwischen dem Antriebsbasismodul und der Aufsatzvorrichtung zu übertragen und/oder die Aufsatzvorrichtung mit elektrischer Energie zu versorgen, insbesondere für eine in die Aufsatzvorrichtung integrierte weitere Antriebseinheit. Besonders vorteilhaft umfasst die antriebstechnische Schnittstelle der Verbindungsvorrichtung und/oder der komplementären Verbindungsvorrichtung zumindest ein Verbindungselement, vorzugsweise Rastelement, und bevorzugt eine Mehrzahl an Verbindungselementen, vorzugsweise Rastelementen, welches/welche dazu vorgesehen ist/sind, das Antriebsbasismodul und die Aufsatzvorrichtung kraft- und/oder formschlüssig miteinander zu verbinden. Insbesondere ist die Antriebseinheit dazu vorgesehen, mittels der antriebstechnischen Schnittstelle der Verbindungsvorrichtung und mittels der antriebstechnischen der komplementären Verbindungsvorrichtung die Aufsatzvorrichtung mechanisch zu betätigen. Ferner ist insbesondere eine Energieversorgungseinheit dazu vorgesehen, mittels der antriebstechnischen Schnittstelle der Verbindungsvorrichtung und mittels der antriebstechnischen Schnittstelle der komplementären Verbindungsvorrichtung die Aufsatzvorrichtung mit elektrischer Energie zu versorgen. Unter einem "Kraft- und/oder Formschlusselement" soll insbesondere ein Element verstanden werden, welches zumindest zu einer lösbaren Verbindung vorgesehen ist, wobei eine Haltekraft zwischen zwei Bauteilen vorzugsweise durch einen geometrischen Eingriff der Bauteile ineinander und/oder eine Reibkraft zwischen den Bauteilen übertragen wird. Unter einem "Rastelement" soll in diesem Zusammenhang insbesondere ein federelastisches Mittel zur Herstellung einer Rastverbindung verstanden werden, das dazu vorgesehen ist, bei einer Montage elastisch ausgelenkt zu werden. Unter "koppelbar" soll insbesondere lösbar, vorteilhaft manuell lösbar, verbunden und zumindest elektrisch und/oder mechanisch wirkverbunden verstanden werden.

Insbesondere weist das Antriebsbasismodul zumindest eine Getriebeeinheit auf. Vorteilhaft ist die Getriebeeinheit mit der Antriebseinheit mechanisch gekoppelt, vorzugsweise über eine Antriebswelle der Antriebseinheit und/oder eine Eingangswelle der Getriebeeinheit. Besonders vorteilhaft ist die Getriebeeinheit koaxial zu der Antriebseinheit angeordnet. Die Getriebeeinheit kann insbesondere zumindest ein Kurbelgetriebe, zumindest ein Kurvengetriebe, zumindest ein Rollengetriebe und/oder zumindest ein Sperrgetriebe aufweisen. Vorteilhaft weist die Getriebeeinheit zumindest ein Rädergetriebe, besonders vorteilhaft Zahnradgetriebe, beispielsweise Kegelradgetriebe und/oder bevorzugt Stirnradgetriebe, besonders bevorzugt Planetenradgetriebe, auf. Ferner weist die Getriebeeinheit vorteilhaft eine Mehrzahl an Wellen, besonders vorteilhaft zumindest eine Eingangswelle und/oder zumindest eine Ausgangswelle, auf. Die Getriebeeinheit kann insbesondere zumindest zu einer Änderung einer Rotationsachse vorgesehen sein. Vorteilhaft ist die Getriebeeinheit zumindest zu einer Drehzahl- und/oder Drehmomentänderung vorgesehen.

Insbesondere weist das Antriebsbasismodul und/oder die Aufsatzvorrichtung zumindest ein metallicbeschichtetes Sichtbauteil auf. Vorteilhaft weist das Antriebsbasismodul zumindest zwei metallicbeschichtete Sichtbauteile auf. Unter einem "metallicbeschichteten Sichtbauteil" soll insbesondere ein Bauteil verstanden werden, welches in einem montierten Zustand zumindest teilweise sichtbar ist und welches zumindest eine Metallicbeschichtung aufweist, deren Oberfläche in dem montierten Zustand zumindest zu einem wesentlichen Teil, vorteilhaft zumindest zu 20 % und vorzugsweise zumindest zu 50 %, zu einer Gesamtsichtfläche des Bauteils beiträgt. Unter einer "Metallicbeschichtung" soll insbesondere eine Beschichtung mit einer metallischen Optik verstanden werden. Insbesondere kann die Metallicbeschichtung als eine galvanische Metallbeschichtung, als eine PVD-Beschichtung und/oder als ein Metalliclack, vorteilhaft mit einer Vielzahl an Glimmerblättchen und/oder Metalleffektpigmenten, beispielsweise Aluminiumpigmenten und/oder Messingpigmenten, ausgebildet sein. Insbesondere kann die Oberfläche der Metallicbeschichtung matt oder glänzend ausgebildet sein. Insbesondere weist das Sichtbauteil einen Grundkörper aus Kunststoff auf, auf welchem vorteilhaft die Metallicbeschichtung angebracht ist.

Unter einer "Informationsausgabeeinheit" soll insbesondere eine Vorrichtung verstanden werden, die dazu vorgesehen ist, eine elektronisch kodierte Information in eine vom Bediener wahrnehmbare, insbesondere akustisch oder haptisch wahrnehmbare, und interpretierbar kodierte Information zu wandeln. Vorzugsweise umfasst die Informationsausgabeeinheit zumindest ein Soundmodul und/oder eine Vibrationseinheit. Vorzugsweise erfolgt eine akustische Ausgabe als eine sprachliche Ausgabe, als Ton, als Tonfolge, als Melodie o. dgl. Das Soundmodul ist vorzugsweise als Lautsprecher ausgebildet. Unter einer "Vibrationseinheit" soll insbesondere eine Vorrichtung verstanden, die elektrische Energie in mechanische Schwingungsenergie wandelt. Vorzugsweise ist die Vibrationseinheit dämpfungsfrei mit einem Gehäuseteil eines Gehäuses des Antriebsbasismoduls verbunden. Das Gehäuseteil ist bevorzugt als Handgriffbereich ausgebildet. Es ist jedoch auch denkbar, dass das Gehäuseteil eine andere, einem Fachmann als sinnvoll erscheinende Ausgestaltung aufweist, insbesondere bei einer einteiligen Ausgestaltung von einem Motorgehäuse und einem Handgriffbereich. Vorzugsweise kann eine mittels der Informationsausgabeeinheit ausgebbare Sprache vom Bediener eingestellt werden. Es ist auch denkbar, dass das Antriebsbasismodul zumindest eine Elektronikeinheit mit zumindest einem akustischen Sensorelement umfasst, das dazu vorgesehen ist, eine Sprache des Bedieners zu erfassen, wobei mittels der Elektronikeinheit die mittels der Informationsausgabeeinheit ausgebbare Sprache an die erkannte Sprache anpassbar ist. Unter einem "Sensorelement" soll insbesondere ein Element verstanden werden, das dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, dem Fachmann als sinnvoll erscheinende Sensorelemente denkbar. Ebenso ist denkbar, dass die Informationsausgabeeinheit, derart ausgebildet ist, dass mittels einer Anregung der Antriebseinheit Schwingungen erzeugt werden, um Informationen akustisch und/oder haptisch auszugeben, so dass die Antriebseinheit insbesondere eine Vibrationseinheit der Informationsausgabeeinheit bildet. Des Weiteren ist denkbar, dass die Informationsausgabeeinheit zusätzlich ein weiteres Soundmodul und/oder eine weitere Vibrationseinheit umfasst. Die Informationsausgabeeinheit ist vorzugsweise teilweise an oder in einem Gehäuse des Antriebsbasismoduls angeordnet. Das Gehäuse ist vorzugsweise zu einer Aufnahme und/oder zu einer Lagerung der Antriebseinheit und/oder einer Getriebeeinheit des Antriebsbasismoduls vorgesehen. Es ist jedoch auch denkbar, dass die Informationsausgabeeinheit zumindest teilweise an oder in einem Handgriffbereich des Antriebsbasismoduls angeordnet ist. Ferner ist es denkbar, Informationen mittels der Informationsausgabeeinheit akustisch und/oder haptisch in Form von Morsezeichen auszugeben.

Ferner wird vorgeschlagen, dass das Antriebsbasismodul zumindest eine Elektronikeinheit zumindest zu einer Steuerung und/oder Regelung der Antriebseinheit umfasst, wobei die Informationsausgabeeinheit zumindest dazu vorgesehen ist, akustisch und/oder haptisch Informationen zumindest in Abhängigkeit von mittels der Elektronikeinheit einstellbaren Steuer- und/oder Regelkenngrößen der Antriebseinheit auszugeben. Hierdurch kann ein Bediener vorteilhaft mit Informationen bezüglich der Antriebseinheit versorgt werden. Insbesondere kann die durchgeführte Tätigkeit besonders vorteilhaft kontrolliert durchgeführt werden. Unter einer "Elektronikeinheit" soll insbesondere eine Einheit verstanden werden, die zumindest einen elektrischen Strom in einem Gas, in einem Leiter, in einem Halbleiter und/oder in einem Vakuum vorteilhaft beeinflusst. Unter einer "Steuerung und/oder Regelung der Antriebseinheit" soll insbesondere die Steuerung und/oder Regelung hinsichtlich einer Steuer- und/oder Regelkenngröße der Antriebseinheit verstanden werden. Vorzugsweise erfolgt die Steuerung und/oder Regelung zumindest hinsichtlich eines Drehmomentes und/oder einer Drehzahl der Antriebseinheit. Unter einer Informationsausgabe "in Abhängigkeit von mittels der Elektronikeinheit einstellbaren Steuer- und/oder Regelkenngrößen der Antriebseinheit" soll insbesondere verstanden werden, dass eine Informationsausgabe erfolgt, wenn ein bestimmter Wert der Steuer- und/oder Regelkenngröße erreicht wird und/oder dass sich der Informationsinhalt zumindest auf die Steuer- und/oder Regelkenngröße, insbesondere auf den Wert der Steuer- und/oder Regelkenngröße, bezieht. Vorzugsweise erfolgt eine Informationsausgabe, wenn ein bestimmter Wert der Steuer- und/oder Regelkenngröße erreicht ist. Vorzugsweise ist die Steuer- und/oder Regelkenngröße ein Drehmoment und/oder eine Drehzahl der Antriebseinheit. Vorzugsweise beinhaltet die Information zumindest einen Wert der Steuer- und/oder Regelkenngröße. Beispielsweise ist es denkbar, dass bei einem Erreichen oder einem Überschreiten eines von einem Bediener maximal gewünschten Drehmoments der Antriebseinheit mittels der Informationsausgabeeinheit akustisch und/oder haptisch Informationen ausgebbar sind. Weitere, einem Fachmann als sinnvoll erscheinende Ausgaben von akustischen und/oder haptischen Informationen in Abhängigkeit von Steuer- und/oder Regelkenngrößen sind ebenfalls denkbar.

Des Weiteren wird vorgeschlagen, dass das Antriebsbasismodul zumindest eine Elektronikeinheit aufweist, die zumindest ein Sensorelement zu einer Erfassung zumindest einer Verbindungskenngröße der Schnittstelle aufweist, wobei die Informationsausgabeeinheit zumindest dazu vorgesehen ist, akustisch und/oder haptisch Informationen zumindest in Abhängigkeit von der erfassten Verbindungskenngröße auszugeben. Hierdurch kann vorteilhaft eine Verbindung einer Aufsatzvorrichtung detektiert und der Bediener über eine erfolgreiche oder mangelhafte Verbindung informiert werden. Es kann vorteilhaft eine hohe Bediensicherheit hergestellt und Fehlbedienungen können vorteilhaft vermieden werden. Unter einer "Verbindungskenngröße" soll insbesondere eine elektrische und/oder mechanische Kenngröße einer elektrischen und/oder mechanischen Verbindung einer Aufsatzvorrichtung mit dem Antriebsbasismodul und/oder eine Funktion/Art einer mit dem Antriebsbasismodul verbundenen Aufsatzvorrichtung verstanden werden. Vorzugsweise wird bei einer Verbindung einer Aufsatzvorrichtung mit dem Antriebsbasismodul eine elektrische Schaltung geschlossen, ergänzt, vervollständigt und/oder ein elektrischer Taster und/oder ein mechanisches Kodierelement betätigt. Es ist denkbar, dass die elektrische Schaltung zum Teil in der Aufsatzvorrichtung und zum Teil in dem Antriebsbasismodul angeordnet ist. Vorzugsweise vervollständigt und/oder ergänzt die elektrische Schaltung in der Aufsatzvorrichtung die elektrische Schaltung des Antriebsbasismoduls. Es ist ebenfalls denkbar, dass die elektrische Schaltung vollständig in dem Antriebsbasismodul angeordnet ist. Ferner ist denkbar, dass die Verbindungskenngröße als elektronisch abgespeicherte Information ausgebildet ist.

Ferner wird vorgeschlagen, dass die Informationsausgabeeinheit zumindest dazu vorgesehen ist, akustisch und/oder haptisch Informationen zumindest in Abhängigkeit von einer Funktion und/oder einer Art der an der Schnittstelle angeordneten Aufsatzvorrichtung auszugeben. Dadurch kann ein Bediener besonders vorteilhaft über mögliche Funktionen einer Aufsatzvorrichtung informiert werden.

Des Weiteren kann vorzugsweise die Verbindungskenngröße als analog und/oder digital kodierte Information über die Art und Funktionen einer verbundenen Aufsatzvorrichtung ausgebildet sein. Es ist beispielsweise denkbar, dass eine Elektronikeinheit anhand einer Verbindungskenngröße die Art und die Funktionen der Aufsatzvorrichtung bestimmt und mittels der Informationsausgabeeinheit den Bediener akustisch, insbesondere sprachlich, über Art und Funktion/en der verbundenen Aufsatzvorrichtung informiert. Es ist ebenfalls denkbar, dass mögliche Funktionen einer Aufsatzvorrichtung in einer elektronischen Speichereinheit gespeichert sind. Ebenso kann infolge einer Erfassung einer Verbindungskenngröße mittels des Sensorelements durch die Informationsausgabeeinheit eine aktivierte Funktion der Aufsatzvorrichtung signalisiert werden. Es ist beispielsweise denkbar, dass zumindest eine Verbindungskenngröße als eine von einer Elektronikeinheit in Abhängigkeit von der Art und der Funktion der Aufsatzeinheit veränderbare elektrische Spannung, wobei bestimmten Spannungswerten bestimmte Funktionen zugeordnet sind, als definierter Widerstand ausgebildet ist. Es ist auch denkbar, dass das Antriebsbasismodul und/oder die Aufsatzvorrichtung zumindest ein Speichermodul aufweist, in dem die Verbindungskenngröße beispielsweise als Binärcode hinterlegt ist. Unter einer Informationsausgabe "in Abhängigkeit von einer Funktion und/oder Art der an der Schnittstelle angeordneten Aufsatzvorrichtung" soll insbesondere eine Ausgabe von Informationen verstanden werden, die eine Funktion und/oder eine Art der Aufsatzvorrichtung betreffen. Vorzugsweise kann der Bediener über eine aktivierte Funktion und/oder über einen Funktionswechsel informiert werden. Darüber hinaus ist es denkbar, dass das Antriebsbasismodul zumindest eine Elektronikeinheit mit zumindest einem Sensorelement zur Aufnahme einer Verschleißkenngröße des Antriebsbasismoduls und/oder der Aufsatzvorrichtung umfasst. Es ist beispielsweise denkbar, dass bei Erreichen einer Verschleißgrenze ein Bediener über einen möglichen Funktionsausfall informiert wird.

Des Weiteren wird vorgeschlagen, dass das Antriebsbasismodul zumindest eine Elektronikeinheit umfasst, die zumindest ein Sensorelement zu einer Erfassung zumindest einer Energieversorgungskenngröße aufweist, wobei die Informationsausgabeeinheit zumindest dazu vorgesehen ist, akustisch und/oder haptisch Informationen zumindest in Abhängigkeit von der erfassten Energieversorgungskenngröße auszugeben. Hierdurch kann ein Benutzer besonders vorteilhaft über einen Zustand der Energieversorgung informiert werden. Es kann vorteilhaft über eine drohende Unterbrechung der Energieversorgung gewarnt werden. Unter einer "Energieversorgungskenngröße" soll insbesondere eine elektrische und/oder elektromechanische Kenngröße verstanden werden, die zumindest den Zustand einer Energieversorgung betrifft. Vorzugsweise ist die Energieversorgungskenngröße als elektrische Spannung, als elektrischer Strom und/oder als Restkapazität einer Energieversorgung und/oder als durch einen Verbraucher, insbesondere die Antriebseinheit oder die Elektronikeinheit, des Antriebsbasismoduls verbrauchte Energie ausgebildet. Darunter, dass eine Information zumindest "in Abhängigkeit von der erfassten Energieversorgungskenngröße" ausgegeben wird, soll verstanden werden, dass eine Informationsausgabe von dem Erreichen eines bestimmten Wertes der erfassten Energieversorgungskenngröße veranlasst wird oder der Informationsinhalt den Wert einer Energieversorgungskenngröße betrifft. Es ist beispielsweise denkbar, dass in einem Akkubetrieb des Antriebbasismoduls die Informationsausgabeeinheit bei einem Unterschreiten einer bestimmten Restkapazität einer Akkueinheit einen Bediener mittels einer akustischen, insbesondere einer sprachlichen, und/oder haptischen Ausgabe die Restkapazität und/oder Restbetriebsdauer ausgibt. Ferner ist denkbar, dass bei einem Ladevorgang einem Bediener mittels der zumindest einen Informationsausgabeeinheit in zeitlich definierten Abständen und/oder bei erreichen definierter Akkukapazitäten die aktuelle Akkukapazität ausgegeben wird. Ebenso ist denkbar, dass in einem Kabelbetrieb die verbrauchte Energiemenge ermittelt und einem Bediener akustisch und/oder haptisch ausgegeben wird.

Ferner wird vorgeschlagen, dass das Antriebsbasismodul zumindest eine Empfangs- und/oder Kommunikationseinheit umfasst, die zu einem Empfang eines Radiosignals und/oder zu einer Kommunikation mit einer externen Einheit vorgesehen ist, wobei die Informationsausgabeeinheit dazu vorgesehen ist, akustische und/oder haptische Informationen zumindest in Abhängigkeit von dem empfangenen Radiosignal und/oder von empfangenen elektronischen Daten auszugeben. Unter einer "Empfangs- und/oder Kommunikationseinheit" soll insbesondere eine Einheit verstanden werden, die zumindest dazu vorgesehen ist elektromagnetische Signale, insbesondere Radiosignale, von externen Vorrichtungen zu empfangen und/oder mit externen Vorrichtungen zu kommunizieren. Vorzugsweise ist die zumindest eine Empfangs- und/oder Kommunikationseinheit zumindest dazu vorgesehen, eine Kommunikationsverbindung mit tragbaren Elektrogeräten, insbesondere mit Mobiltelefonen, Tablets, Notebooks, Computergeräten, miniaturisierten Computergeräten und/oder einem Netzwerk aus tragbaren Elektrogeräten, insbesondere dem Internet und/oder Internet-of-Things herzustellen. Die Kommunikationsverbindung kann in einem Funkstandard, beispielsweise in einem WLAN Standard, Bluetooth, ZigBee, NFC, Z-Wave, EnOcean o. dgl. erfolgen. Ebenso sind Funkverbindungen denkbar, die andere Funkstandards verwenden. Es ist denkbar, dass die Informationsausgabeeinheit dem Bediener empfangene elektromagnetische Signale, insbesondere Radiosignale, ausgibt. Ebenfalls ist es denkbar, dass die Informationsausgabeeinheit mit der Empfangs- und/oder Kommunikationseinheit empfangene Audiosignale, insbesondere Arbeitsanleitungen und/oder Musik, ausgibt.

Darüber hinaus wird vorgeschlagen, dass das Antriebsbasismodul zumindest eine Elektronikeinheit umfasst, die zumindest ein Sensorelement zu einer Erfassung einer Bearbeitungskenngröße aufweist, wobei die Informationsausgabeeinheit dazu vorgesehen ist, akustisch und/oder haptisch Informationen zumindest in Abhängigkeit von der erfassten Bearbeitungskenngröße auszugeben. Hierdurch kann vorteilhaft eine Bearbeitungskenngröße ermittelt und bspw. zur Fortschrittskontrolle an den Bediener ausgegeben werden. Es kann vorteilhaft eine präzise Arbeitskontrolle erfolgen. Vorzugsweise quantifiziert die Bearbeitungskenngröße zumindest eine Bohrtiefe, eine Stärke einer abgetragenen, aufgetragenen und/oder bearbeiteten Schicht eines Werkstücks, eine Größe einer Fläche einer abgetragenen, aufgetragenen und/oder bearbeiteten Schicht eines Werkstücks, eine Ausrichtung einer Abtriebsachse der Antriebseinheit zu einer Normalen einer zu bearbeiteten Oberfläche eines Werkstücks, eine bei der Bearbeitung wirkende Kraft, ein bei der Bearbeitung wirkendes Drehmoment und/oder eine Viskosität eines bearbeiteten Fluids. Es ist vorstellbar, dass das zumindest eine Sensorelement als ein Inertialsensor, als ein Abstandssensor, insbesondere ein Laserabstandssensor und/oder ein Radio- und/oder Ultraschallabstandssensor, ein Kraftsensor und/oder ein Drehmomentsensor ausgebildet ist. Es sind auch andere, einem Fachmann als sinnvoll erscheinende Ausgestaltungen des Sensorelements möglich. Unter einer Informationsausgabe "in Abhängigkeit von der erfassten Bearbeitungskenngröße" soll insbesondere verstanden werden, dass eine Informationsausgabe in Abhängigkeit von zumindest einem bestimmten Wert der Bearbeitungskenngröße erfolgt. Vorzugsweise kann ein aktueller Wert einer Bearbeitungskenngröße ausgegeben werden. Ferner ist denkbar, dass die Informationsausgabeeinheit ein Erreichen eines eingestellten Wertes der Bearbeitungskenngröße ausgibt. Ferner ist denkbar, dass die zumindest eine Elektronikeinheit nach einem Erreichen eines bestimmten Wertes einer Bearbeitungskenngröße zumindest eine Energieversorgung der Antriebseinheit unterbricht.

Ferner wird vorgeschlagen, dass das Antriebsbasismodul zumindest eine Elektronikeinheit umfasst, die zumindest einen Speicher, insbesondere einen wiederbeschreibbaren Speicher, zu einer Hinterlegung von Bedienerdaten aufweist, wobei die Informationsausgabeeinheit dazu vorgesehen ist, akustisch und/oder haptisch Informationen zumindest in Abhängigkeit von den hinterlegten Bedienerdaten auszugeben. Hierdurch kann vorteilhaft eine Personalisierung des Antriebsbasismoduls und ein hoher Joy-of-use ermöglicht werden. Unter einem "wiederbeschreibbaren Speicher" soll insbesondere ein wiederholt beschreibbarer, elektronischer Datenspeicher verstanden werden. Vorzugsweise ist der wiederbeschreibbare Speicher als Halbleiterspeicher ausgebildet. Unter einem "Halbleiterspeicher" soll insbesondere ein Speicher verstanden werden, der Daten zumindest auf Basis von elektronischen Halbleiterbauelementen permanent und/oder flüchtig speichern kann. Vorzugsweise ist der wiederbeschreibbare Speicher als DRAM, SRAM, EEPROM und/oder Flash-EEPROM ausgebildet. Unter "Bedienerdaten" sollen Daten verstanden werden, die persönliche Informationen zumindest eines Bedieners enthalten. Vorzugsweise umfassen die Bedienerdaten zumindest den Namen, den Vornamen, Geburtsdaten und/oder eine Identifikationsinformation, insbesondere eine Personalnummer.

Des Weiteren wird vorgeschlagen, dass die Informationsausgabeeinheit zumindest dazu vorgesehen ist, akustisch und/oder haptisch zumindest drei, insbesondere zumindest vier und vorteilhaft zumindest fünf, voneinander verschiedene Informationen, vorzugsweise akustische Informationen, auszugeben. Dadurch kann vorteilhaft ein hoher Nutzerkomfort, besonders vorteilhaft eine detaillierte und/oder differenzierte Rückmeldung an einen Bediener, ermöglicht werden. Insbesondere können die voneinander verschiedenen Informationen zumindest eine Einschaltinformation, zumindest eine Ausschaltinformation, zumindest eine Montageinformation, zumindest eine Demontageinformation, zumindest eine Moduswechselinformation, zumindest eine Ladekabelverbindungsinformation, zumindest eine Fehlerinformation und/oder zumindest eine Ladeinformation der Energieversorgungseinheit umfassen. Vorteilhaft informiert die Einschaltinformation einen Bediener über ein Einschalten des Antriebsbasismoduls und/oder der Antriebseinheit. Ferner informiert vorteilhaft die Ausschaltinformation einen Bediener über ein Ausschalten des Antriebsbasismoduls und/oder der Antriebseinheit. Des Weiteren informiert vorteilhaft die Montageinformation einen Bediener über eine Kopplung des Antriebsbasismoduls und der Aufsatzvorrichtung. Zudem informiert vorteilhaft die Demontageinformation einen Bediener über eine Entkopplung des Antriebsbasismoduls und der Aufsatzvorrichtung. Darüber hinaus informiert vorteilhaft die Moduswechselinformation einen Bediener über einen, vorteilhaft durch den Bediener mittels eines Betätigungselements, besonders vorteilhaft eines zweiten Betätigungselements, hervorgerufenen Wechsel eines Betriebsmodus der Antriebseinheit. Ferner informiert vorteilhaft die Ladekabelverbindungsinformation einen Bediener über eine Kopplung und/oder eine Entkopplung eines Ladekabels und des Antriebsbasismoduls. Des Weiteren informiert die Fehlerinformation einen Bediener über einen Bedien- und/oder Betriebsfehler, beispielsweise über ein Drücken eines Betätigungselements in einem ungekoppelten Zustand des Antriebsbasismoduls und/oder über eine zu geringe Restkapazität der Energieversorgungseinheit. Zudem informiert eine Ladeinformation der Energieversorgungseinheit einen Bediener über einen Ladestand, beispielsweise über einen abgeschlossenen Ladevorgang, der Energieversorgungseinheit.

Alternativ oder zusätzlich wird vorgeschlagen, dass das Antriebsbasismodul ein, insbesondere pistolenförmiges, Gehäuse aufweist, welches zumindest zwei gewinkelt zueinander angeordnete Gehäuseabschnitte, insbesondere einen Antriebsgehäuseabschnitt und/oder einen Griffgehäuseabschnitt, aufweist. Dadurch kann vorteilhaft ein hoher Bedienkomfort erreicht werden. Besonders vorteilhaft kann eine hohe Greifflexibilität realisiert werden. Vorzugsweise kann eine Mehrzahl an Greifpositionen ermöglicht werden. Insbesondere weist der Antriebsgehäuseabschnitt zumindest im Wesentlichen eine Form eines Hohlzylinders auf. Vorteilhaft weist der Antriebsgehäuseabschnitt einen Querschnitt auf, welcher zumindest im Wesentlichen eine Form eines Kreisrings aufweist. Ferner ist vorteilhaft eine Längserstreckungsachse des Antriebsgehäuseabschnitts zumindest im Wesentlichen parallel zu einer Rotationsachse der Antriebseinheit und/oder der Getriebeeinheit angeordnet. Insbesondere ist die Antriebseinheit zumindest zu einem Teil, vorteilhaft zumindest zur Hälfte, innerhalb des Antriebsgehäuseabschnitts angeordnet. Vorteilhaft ist die Getriebeeinheit zumindest zu einem Teil, besonders vorteilhaft zumindest zu einem Großteil und ganz besonders vorteilhaft vollständig, innerhalb des Antriebsgehäuseabschnitts angeordnet. Insbesondere weist der Griffgehäuseabschnitt des Gehäuses zumindest eine Grifffläche auf, welche vorteilhaft in zumindest einem Betriebszustand zu einem Kontakt mit zumindest einer Handfläche, vorzugsweise Handinnenfläche, eines Benutzers vorgesehen ist. Bevorzugt ist die Energieversorgungseinheit zumindest teilweise, besonders bevorzugt zumindest zu einem Großteil, innerhalb des Griffgehäuseabschnitts angeordnet. Insbesondere schließen eine Längserstreckungsachse des Antriebsgehäuseabschnitts und eine Längserstreckungsachse des Griffgehäuseabschnitts einen Winkel von zumindest 80°, besonders vorteilhaft von zumindest 90° und besonders bevorzugt von zumindest 100°, und/oder von höchstens 170°, besonders vorteilhaft von höchstens 140° und besonders bevorzugt von höchstens 120°, ein. Vorteilhaft sind zumindest ein Teil des Antriebsgehäuseabschnitts und zumindest ein Teil des Griffgehäuseabschnitts einstückig, vorteilhaft einteilig, ausgebildet. Insbesondere ist das Gehäuse mehrteilig ausgebildet. Vorteilhaft weist das Gehäuse zumindest ein Basis- und/oder Trägergehäuse und zumindest einen Gehäuseaufsatz auf. Besonders vorteilhaft ist das Basis- und/oder Trägergehäuse mehrteilig ausgebildet und vorzugsweise umfasst das Basis- und/oder Trägergehäuse zumindest zwei Halbschalen. Bevorzugt weist das Basis- und/oder Trägergehäuse zumindest eine Sichtfläche und zumindest einen Trägerbereich auf. Vorzugsweise ist der Gehäuseaufsatz als ein Sichtbauteil ausgebildet.

Darunter, dass ein, vorteilhaft dreidimensionales, Objekt "zumindest im Wesentlichen eine Form" eines Referenzobjekts aufweist, soll insbesondere verstanden werden, dass das Objekt mit einem Volumenanteil von höchstens 15 %, insbesondere von höchstens 10 % und vorteilhaft von höchstens 5 %, von dem Referenzobjekt abweicht. Darunter, dass ein, vorteilhaft zweidimensionales, Objekt "zumindest im Wesentlichen eine Form" eines Referenzobjekts aufweist, soll insbesondere verstanden werden, dass das Objekt mit einem Flächenanteil von höchstens 15 %, insbesondere von höchstens 10 % und vorteilhaft von höchstens 5 %, von dem Referenzobjekt abweicht. Unter "zumindest im Wesentlichen parallel" soll insbesondere eine Ausrichtung einer Ebene oder einer Achse relativ zu einer Bezugsebene oder einer Bezugsachse verstanden werden, wobei insbesondere die Ebene und die Bezugsebene, insbesondere in einer Schnittachse der Ebene und der Bezugsebene betrachtet, die Achse und die Bezugsachse, insbesondere in einer Betrachtungsachse senkrecht zu der Achse und senkrecht zu der Bezugsachse betrachtet, oder die Ebene und die Bezugsachse bzw. die Achse und die Bezugsebene, insbesondere in einer in der Ebene bzw. Bezugsebene liegenden und senkrecht zu der Achse bzw. Bezugsachse angeordneten Betrachtungsachse betrachtet, einen Winkel von insbesondere kleiner als 8°, vorteilhaft kleiner als 5° und besonders vorteilhaft kleiner als 2° einschließen und wobei vorteilhaft die Ebene oder die Achse parallel zu der Bezugsebene oder der Bezugsachse angeordnet ist. Unter "zumindest im Wesentlichen senkrecht" soll insbesondere eine Ausrichtung einer Ebene oder einer Achse relativ zu einer Bezugsebene oder einer Bezugsachse verstanden werden, wobei insbesondere die Ebene und die Bezugsebene, insbesondere in einer Schnittachse der Ebene und der Bezugsebene betrachtet, die Achse und die Bezugsachse, insbesondere in einer Betrachtungsachse senkrecht zu der Achse und senkrecht zu der Bezugsachse betrachtet, oder die Ebene und die Bezugsachse bzw. die Achse und die Bezugsebene, insbesondere in einer in der Ebene bzw. Bezugsebene liegenden und senkrecht zu der Achse bzw. Bezugsachse angeordneten Betrachtungsachse betrachtet, einen Winkel einschließen, welcher von 90° um insbesondere weniger als 8°, vorteilhaft weniger als 5° und besonders vorteilhaft weniger als 2°, abweicht und welcher besonders bevorzugt 90° beträgt. Unter dem Ausdruck "zumindest zu einem Großteil" sollen insbesondere mehr als 50 %, vorteilhaft mehr als 65 %, besonders vorteilhaft mehr als 80 % und besonders bevorzugt mehr als 95 %, verstanden werden. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt.

Zudem wird vorgeschlagen, dass das Antriebsbasismodul eine, insbesondere als Akkueinheit ausgebildete, Energieversorgungseinheit, vorteilhaft die zuvor genannte Energieversorgungseinheit, aufweist, welche zumindest zwei Energiespeicherzellen aufweist, wobei eine Schwerpunktachse durch die Schwerpunkte, insbesondere Volumen- und/oder Massenschwerpunkte, zumindest zweier der Energiespeicherzellen und vorzugsweise sämtlicher der Energiespeicherzellen mit einer Haupterstreckungsebene des Antriebsbasismoduls einen Winkel von höchstens 60°, insbesondere von höchstens 45° und vorteilhaft von höchstens 30°, einschließt. Hierdurch kann insbesondere ein hoher Nutzerkomfort, vorteilhaft Greifkomfort, ermöglicht werden. Vorteilhaft kann eine geringe Griffbreite realisiert werden, so dass besonders vorteilhaft eine Greifhand nur geringfügig gespreizt werden muss. Ferner kann vorteilhaft eine hohe Sicherheit, besonders vorteilhaft Griffsicherheit, ermöglicht werden. Vorzugsweise kann eine hohe Effizienz, vorteilhaft Bauraumeffizienz und/oder Montageeffizienz, erreicht werden. Bevorzugt kann eine einfache und/oder schnelle Montage, besonders bevorzugt einer Hauptplatine und/oder von Energiespeicherzellen, erreicht werden. Besonders vorteilhaft ist die Schwerpunktachse zumindest im Wesentlichen parallel zu der Haupterstreckungsebene des Antriebsbasismoduls angeordnet. Insbesondere ist die Energieversorgungseinheit dazu vorgesehen, zumindest die Antriebseinheit mit Energie, vorteilhaft elektrischer Energie, zu versorgen. Besonders vorteilhaft umfasst die Energieversorgungseinheit zumindest zwei und bevorzugt genau zwei Energiespeicherzellen. Vorzugsweise sind die Energiespeicherzellen in Reihe geschaltet, bevorzugt um eine hohe Spannung eines Abgabestroms der Energieversorgungseinheit zu ermöglichen. Besonders bevorzugt weisen die Energiespeicherzellen im Wesentlichen eine Form eines Kreiszylinders auf. Die Energiespeicherzellen sind vorzugsweise als Batteriezellen und bevorzugt als Akkuzellen ausgebildet. Insbesondere können die Energiespeicherzellen beispielsweise als Alkali-Mangan-, Zinkchlorid-, Zink-Kohle-, Nickel-Cadmium-, Nickel-Eisen-, Nickel-Metallhydrid-, Nickel-Zink-, RAM- und/oder besonders vorteilhaft Lithium-Ionen-Zellen, ausgebildet sein. Unter einer "Haupterstreckungsebene" eines Objekts oder eines Bereichs soll insbesondere eine Ebene verstanden werden, welche parallel zu einer größten Seitenfläche eines kleinsten gedachten Quaders ist, welcher das Objekt oder den Bereich gerade noch vollständig umschließt, und insbesondere durch den Mittelpunkt des Quaders verläuft.

Darüber hinaus wird vorgeschlagen, dass das Antriebsbasismodul eine Betätigungseinheit, insbesondere eine zweite Betätigungseinheit, mit zumindest einem, insbesondere als Druckknopf ausgebildeten, Betätigungselement, insbesondere einem zweiten Betätigungselement, aufweist, welches zu einer manuellen Auswahl von Betriebsmodi der Antriebseinheit vorgesehen ist. Dadurch kann vorteilhaft ein hoher Nutzerkomfort und/oder eine hohe Flexibilität, insbesondere eine flexible Anpassung einer Antriebseinheit an verschiedene Aufsatzmodule und/oder Anwendungsbereiche, ermöglicht werden. Insbesondere ist das Betätigungselement in einem gekrümmten Übergangsbereich, vorteilhaft in einem Au-ßenbereich eines gekrümmten Übergangsbereichs, zwischen dem Griffgehäuseabschnitt und dem Antriebsgehäuseabschnitt angeordnet. Vorteilhaft ist das Betätigungselement in zumindest einer Greifposition in Daumenreichweite angeordnet. Vorteilhaft weist die Betätigungseinheit ein, insbesondere als Druckknopf ausgebildetes, weiteres Betätigungselement, insbesondere zusätzliches zweites Betätigungselement, auf. Besonders vorteilhaft sind das Betätigungselement und das weitere Betätigungselement einteilig ausgebildet. Unter einem "Außenbereich" soll insbesondere ein nach außen gewölbter und/oder kuppenförmiger Teilbereich eines gekrümmten und vorteilhaft schlauchförmigen Objekts verstanden werden. Vorzugsweise ist der Außenbereich komplementär zu einem Innenbereich des gekrümmten Objekts ausgebildet.

Ferner wird vorgeschlagen, dass das Antriebsbasismodul eine weitere Betätigungseinheit, insbesondere eine erste Betätigungseinheit, mit zumindest zwei funktionsredundanten Betätigungsflächen für grundsätzlich differierende Handhabungen aufweist. Dadurch kann insbesondere ein hoher Nutzerkomfort realisiert werden, vorteilhaft durch eine Mehrzahl an Greifpositionen. Besonders vorteilhaft kann eine Antriebseinheit mittels einer selben Betätigungseinheit in verschiedenen Greifpositionen bedient werden. Bevorzugt kann ein hohes Einsatzspektrum einer Antriebseinheit ermöglicht werden. Ferner kann vorzugsweise eine hohe Flexibilität, vorteilhaft Greif- und/oder Bedienflexibilität, erreicht werden. Insbesondere ist die weitere Betätigungseinheit zumindest teilweise in dem gekrümmten Übergangsbereich, vorteilhaft in einem Innenbereich des gekrümmten Übergangsbereichs, angeordnet. Vorteilhaft ist die Betätigungseinheit zu einer manuellen Einstellung zumindest eines Antriebsparameters, vorteilhaft einer Drehzahl, eines Drehmoments und/oder einer Antriebsleistung, der Antriebseinheit vorgesehen. Vorteilhaft weist die weitere Betätigungseinheit zumindest ein zusätzliches Betätigungselement, vorzugsweise ein erstes Betätigungselement, und vorteilhaft zumindest ein weiteres zusätzliches Betätigungselement, vorzugsweise ein weiteres erstes Betätigungselement, auf. Unter einer "Betätigungsfläche" soll insbesondere eine Teilfläche eines Betätigungselements verstanden werden, welche in zumindest einer Greifposition zu einer Betätigung des Betätigungselements zu einem Fingerkontakt vorgesehen ist. Unter "grundsätzlich differierenden Handhabungen" sollen insbesondere zumindest zwei Greifpositionen des Antriebsbasismoduls verstanden werden, wobei Kontaktflächen einer Handinnenfläche mit dem Antriebsbasismodul in den Greifpositionen zumindest teilweise, vorteilhaft zumindest zu einem Großteil und besonders vorteilhaft vollständig überschneidungsfrei ausgebildet sind. Vorteilhaft ist zumindest eine erste der Greifpositionen als ein Pistolengriff und/oder als einen umgekehrten Pistolengriff ausgebildet. Besonders vorteilhaft ist in der ersten Greifposition eine Kontaktfläche einer Handinnenfläche mit dem Antriebsbasismodul zumindest teilweise, vorzugsweise zumindest zu einem Großteil, an dem Griffgehäuseabschnitt angeordnet. Ferner ist vorteilhaft zumindest eine zweite der Greifpositionen als ein Stabgriff und/oder als ein umgekehrter Stabgriff ausgebildet. Besonders vorteilhaft ist in der zweiten Greifposition eine Kontaktfläche einer Handinnenfläche mit dem Antriebsbasismodul zumindest teilweise, vorzugsweise zumindest zu einem Großteil, an dem Antriebsgehäuseabschnitt angeordnet. Unter dem Ausdruck "zumindest zu einem Großteil" sollen insbesondere mehr als 50 %, vorteilhaft mehr als 65 %, besonders vorteilhaft mehr als 80 % und besonders bevorzugt mehr als 95 %, verstanden werden. Unter einem "Innenbereich" soll insbesondere ein nach innen gewölbter und/oder sattelförmiger Teilbereich eines gekrümmten und vorteilhaft schlauchförmigen Objekts verstanden werden. Vorzugsweise ist der Innenbereich komplementär zu einem Außenbereich des gekrümmten Objekts ausgebildet.

Des Weiteren wird vorgeschlagen, dass das Antriebsbasismodul eine maximale Erstreckung von höchstens 25 cm, insbesondere von höchstens 22 cm, vorteilhaft von höchstens 20 cm und besonders vorteilhaft von höchstens 19 cm, aufweist. Hierdurch kann vorteilhaft ein hoher Nutzerkomfort, insbesondere eine einfache Handhabung, erreicht werden. Ferner kann vorteilhaft eine kompakte Bauweise ermöglicht werden. Besonders vorteilhaft kann eine hohe Effizienz, insbesondere Transport- und/oder Lagereffizienz, ermöglicht werden. Insbesondere ist die maximale Erstreckung des Antriebsbasismoduls zumindest im Wesentlichen als ein Abstand eines freien Endes des Antriebsgehäuseabschnitts und eines freien Endes des Griffgehäuseabschnitts ausgebildet. Insbesondere weist das Antriebsbasismodul senkrecht zu der Haupterstreckungsebene des Antriebsbasismoduls eine maximale Erstreckung von höchstens 60 mm, vorteilhaft von höchstens 55 mm, besonders vorteilhaft von höchstens 51 mm und besonders bevorzugt von höchstens 48 mm, auf. Vorzugsweise ist die maximale Erstreckung des Antriebsbasismoduls senkrecht zu der Haupterstreckungsebene des Antriebsbasismoduls als eine maximale Erstreckung des Antriebsgehäuseabschnitts senkrecht zu der Haupterstreckungsebene des Antriebsbasismoduls ausgebildet.

Zudem wird vorgeschlagen, dass das Antriebsbasismodul eine Masse von höchstens 1000 g, insbesondere von höchstens 700 g, vorteilhaft von höchstens 500 g und besonders vorteilhaft von höchstens 350 g, aufweist. Dadurch kann vorteilhaft ein hoher Nutzerkomfort und besonders vorteilhaft eine einfache Handhabung erreicht werden. Vorzugsweise kann ein Ermüden einer Greifhand verhindert werden.

Darüber hinaus wird vorgeschlagen, dass die Informationsausgabeeinheit in einem Handgriffbereich, insbesondere in dem zuvor genannten Handgriffbereich, angeordnet ist. Hierdurch kann ein vorteilhaftes Sicht- und/oder Schallfeld einer Informationsausgabeeinheit und/oder eine vorteilhafte haptische Kopplung mit einer Greifhand eines Bedieners erreicht werden. Vorteilhaft ist die Informationsausgabeeinheit in einem Handgriffendbereich, besonders vorteilhaft an einem freien Ende des Handgriffbereichs, angeordnet. Bevorzugt ist die Informationsausgabeeinheit in dem Griffgehäuseabschnitt, besonders bevorzugt an einem freien Ende des Griffgehäuseabschnitts, angeordnet.

Ferner geht die Erfindung aus von einer multifunktionalen Maschine, insbesondere tragbaren multifunktionalen Maschine und vorteilhaft einer handgehaltenen multifunktionalen Maschine, mit zumindest einem Antriebsbasismodul, insbesondere dem zuvor genannten Antriebsbasismodul, und mit zumindest einer Aufsatzvorrichtung, insbesondere der zuvor genannten Aufsatzvorrichtung, wobei die Informationsausgabeeinheit zumindest dazu vorgesehen ist, einem Bediener akustisch und/oder haptisch Informationen zumindest in Abhängigkeit einer Montage und/oder Demontage des Antriebsbasismoduls und der Aufsatzvorrichtung und insbesondere in Abhängigkeit einer Art der Aufsatzvorrichtung auszugeben. Dadurch kann vorteilhaft eine hohe Arbeitssicherheit sichergestellt werden. Besonders vorteilhaft kann ein Bediener über eine sachgemäße Verbindung eines Antriebsbasismoduls und einer Aufsatzvorrichtung informiert werden.

Ferner wird ein Verfahren zu einer akustischen und/oder haptischen Ausgabe von Informationen mittels der Informationsausgabeeinheit des Antriebsbasismoduls, insbesondere des erfindungsgemäßen Antriebsbasismoduls, mit zumindest einer Verbindungsvorrichtung, mit zumindest einer Aufsatzvorrichtung und mit zumindest einer Antriebseinheit, vorgeschlagen. Dadurch kann ein Bediener besonders komfortabel mit Informationen versorgt werden.

Zudem wird vorgeschlagen, dass in zumindest einem Verfahrensschritt haptisch und/oder akustisch Informationen mittels einer durch die Informationsausgabeeinheit hervorgerufene Anregung der Antriebseinheit ausgegeben werden. Dadurch kann vorteilhaft eine Informationsausgabeeinheit mit der Antriebseinheit kombiniert und insbesondere Gewicht eingespart sowie die Anzahl von Bauteilen verringert werden.

Ferner wird vorgeschlagen, dass in zumindest einem Verfahrensschritt mittels der Informationsausgabeeinheit akustisch und/oder haptisch Informationen zumindest in Abhängigkeit von einem aufgetretenen Gerätefehler und/oder Bedienfehler ausgegeben werden. Dadurch kann vorteilhaft eine hohe Arbeitssicherheit sichergestellt werden.

Des Weiteren wird vorgeschlagen, dass in zumindest einem Verfahrensschritt mittels der Informationsausgabeeinheit akustisch und/oder haptisch Informationen zumindest in Abhängigkeit eines Betriebsmoduswechsels, insbesondere der Antriebseinheit, ausgegeben werden. Insbesondere wird der Betriebsmoduswechsel durch einen Bediener mittels eines Betätigungselements ausgelöst. Dadurch kann ein Bediener vorteilhaft mit Informationen über eine Funktion einer Antriebseinheit versorgt werden, besonders vorteilhaft in einem ruhenden, vorzugsweise drehzahllosen, Zustand der Antriebseinheit.

Darüber hinaus wird vorgeschlagen, dass in zumindest einem Verfahrensschritt mittels der Informationsausgabeeinheit akustisch und/oder haptisch Informationen zumindest in Abhängigkeit einer Montage und/oder Demontage der Schnittstelle und der Aufsatzvorrichtung und insbesondere in Abhängigkeit einer Art der Aufsatzvorrichtung ausgegeben werden. Dadurch kann vorteilhaft eine hohe Arbeitssicherheit sichergestellt werden. Besonders vorteilhaft kann ein Bediener über eine sachgemäße Verbindung einer Schnittstelle und einer Aufsatzvorrichtung informiert werden.

Das erfindungsgemäße Antriebsbasismodul, die erfindungsgemäße multifunktionale Maschine und/oder das erfindungsgemäße Verfahren sollen/soll hierbei nicht auf die oben beschriebene Anwendung und Ausführungsform beschränkt sein. Insbesondere können/kann das erfindungsgemäße Antriebsbasismodul, die erfindungsgemäße multifunktionale Maschine und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In den Zeichnungen sind zehn Ausführungsbeispiele dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Antriebsbasismodul mit einer daran angeordneten Aufsatzvorrichtung in einer schematischen Darstellung,
- Fig. 2: eine Detailansicht einer Verbindungsvorrichtung des Antriebsbasismoduls in einer schematischen Darstellung,
- Fig. 3: eine Detailansicht einer Verbindungsvorrichtung eines alternativen Antriebsbasismoduls in einer schematischen Darstellung,
- Fig. 4: das Antriebsmodul in einem geöffneten Zustand mit einer Antriebseinheit, mit einer Getriebeeinheit, mit einem Teil einer Gehäuseeinheit, mit einer Energiespeichereinheit, mit einer Hauptplatine, mit einer Informationsausgabeeinheit, mit einer ersten Betätigungseinheit und mit einer zweiten Betätigungseinheit senkrecht zu einer Haupterstreckungsebene des Antriebsmoduls betrachtet in einer schematischen Darstellung,
- Fig. 5: das Antriebsmodul in dem geöffneten Zustand senkrecht zu der Haupterstreckungsebene des Antriebsmoduls betrachtet in einer schematischen Darstellung,
- Fig. 6: das Antriebsmodul in dem geöffneten Zustand in Richtung einer Rotationsachse der Antriebseinheit betrachtet in einer schematischen Darstellung,
- Fig. 7: das Antriebsmodul ohne die Gehäuseeinheit in Richtung der Rotationsachse der Antriebseinheit betrachtet in einer schematischen Darstellung,
- Fig. 8: eine perspektivische Ansicht der Energiespeichereinheit und der Hauptplatine in einem zusammengesteckten Zustand in einer schematischen Darstellung,
- Fig. 9: eine perspektivische Ansicht der Energiespeichereinheit und der Hauptplatine in dem zusammengesteckten Zustand in einer schematischen Darstellung,
- Fig. 10: eine perspektivische Ansicht der Energiespeichereinheit und der Hauptplatine in einem getrennten Zustand in einer schematischen Darstellung,
- Fig. 11: eine perspektivische Ansicht des Antriebsmoduls in einer schematischen Darstellung,
- Fig. 12: das Antriebsmodul in Richtung der Rotationsachse der Antriebseinheit betrachtet in einer schematischen Darstellung,
- Fig. 13: das Antriebsmodul senkrecht zu der Rotationsachse der Antriebseinheit und in der Haupterstreckungsebene des Antriebsmoduls betrachtet in einer schematischen Darstellung,
- Fig. 14: das Antriebsmodul senkrecht zu der Haupterstreckungsebene des Antriebsmoduls betrachtet in einer schematischen Darstellung,
- Fig. 15: die Gehäuseeinheit in einem geöffneten Zustand senkrecht zu der Haupterstreckungsebene des Antriebsmoduls betrachtet in einer schematischen Darstellung,
- Fig. 16: ein Basisgehäuse der Gehäuseeinheit senkrecht zu der Haupterstreckungsebene des Antriebsmoduls betrachtet in einer schematischen Darstellung,
- Fig. 17: eine perspektivische Ansicht des Basisgehäuses in einer schematischen Darstellung,
- Fig. 18: eine perspektivische Ansicht eines Sichtbauteils der Gehäuseeinheit in einer schematischen Darstellung,
- Fig. 19: eine perspektivische Ansicht einer Verkleidungseinheit des Basisgehäuses einer schematischen Darstellung,
- Fig. 20: eine perspektivische Ansicht des Antriebsmoduls und eines mit dem Antriebsmodul gekoppelten weiteren Aufsatzmoduls und eine erste Greifposition des Antriebsmoduls in einer schematischen Darstellung,
- Fig. 21: eine perspektivische Ansicht des Antriebsmoduls und eines mit dem Antriebsmodul gekoppelten weiteren Aufsatzmoduls und eine weitere erste Greifposition des Antriebsmoduls in einer schematischen Darstellung,
- Fig. 22: das Antriebsmodul in einem geöffneten Zustand mit einem ersten Betätigungselement der ersten Betätigungseinheit in einem betätigten Zustand senkrecht zu der Haupterstreckungsebene des Antriebsmoduls betrachtet in einer schematischen Darstellung,
- Fig. 23: eine perspektivische Ansicht des Antriebsmoduls und eines mit dem Antriebsmodul gekoppelten weiteren Aufsatzmoduls und eine zweite Greifposition des Antriebsmoduls in einer schematischen Darstellung,
- Fig. 24: eine perspektivische Ansicht des Antriebsmoduls und eines mit dem Antriebsmodul gekoppelten weiteren Aufsatzmoduls und eine weitere zweite Greifposition des Antriebsmoduls in einer schematischen Darstellung,
- Fig. 25: das Antriebsmodul in einem geöffneten Zustand mit einem weiteren ersten Betätigungselement der ersten Betätigungseinheit in einem betätigten Zustand senkrecht zu der Haupterstreckungsebene des Antriebsmoduls betrachtet in einer schematischen Darstellung,
- Fig. 26: das Antriebsmodul in einem geöffneten Zustand mit dem ersten Betätigungselement und dem zweiten Betätigungselement in dem betätigten Zustand senkrecht zu der Haupterstreckungsebene des Antriebsmoduls betrachtet in einer schematischen Darstellung,
- Fig. 27: eine Detailansicht der zweiten Betätigungseinheit in einem montierten Zustand in einer schematischen Darstellung,
- Fig. 28: eine perspektivische Ansicht der zweiten Betätigungseinheit in einem unmontierten Zustand in einer schematischen Darstellung,
- Fig. 29: eine Detailansicht der Informationsausgabeeinheit in einem montierten Zustand in einer schematischen Darstellung,
- Fig. 30: eine Detailansicht der Informationsausgabeeinheit in einem montierten Zustand in einer schematischen Darstellung,
- Fig. 31: eine perspektivische Ansicht eines Endes eines Griffgehäuseabschnitts der Gehäuseeinheit in einer schematischen Darstellung,
- Fig. 32: eine perspektivische Ansicht des Werkzeugbasismoduls ohne Aufsatzvorrichtung in einer schematischen Darstellung,
- Fig. 33: eine perspektivische Ansicht der Aufsatzvorrichtung in einer schematischen Darstellung,
- Fig. 34: einen Teil eines weiteren Ausführungsbeispiels eines Antriebsmoduls in einem geöffneten Zustand senkrecht zu einer Haupterstreckungsebene des Antriebsmoduls betrachtet in einer schematischen Darstellung,
- Fig. 35: eine perspektivische Ansicht des Teils des Antriebsmoduls der Figur 34 in einer schematischen Darstellung,
- Fig. 36: den Teil des Antriebsmoduls der Figur 34 in Richtung einer Längserstreckungsachse einer Energiespeicherzelle einer Energiespeichereinheit des Antriebsmoduls betrachtet in einer schematischen Darstellung,
- Fig. 37: den Teil des Antriebsmoduls der Figur 34 ohne Gehäuseeinheit in Richtung der Längserstreckungsachse der Energiespeicherzelle betrachtet in einer schematischen Darstellung,
- Fig. 38: einen Teil eines weiteren Ausführungsbeispiels eines Antriebsmoduls in einem geöffneten Zustand senkrecht zu einer Haupterstreckungsebene des Antriebsmoduls betrachtet in einer schematischen Darstellung,
- Fig. 39: einen Teil eines weiteren Ausführungsbeispiels eines Antriebsmoduls mit einer Gehäuseeinheit und einer ersten Betätigungseinheit senkrecht zu einer Haupterstreckungsebene des Antriebsmoduls betrachtet in einer schematischen Darstellung,
- Fig. 40: einen Teil des Antriebsmoduls der Figur 39 senkrecht zu der Haupterstreckungsebene des Antriebsmoduls betrachtet in einer schematischen Darstellung,
- Fig. 41: einen Teil eines weiteren Ausführungsbeispiels eines Antriebsmoduls mit einer Gehäuseeinheit und einer ersten Betätigungseinheit senkrecht zu einer Haupterstreckungsebene des Antriebsmoduls betrachtet in einer schematischen Darstellung,
- Fig. 42: einen Teil des Antriebsmoduls der Figur 41 senkrecht zu der Haupterstreckungsebene des Antriebsmoduls betrachtet in einer schematischen Darstellung,
- Fig. 43: einen Teil eines weiteren Ausführungsbeispiels eines Antriebsmoduls mit einer Gehäuseeinheit und einer ersten Betätigungseinheit senkrecht zu einer Haupterstreckungsebene des Antriebsmoduls betrachtet in einer schematischen Darstellung,
- Fig. 44: einen Teil eines weiteren Ausführungsbeispiels eines Antriebsmoduls mit einer Gehäuseeinheit und einer ersten Betätigungseinheit senkrecht zu einer Haupterstreckungsebene des Antriebsmoduls betrachtet in einer schematischen Darstellung und
- Fig. 45: einen Teil des Antriebsmoduls der Figur 44 senkrecht zu der Haupterstreckungsebene des Antriebsmoduls betrachtet in einer schematischen Darstellung.

### Beschreibung der Ausführungsbeispiele

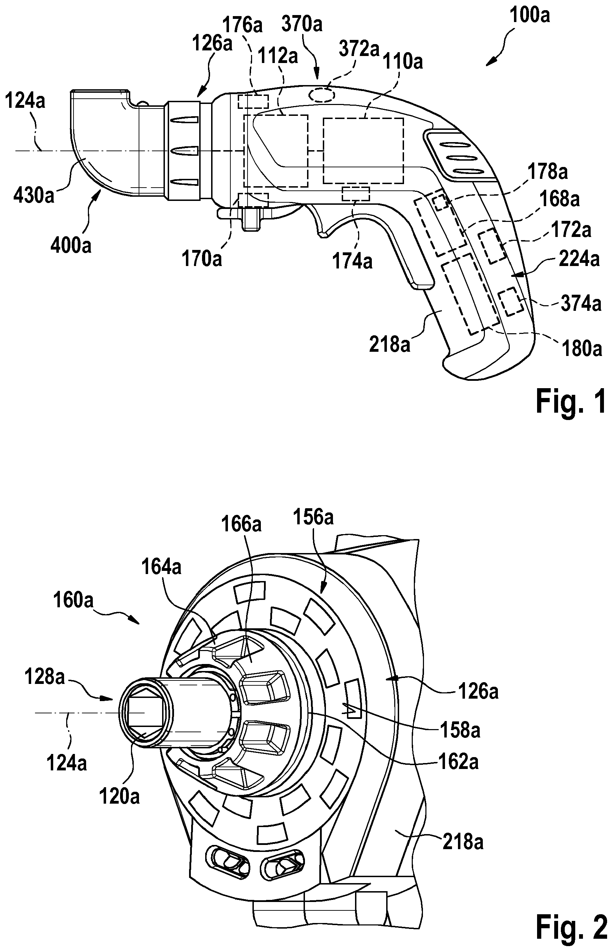

In Figur 1 ist ein Antriebsbasismodul 100a und eine Aufsatzvorrichtung 400a in einem verbundenen Zustand gezeigt. Das Antriebsbasismodul 100a weist zumindest ein Gehäuse 218a auf, das insbesondere pistolenförmig mit einem Handgriffbereich 224a ausgebildet ist. Es ist jedoch auch denkbar, dass das Antriebsbasismodul 100a stabförmig ausgebildet ist, oder eine von einer Pistolen- und/oder Stabform verschiedene Form mit einem Handgriffbereich 224a aufweist. Das Antriebsbasismodul 100a umfasst zumindest eine Verbindungsvorrichtung 126a mit zumindest einer antriebstechnischen Schnittstelle 128a und zumindest einer datentechnischen Schnittstelle 156a zu einer Verbindung mit der Aufsatzvorrichtung 400a. Es ist jedoch auch denkbar, dass die Verbindungsvorrichtung 126a alternativ lediglich die antriebstechnische Schnittstelle 128a oder lediglich die datentechnische Schnittstelle 156a aufweist, insbesondere in Abhängigkeit von einem Einsatzgebiet des Antriebsbasismoduls 100a.

Das Antriebsbasismodul 100a umfasst zumindest eine Antriebseinheit 110a zu einem Antrieb der Aufsatzvorrichtung 400a in einem mit der Verbindungsvorrichtung 126a verbundenen Zustand der Aufsatzvorrichtung 400a. Die Antriebseinheit 110a ist vorzugsweise als Elektromotor ausgebildet. Es ist jedoch auch denkbar, dass die Antriebseinheit 110a eine andere, einem Fachmann als sinnvoll erscheinende Ausgestaltung aufweist. Das Antriebsbasismodul 100a weist insbesondere eine Rotationsachse 124a auf, um die die antriebstechnische Schnittstelle 128a, insbesondere mittels der Antriebseinheit 110a, rotierend antreibbar ist. Über eine nicht näher beschriebene Getriebeeinheit 112a treibt die Antriebseinheit 110a die antriebstechnische Schnittstelle 128a der Verbindungsvorrichtung 126a an. Es ist jedoch auch denkbar, dass das Antriebsbasismodul 100a entkoppelt von der Getriebeeinheit 112a ausgebildet ist und die Antriebseinheit 110a dazu vorgesehen ist, die antriebstechnische Schnittstelle 128a direkt anzutreiben.

Das Antriebsbasismodul 100a umfasst vorzugsweise eine Energieversorgungseinheit 180a zumindest zu einer Energieversorgung der Antriebseinheit 110a. Die Energieversorgungseinheit 180a ist vorzugweise als Akkueinheit ausgebildet. Die Energieversorgungseinheit 180a ist im Handgriffbereich 224a des Antriebsbasismoduls 100a, insbesondere abnehmbar, angeordnet. Es ist jedoch auch denkbar, dass die Energieversorgungseinheit 180a eine andere, einem Fachmann als sinnvoll erscheinende Ausgestaltung aufweist, wie beispielsweise eine Ausgestaltung als Netzkabel, als Brennstoffzelle o. dgl., oder dass die Energieversorgungseinheit 180a in das Gehäuse 218a integriert ist o. dgl.

Ferner umfasst das Antriebsbasismodul 100a zumindest eine Informationsausgabeeinheit 370a, die zumindest dazu vorgesehen ist, einem Bediener akustisch und/oder haptisch Informationen auszugeben. Die Informationsausgabeeinheit 370a umfasst zumindest ein Soundmodul 372a, insbesondere einen Lautsprecher. Das Soundmodul 372a der Informationsausgabeeinheit 370a ist vorzugsweise zumindest teilweise an einer Außenseite des Gehäuses 218a angeordnet. Vorzugsweise ist das Soundmodul 372a an einer dem Handgriffbereich 224a abgewandten Außenseite des Gehäuses 218a angeordnet. Es ist jedoch auch denkbar, dass das Soundmodul 372a an einer anderen, einem Fachmann als sinnvoll erscheinende Position am Gehäuse 218a angeordnet ist. Es ist denkbar, dass die Informationsausgabeeinheit 370a zumindest ein Schutzelement (hier nicht näher dargestellt) aufweist, das dazu vorgesehen ist, das Soundmodul 372a vor einem Eindringen von Schmutz und/oder vor Beschädigungen zu schützen. Das Schutzelement kann beispielsweise als Schutzgitter, als Schutzfolie o. dgl. ausgebildet sein, dass am Soundmodul 372a, insbesondere am Lautsprecher, angeordnet ist. Es ist ebenfalls denkbar, dass die Informationsausgabeeinheit 370a dazu vorgesehen ist, akustisch und/oder haptisch Informationen mittels einer hervorgerufenen Anregung der Antriebseinheit 110a auszugeben.

Zusätzlich oder alternativ zum Soundmodul 372a kann die Informationsausgabeeinheit 370a ein weiteres Soundmodul und/oder eine Vibrationseinheit 374a, insbesondere einen Vibrationsmotor, aufweisen. Das weitere Soundmodul und/oder die Vibrationseinheit 374a können/kann beispielsweise in einem Handgriffbereich 224a angeordnet sein. Andere, einem Fachmann als sinnvoll erscheinende Positionen des weiteren Soundmoduls und/oder der Vibrationseinheit 374a sind ebenfalls denkbar.

Das Antriebsbasismodul 100a umfasst zumindest eine Elektronikeinheit 168a zumindest zu einer Steuerung und/oder Regelung der Antriebseinheit 110a. Die Informationsausgabeeinheit 370a ist zumindest dazu vorgesehen, akustisch und/oder haptisch Informationen zumindest in Abhängigkeit von mittels der Elektronikeinheit 168a einstellbaren Steuer- und/oder Regelkenngrößen der Antriebseinheit 110a auszugeben. Die Steuer- und/oder Regelkenngröße kann als ein Drehmoment und/oder eine Drehzahl der Antriebseinheit 110a definiert sein. Es sind auch andere, einem Fachmann als sinnvoll erscheinende Steuer- und/oder Regelkenngrößen denkbar.

Die Elektronikeinheit 168a umfasst zumindest eine Speichereinheit 178a, insbesondere eine wiederbeschreibbare Speichereinheit 178a, zu einer Hinterlegung von Bedienerdaten. Die Informationsausgabeeinheit 370a ist zumindest dazu vorgesehen, akustisch und/oder haptisch Informationen zumindest in Abhängigkeit von den hinterlegten Bedienerdaten auszugeben. Die Ausgabe erfolgt insbesondere als sprachliche Ausgabe. Vorzugsweise ist die Informationsausgabeeinheit 370a dazu vorgesehen, mittels des Soundmoduls 372a die Bedienerdaten und/oder eine persönliche Begrüßung sprachlich auszugeben. Die Speichereinheit 178a kann als Flash-EEPROM ausgebildet sein. Es ist jedoch auch denkbar, dass die Speichereinheit 178a eine andere, einem Fachmann als sinnvoll erscheinende Ausgestaltung aufweist, wie beispielsweise als RAM/SRAM, EEPROM o. dgl.

Die Elektronikeinheit 168a umfasst zumindest ein Sensorelement 170a zur Erfassung zumindest einer Verbindungskenngröße der antriebstechnischen Schnittstelle 128a und/oder datentechnischen Schnittstelle 156a. Die Informationsausgabeeinheit 370a ist zumindest dazu vorgesehen, akustisch und/oder haptisch Informationen zumindest in Abhängigkeit von der erfassten Verbindungskenngröße auszugeben. Vorzugsweise erfolgt die Ausgabe als eine sprachliche Ausgabe. Es sind auch andere Ausgabeformen denkbar.

Das Sensorelement 170a erfasst zumindest eine Funktion und/oder eine Art der an der Verbindungsvorrichtung 126a angeordneten Aufsatzvorrichtung 400a. Die Informationsausgabeeinheit 370a ist zumindest dazu vorgesehen, akustisch und/oder haptisch Informationen zumindest in Abhängigkeit von einer Funktion und/oder einer Art der an der Verbindungsvorrichtung 126a angeordneten Aufsatzvorrichtung 400a auszugeben.

Das Sensorelement 170a erfasst vorzugsweise eine mechanische und/oder elektrische Kenngröße einer mechanischen und/oder elektrischen Verbindung der Aufsatzvorrichtung 400a mit dem Antriebsbasismodul 100a mittels der antriebstechnischen und/oder datentechnischen Schnittstelle 128a, 156a der Verbindungsvorrichtung 126a. Das Sensorelement 170a ist an die datentechnische Schnittstelle 156a angeschlossen. Das Sensorelement 170a erfasst vorzugsweise das Vorhandensein und/oder den Verbindungsstatus einer Verbindung der Aufsatzvorrichtung 400a mit dem Antriebsbasismodul 100a, die Art der verbundenen Aufsatzvorrichtung 400a, bereitgestellte Funktionen der Aufsatzvorrichtung 400a und/oder eine aktive Funktion der Aufsatzvorrichtung 400a. Es ist auch möglich mittels des Sensorelements 170a andere, einem Fachmann als sinnvoll erscheinende Verbindungskenngrößen zu erfassen. Es ist denkbar, dass das Sensorelement 170a zumindest einen Teil dieser Daten über die datentechnische Schnittstelle 156a erfasst.

Ferner umfasst die Elektronikeinheit 168a zumindest ein, insbesondere weiteres, Sensorelement 172a zur Erfassung einer Energieversorgungskenngröße. Die Informationsausgabeeinheit 370a ist zumindest dazu vorgesehen, akustisch und/oder haptisch Informationen zumindest in Abhängigkeit von der erfassten Energieversorgungskenngröße auszugeben. Das, insbesondere weitere, Sensorelement 172a erfasst zumindest die Versorgungsspannung, die Restkapazität der Energieversorgungseinheit 180a und/oder eine verbrauchte Energiemenge. Es ist auch denkbar, dass das, insbesondere weitere, Sensorelement 172a auch weitere, einem Fachmann als sinnvoll erscheinende Energieversorgungskenngrößen erfasst. Es ist denkbar, dass die Informationsausgabeeinheit 370a zumindest bei Unterschreitung eines definierten Wertes der Versorgungsspannung und/oder der Restkapazität und/oder einer Überschreitung eines bestimmten Energieverbrauchs den Bediener akustisch, insbesondere sprachlich, und/oder haptisch informiert.

Das Antriebsbasismodul 100a umfasst zumindest eine Empfangs- und/oder Kommunikationseinheit 176a. Die Empfangs- und/oder Kommunikationseinheit 176a ist zumindest zu einem Empfang eines Radiosignals und/oder zu einer Kommunikation mit einer externen Einheit vorgesehen. Die Informationsausgabeeinheit 370a ist dazu vorgesehen, akustisch und/oder haptisch Informationen zumindest in Abhängigkeit von dem empfangenen Radiosignal und/oder von empfangenen elektronischen Daten auszugeben. Vorzugsweise ist die Empfangs- und/oder Kommunikationseinheit 176a dazu vorgesehen, zumindest mit externen Einheiten, insbesondere mit tragbaren Elektrogeräten, insbesondere mit Mobiltelefonen, Tablets, Notebooks, Computergeräten, miniaturisierten Computergeräten und/oder einem Netzwerk aus tragbaren Elektrogeräten, insbesondere dem Internet und/oder Internet-of-Things, zu kommunizieren. Die Empfangs- und/oder Kommunikationseinheit 176a ist zumindest dazu vorgesehen, elektronische Daten, insbesondere abspielbare elektronische Daten, zu empfangen.

Die Elektronikeinheit 168a umfasst zumindest ein, insbesondere zusätzliches, Sensorelement 174a zur Erfassung zumindest einer Bearbeitungskenngröße. Die Informationsausgabeeinheit 370a ist zumindest dazu vorgesehen, akustisch und/oder haptisch Informationen in Abhängigkeit von der erfassten Bearbeitungskenngröße auszugeben. Das, insbesondere zusätzliche, Sensorelement 174a kann insbesondere als ein Inertialsensor, als ein Abstandssensor, insbesondere ein Laserabstandssensor und/oder ein Radio- und/oder Ultraschallabstandssensor, ein Kraftsensor und/oder ein Drehmomentsensor ausgebildet sein. Es sind auch andere, einem Fachmann als sinnvoll erscheinende Ausgestaltungen möglich. Die Informationsausgabeeinheit 370a ist vorzugsweise dazu vorgesehen, das Erreichen, und/oder Überschreiten eines bestimmten Wertes der Bearbeitungskenngröße und/oder eine Annäherung an einen bestimmten Wert der Bearbeitungskenngröße akustisch und/oder haptisch auszugeben.

Im Folgenden wird ein Verfahren zu einer akustischen und/oder haptischen Ausgabe von Informationen mittels der Informationsausgabeeinheit 370a des Antriebsbasismoduls 100a beschrieben. Bei dem Verfahren zu einer akustischen und/oder haptischen Ausgabe von Informationen mittels der Informationsausgabeeinheit 370a des Antriebsbasismoduls 100a werden in zumindest einem Verfahrensschritt haptisch und/oder akustisch Informationen mittels einer durch die Informationsausgabeeinheit 370a hervorgerufene Anregung der Antriebseinheit 110a ausgegeben. Bei einem Verfahren zu einer akustischen und/oder haptischen Ausgabe von Informationen mittels der Informationsausgabeeinheit 370a des Antriebsbasismoduls 100a werden in zumindest einem Verfahrensschritt haptisch und/oder akustisch Informationen zumindest in Abhängigkeit von einem aufgetretenen Gerätefehler und/oder Bedienfehler ausgegeben.

In Figur 2 ist eine Detailansicht der Verbindungsvorrichtung 126a des Antriebsbasismoduls 100a dargestellt. Die Verbindungsvorrichtung 126a des Antriebsbasismoduls 100a weist eine Verriegelungseinheit 160a zu einer Verriegelung der Aufsatzvorrichtung 400a auf. Die Verriegelungseinheit 160a ist an der Verbindungsvorrichtung 126a angeordnet. Die Verriegelungseinheit 160a ist dazu vorgesehen, ein Gehäuse 430a der Aufsatzvorrichtung 400a mit dem Gehäuse 218a des Antriebsbasismoduls 100a und/oder mit der Verbindungsvorrichtung 126a zu verriegeln. Die Verriegelungseinheit 160a ist dazu vorgesehen, das Gehäuse 430a der Aufsatzvorrichtung 400a mit dem Gehäuse 218a des Antriebsbasismoduls 100a und/oder mit der Verbindungsvorrichtung 126a verdrehsicher zu verbinden. Die Verriegelungseinheit 160a weist zumindest ein Sicherungselement 162a zu einer axialen Sicherung einer Verbindung des Gehäuses 218a des Antriebsbasismoduls 100a mit dem Gehäuse 430a der Aufsatzvorrichtung 400a auf. Das Sicherungselement 162a ist in dem vorliegenden Ausführungsbeispiel als eine in Umfangsrichtung umlaufende Nut ausgebildet. Das Sicherungselement 162a ist an dem Gehäuse 218a des Antriebsbasismoduls 100a angeordnet. In einer alternativen Ausgestaltung kann das Sicherungselement 162a als eine Rippe ausgebildet sein und/oder an der antriebstechnischen Schnittstelle 128a angeordnet sein. Die Aufsatzvorrichtung 400a weist ein korrespondierend zu dem Sicherungselement 162a ausgebildetes Rastelement auf, das zu einem Eingriff in das Sicherungselement 162a vorgesehen ist. Das Sicherungselement 162a und das Rastelement bilden in einem gekoppelten Zustand eine form- und/oder kraftschlüssige Verbindung aus.

Die Aufsatzvorrichtung 400a umfasst einen nicht näher dargestellten Entriegelungsring zum Lösen der Aufsatzvorrichtung 400a von dem Antriebsbasismodul 100a. Der Entriegelungsring ist in einem verbundenen Zustand an einem dem Antriebsbasismodul 100a zugewandten Ende der Aufsatzvorrichtung 400a angeordnet. Der Entriegelungsring ist in Umfangsrichtung drehbar gelagert auf der Aufsatzvorrichtung 400a angeordnet und zu einer Bedienung von Hand vorgesehen. Der Entriegelungsring ist dazu vorgesehen, das Rastelement zu einer Trennung der Aufsatzvorrichtung 400a von dem Antriebsbasismodul 100a zu spannen und zu lösen.

Die Verriegelungseinheit 160a weist ein weiteres Sicherungselement 164a auf, das zu einer Drehsicherung vorgesehen ist. Das weitere Sicherungselement 164a ist in dem vorliegenden Ausführungsbeispiel einstückig mit dem Gehäuse 218a des Antriebsbasismoduls 100a ausgebildet. Das weitere Sicherungselement 164a ist als ein Zahnkranz ausgebildet und weist insbesondere acht Zähne 166a auf, die in Umfangsrichtung gleichmäßig verteilt angeordnet sind. Es ist jedoch auch denkbar, dass der Zahnkranz eine von acht verschiedene Anzahl an Zähnen 166a aufweist. Der Übersichtlichkeit halber ist nur einer der Zähne 166a mit einem Bezugszeichen versehen. Die Aufsatzvorrichtung 400a weist eine korrespondierend zu dem weiteren Sicherungselement 164a ausgebildete Aufnahme auf. In einem gekoppelten Zustand greift das weitere Sicherungselement 164a in die Aufnahme der Aufsatzvorrichtung 400a ein. In einem gekoppelten Zustand überträgt das weitere Sicherungselement 164a in Umfangsrichtung auf die Aufsatzvorrichtung 400a wirkende Kräfte auf das Gehäuse 218a des Antriebsbasismoduls 100a. Das Rastmittel greift in das als Nut ausgebildete Sicherungselement 162a ein und überträgt in axialer Richtung auf die Aufsatzvorrichtung 400a wirkende Kräfte auf das Gehäuse 218a des Antriebsbasismoduls 100a.

Die antriebstechnische Schnittstelle 128a der Verbindungsvorrichtung 126a weist an einer Stirnfläche der Verbindungsvorrichtung 126a eine Ausnehmung 120a mit einer hexagonalen Grundfläche auf. Die Aufsatzvorrichtung 400a weist eine nicht näher dargestellte, in die Ausnehmung 120a passend einführbar ausgebildete antriebstechnische Schnittstelle auf. Die Aufsatzvorrichtung 400a wird formschlüssig angetrieben. Prinzipiell ist auch eine Ausnehmung 120a mit einer von einer hexagonalen Grundfläche verschiedenen Grundfläche denkbar. Ebenso ist denkbar, dass die Ausnehmung in der antriebstechnischen Schnittstelle der Aufsatzvorrichtung 400a angeordnet ist, und dass das Antriebsbasismodul 100a eine formschlüssig einführbar geformte antriebstechnische Schnittstelle 128a aufweist.

Die Verbindungsvorrichtung 126a weist alternativ oder zusätzlich zur antriebstechnischen Schnittstelle 128a die datentechnische Schnittstelle 156a auf. Die datentechnische Schnittstelle 156a weist eine Mehrzahl von Kontaktelementen 158a auf, die als Kontaktflächen ausgebildet sind. Es sind jedoch grundsätzlich auch andere Ausgestaltungen von Kontaktelementen, beispielsweise als Pins o. dgl., denkbar. Die Aufsatzvorrichtung 400a weist korrespondierende Kontaktelemente auf. Die Kontaktelemente 158a der datentechnischen Schnittstelle 156a sind zu einem Kontakt mit korrespondierenden Kontaktelementen der Aufsatzvorrichtung 400a vorgesehen. Die Kontaktelemente 158a der datentechnischen Schnittstelle 156a sind in einer Ebene, deren Normale von der Rotationsachse 124a gebildet wird, angeordnet. Die Kontaktelemente 158a der datentechnischen Schnittstelle 156a sind zumindest teilweise mit dem Sensorelement 170a verbunden.

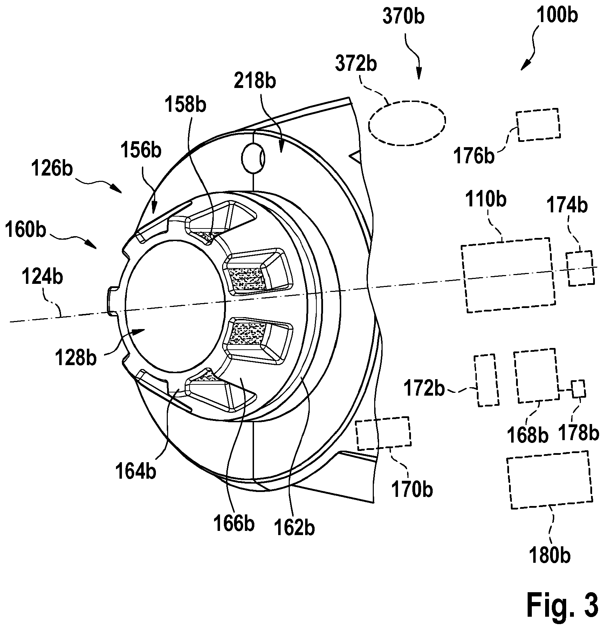

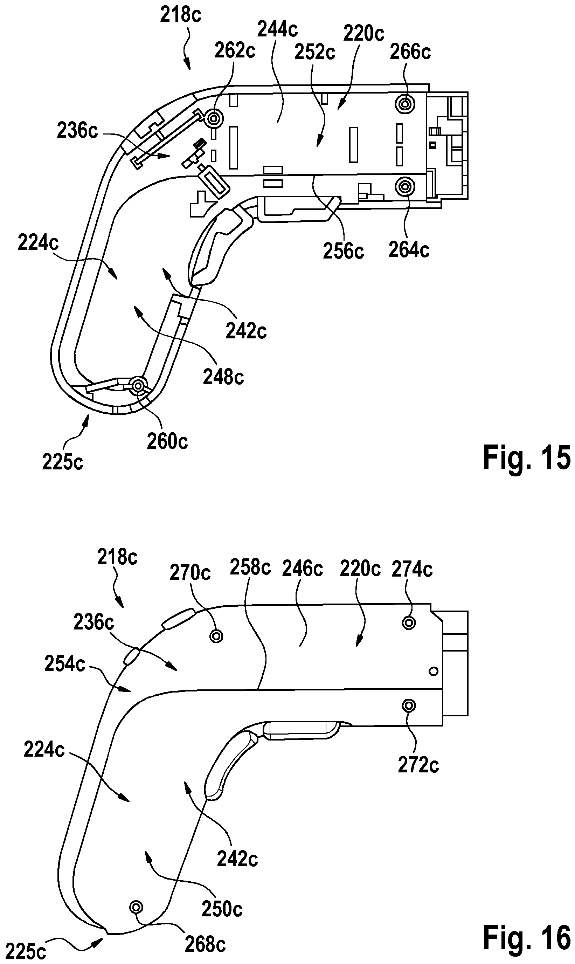

In den Figuren 3 bis 45 sind neun weitere Ausführungsbeispiele gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 bis 2 nachgestellt. In den Ausführungsbeispielen der Figuren 3 bis 45 ist der Buchstabe a durch die Buchstaben b bis j ersetzt.

Figur 3 zeigt in einer schematischen Darstellung eine Ausgestaltung einer Verbindungvorrichtung 126b einer alternativen Ausgestaltung eines erfindungsgemäßen Antriebsbasismoduls 100b. Dem Ausführungsbeispiel der Figur 3 ist der Buchstabe b nachgestellt.

Analog zu dem vorhergehenden Ausführungsbeispiel weist das in der Figur 3 dargestellte Antriebsbasismodul 100b zu einer Verbindung mit verschiedenen Aufsatzvorrichtungen (hier nicht näher dargestellt) zumindest die Verbindungsvorrichtung 126b auf, die zumindest eine antriebstechnische Schnittstelle 128b und/oder eine datentechnische Schnittstelle 156b zu einer Verbindung mit zumindest einer Aufsatzvorrichtung aufweist. Zudem umfasst das Antriebsbasismodul 100b zumindest eine Antriebseinheit 110b zu einem Antrieb der Aufsatzvorrichtung in einem mit der Verbindungsvorrichtung 126b verbundenen Zustand der Aufsatzvorrichtung. Ferner umfasst das Antriebsbasismodul 100b zumindest eine Informationsausgabeeinheit 370b, die zumindest dazu vorgesehen ist, einem Bediener akustisch und/oder haptisch Informationen auszugeben. Die Informationsausgabeeinheit 370b umfasst zumindest ein Soundmodul 372b, insbesondere einen Lautsprecher. Zusätzlich oder alternativ zum Soundmodul 372b kann die Informationsausgabeeinheit 370b ein weiteres Soundmodul (nicht näher dargestellt) und/oder eine Vibrationseinheit (nicht näher dargestellt) umfassen. Die Vibrationseinheit kann als Vibrationsmotor ausgebildet sein.

Im Unterschied zu dem in den Figuren 1 und 2 dargestellten Antriebsbasismodul 100a weist das in der Figur 3 dargestellte alternative Antriebsbasismodul 100b die Verbindungsvorrichtung 126b auf, die eine Verriegelungseinheit 160b zu einer Verriegelung der Aufsatzvorrichtung umfasst. Die Verriegelungseinheit 160b ist an der Verbindungsvorrichtung 126b angeordnet. Die Verriegelungseinheit 160b weist ein axiales Sicherungselement 162b auf. Die Verriegelungseinheit 160b weist ein weiteres Sicherungselement 164b auf, das zu einer Drehsicherung vorgesehen ist. Das Sicherungselement 164b ist in dem vorliegenden Ausführungsbeispiel einstückig mit dem Gehäuse 218b des Antriebsbasismoduls 100b ausgebildet. Das weitere Sicherungselement 164b ist als ein Zahnkranz ausgebildet und weist acht Zähne 166b auf, die in Umfangsrichtung gleichmäßig verteilt angeordnet sind. Es ist auch eine von acht verschiedene Anzahl von Zähnen 166b und/oder eine in Umfangsrichtung von einer gleichmäßigen Verteilung verschiedene Verteilung der Zähne 166b denkbar.

Die antriebstechnische Schnittstelle 128b ist als eine nicht näher dargestellte Aufnahme ausgebildet, die dazu vorgesehen ist, eine Antriebswelle der Aufsatzvorrichtung aufzunehmen und formschlüssig anzutreiben. Die datentechnische Schnittstelle 156b ist in die Verriegelungseinheit 160b integriert. Die datentechnische Schnittstelle 156b weist acht Kontaktelemente 158b auf, die jeweils eine Kontaktfläche aufweisen. Es ist aber auch eine von acht verschiedene Anzahl von Kontaktelementen 158b und eine von einer Kontaktfläche verschiedene Ausgestaltung, beispielsweise als Pin, möglich. Die Kontaktflächen sind jeweils an radial nach außen ausgerichteten Flächen in Zwischenräumen zwischen den Zähnen 166b des Sicherungselements 164b angeordnet.

Die Aufsatzvorrichtung weist eine korrespondierend zu dem weiteren Sicherungselement 164b ausgebildete Aufnahme auf, die acht komplementäre Gegenzähne aufweist. In einem gekoppelten Zustand greift das weitere Sicherungselement 164b in die Aufnahme der Aufsatzvorrichtung ein. Die Aufsatzvorrichtung weist zwei korrespondierend zu den Kontaktelementen 158b ausgebildete Kontaktelemente auf, die an radial nach innen gerichteten Flächen der komplementären Gegenzähne angeordnet sind. In einem gekoppelten Zustand sind die Kontaktelemente der Aufsatzvorrichtung jeweils mit einem Kontaktelement 158b der datentechnischen Schnittstelle 156b in Kontakt.

Hinsichtlich weiterer Merkmale und Funktionen des Antriebsbasismoduls 100b und/oder der Informationsausgabeeinheit 370b darf auf die Beschreibung des in den Figuren 1 und 2 dargestellten Antriebsbasismoduls 100a und/oder der in den Figuren 1 und 2 dargestellten Informationsausgabeeinheit 370a verwiesen werden, deren Beschreibung zumindest im Wesentlichen analog auf das Antriebsbasismoduls 100b und/oder die Informationsausgabeeinheit 370b zu lesen ist.

Im Folgenden soll der Begriff "Antriebsmodul" synonym zu "Antriebsbasismodul" verstanden werden. Ferner soll der Begriff "Aufsatzmodul" synonym zu "Aufsatzvorrichtung" verstanden werden. Des Weiteren soll der Begriff "Antriebsschnittstelle" synonym zu "antriebstechnische Schnittstelle" verstanden werden. Zudem soll der Begriff "Gehäuseeinheit" synonym zu "Gehäuse" verstanden werden. Darüber hinaus soll der Begriff "Griffgehäuseabschnitt" synonym zu "Handgriffbereich" verstanden werden. Ferner soll der Begriff "Energiespeichereinheit" synonym zu "Energieversorgungseinheit" verstanden werden.

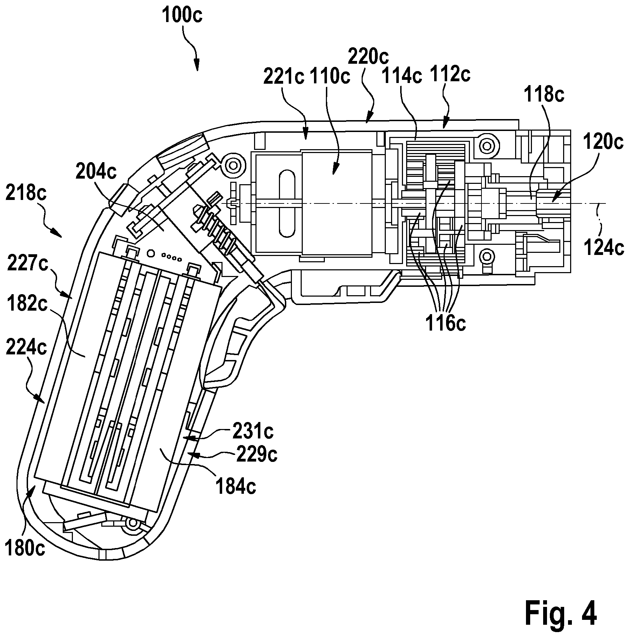

In den Figuren 4 bis 33 ist ein weiteres Ausführungsbeispiel gezeigt. Dem Ausführungsbeispiel der Figuren 4 bis 33 ist der Buchstabe c nachgestellt. Das weitere Ausführungsbeispiel der Figuren 4 bis 33 unterscheidet sich von den vorherigen Ausführungsbeispielen zumindest im Wesentlichen durch eine Ausgestaltung eines Antriebsmoduls 100c und eines Aufsatzmoduls 400c.

Figur 4 zeigt ein Antriebsmodul 100c. Das Antriebsmodul 100c ist Teil eines Werkzeugmodulsystems 10c. Das Werkzeugmodulsystem 10c ist als Küchenwerkzeugmodulsystem 12c ausgebildet. Das Werkzeugmodulsystem 10c ist als ein Handwerkzeugmodulsystem ausgebildet. Das Werkzeugmodulsystem 10c ist als ein Werkzeugmaschinensystem ausgebildet. Das Werkzeugmodulsystem 10c ist als ein Elektrowerkzeugmodulsystem ausgebildet. Das Werkzeugmodulsystem 10c ist als ein tragbares Werkzeugmodulsystem ausgebildet. Das Werkzeugmodulsystem 10c ist als ein handgehaltenes Werkzeugmodulsystem ausgebildet. Das Werkzeugmodulsystem 10c ist für einen Kücheneinsatz vorgesehen. Das Werkzeugmodulsystem 10c ist für einen Einsatz in einem Wohn- und/oder Essbereich vorgesehen. Das Werkzeugmodulsystem 10c ist für einen handwerklichen Einsatz vorgesehen.

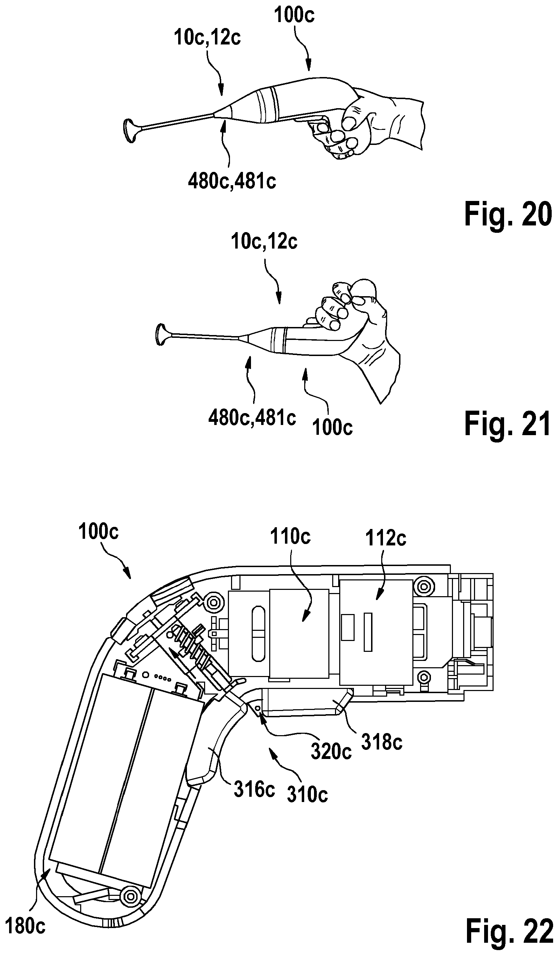

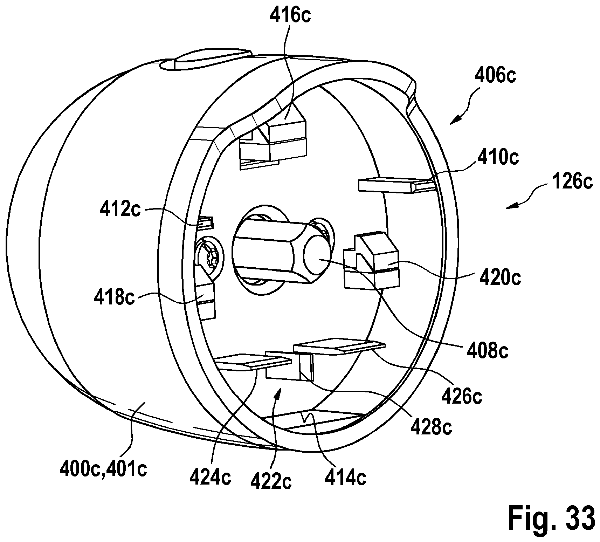

Das Werkzeugmodulsystem 10c weist das Antriebsmodul 100c auf. Das Werkzeugmodulsystem 10c weist zumindest ein Aufsatzmodul 400c, 480c auf. Das zumindest eine Aufsatzmodul 400c, 480c ist mit dem Antriebsmodul 100c koppelbar. Das Werkzeugmodulsystem 10c weist eine Mehrzahl an Aufsatzmodulen 400c, 480c auf. Ein erstes Aufsatzmodul 400c des Werkzeugmodulsystems 10c ist in Figur 33 dargestellt. Das erste Aufsatzmodul 400c ist als ein erstes Werkzeugmodul 401c ausgebildet. Ein zweites Aufsatzmodul 480c des Werkzeugmodulsystems 10c ist in den Figuren 20, 21, 23 und 24 gezeigt. Das zweite Aufsatzmodul 480c ist als ein zweites Werkzeugmodul 481c ausgebildet. Die Aufsatzmodule 400c, 480c können als Mixeraufsätze, als Rühraufsätze, als Aufschäumeraufsätze, als Hobel- und/oder Reibeaufsätze, als Häcksleraufsätze und/oder als Mühlenaufsätze ausgebildet sein.

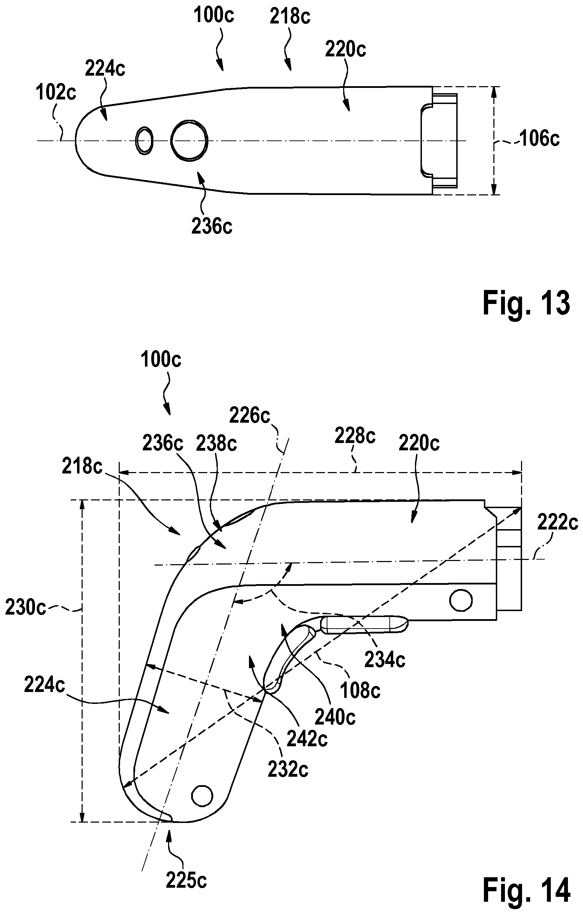

Das Antriebsmodul 100c ist als ein tragbares Antriebsmodul ausgebildet. Das Antriebsmodul 100c ist als ein handgehaltenes Antriebsmodul ausgebildet. Das Antriebsmodul 100c weist eine Masse von höchstens 1000 g, insbesondere von höchstens 700 g, vorteilhaft von höchstens 500 g und besonders vorteilhaft von höchstens 350 g, auf. Das Antriebsmodul 100c weist eine in Figur 14 ersichtliche maximale Erstreckung 108c von höchstens 25 cm, insbesondere von höchstens 22 cm, vorteilhaft von höchstens 20 cm und besonders vorteilhaft von höchstens 19 cm, auf. Das Antriebsmodul 100c weist eine maximale Erstreckung 108c von ungefähr 18,5 cm auf.

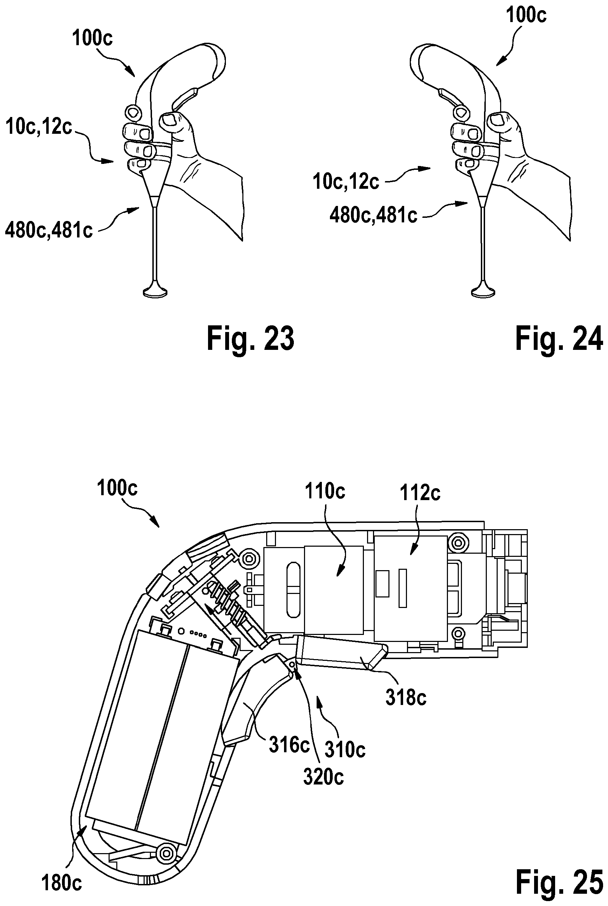

Das Antriebsmodul 100c ist in einer ersten Greifposition greifbar. Die erste Greifposition ist in Figur 20 dargestellt. Die erste Greifposition ist als Pistolengriff ausgebildet. Das Antriebsmodul 100c ist in einer weiteren ersten Greifposition greifbar. Die weitere erste Greifposition ist in Figur 21 dargestellt. Die weitere erste Greifposition ist als umgekehrter Pistolengriff ausgebildet. Das Antriebsmodul 100c ist in einer zweiten Greifposition greifbar. Die zweite Greifposition ist in Figur 23 dargestellt. Die zweite Greifposition ist als ein Stabgriff, insbesondere Stabmixergriff, ausgebildet. Das Antriebsmodul 100c ist in einer weiteren zweiten Greifposition greifbar. Die weitere zweite Greifposition ist in Figur 24 dargestellt. Die weitere zweite Greifposition ist als umgekehrter Stabgriff, insbesondere umgekehrter Stabmixergriff, ausgebildet.

Das Antriebsmodul 100c weist eine Antriebseinheit 110c auf. Die Antriebseinheit 110c ist in Figur 4 dargestellt. Die Antriebseinheit 110c ist als eine elektrische Maschine ausgebildet. Die Antriebseinheit 110c ist als ein Elektromotor ausgebildet. Die Antriebseinheit 110c weist einen Rotor auf. Ferner weist die Antriebseinheit 110c einen Stator auf. Die Antriebseinheit 110c ist zu einem rotatorischen Antrieb einer Antriebswelle vorgesehen. Die Antriebswelle ist um eine Rotationsachse 124c drehbar gelagert.

Die Antriebseinheit 110c weist eine Mehrzahl an Betriebsfunktionen auf. Eine erste der Betriebsfunktionen ist als eine Linkslauffunktion ausgebildet. Bei aktivierter erster Betriebsfunktion ist die Antriebseinheit 110c dazu vorgesehen, die Antriebswelle in Abtriebsrichtung betrachtet gegen den Uhrzeigersinn zu bewegen. Zumindest eine weitere erste der Betriebsfunktionen ist als eine Rechtslauffunktion ausgebildet. Bei aktivierter weiterer erster Betriebsfunktion ist die Antriebseinheit 110c dazu vorgesehen, die Antriebswelle in Abtriebsrichtung betrachtet im Uhrzeigersinn zu bewegen.

Eine zweite der Betriebsfunktionen ist als eine Gasgebefunktion ausgebildet. Bei aktivierter zweiter Betriebsfunktion ist die Antriebseinheit 110c dazu vorgesehen, die Antriebswelle mit einer von einem Nutzer variabel steuerbaren Drehzahl zu bewegen. Eine weitere zweite der Betriebsfunktionen ist als eine Softstartfunktion ausgebildet. Bei aktivierter weiterer zweiter Betriebsfunktion ist die Antriebseinheit 110c dazu vorgesehen, die Antriebswelle mit einer von dem Nutzer variabel steuerbaren Drehzahl zu bewegen. Ferner ist die Antriebseinheit 110c bei aktivierter Softstartfunktion dazu vorgesehen, eine Winkelbeschleunigung der Antriebswelle unterhalb eines positiven Grenzwerts zu halten, insbesondere bei einer von dem Nutzer vorgegebenen schnellen Drehzahlerhöhung. Bei aktivierter Softstartfunktion ist die Antriebseinheit 110c dazu vorgesehen, die Antriebswelle langsam bis zu einer von dem Nutzer vorgegebenen Drehzahl zu beschleunigen. Eine zusätzliche zweite der Betriebsfunktionen ist als eine Fixdrehzahlfunktion ausgebildet. Bei aktivierter zusätzlicher zweiter Betriebsfunktion ist die Antriebseinheit 110c dazu vorgesehen, die Antriebswelle mit einer unveränderlichen Drehzahl zu bewegen, insbesondere bei einer beliebigen und von Null verschiedenen von einem Nutzer vorgegebenen Drehzahl.

Eine dritte der Betriebsfunktionen ist als eine kontinuierliche Drehzahlfunktion ausgebildet. Bei aktivierter dritter Betriebsfunktion ist die Antriebseinheit 110c dazu vorgesehen, die Antriebswelle mit einer unmodulierten Drehzahl zu bewegen. Eine weitere dritte der Betriebsfunktionen ist als eine alternierende Drehzahlfunktion ausgebildet. Bei aktivierter weiterer dritter Betriebsfunktion ist die Antriebseinheit 110c dazu vorgesehen, kontinuierlich zwischen der Linkslauffunktion und der Rechtslauffunktion zu wechseln, insbesondere unter Deaktivierung der reinen Linkslauffunktion und der reinen Rechtslauffunktion. Eine zusätzliche dritte der Betriebsfunktionen ist als eine pulsierende Drehzahlfunktion ausgebildet. Bei aktivierter zusätzlicher dritter Betriebsfunktion ist die Antriebseinheit 110c dazu vorgesehen, die Antriebswelle mit einer zwischen einem, insbesondere als Null ausgebildeten, Minimalwert und einem von einem Nutzer bestimmbaren Maximalwert kontinuierlich wechselnden Drehzahl zu bewegen. Eine weitere zusätzliche dritte der Betriebsfunktionen ist als eine zeitabhängige Drehzahlfunktion ausgebildet. Bei aktivierter weiterer zusätzlicher dritter Betriebsfunktion ist die Antriebseinheit 110c dazu vorgesehen, die Antriebswelle mit einem vorgegebenen, zeitlich wiederholten Drehzahlverlauf zu bewegen.

Eine vierte der Betriebsfunktionen ist als eine Volldrehmomentfunktion ausgebildet. Bei aktivierter vierter Betriebsfunktion ist die Antriebseinheit 110c dazu vorgesehen, die Antriebswelle mit einem maximalen Drehmoment zu bewegen. Eine weitere vierte der Betriebsfunktionen ist als eine Teildrehmomentfunktion ausgebildet. Bei aktivierter weiterer vierter Betriebsfunktion ist die Antriebseinheit 110c dazu vorgesehen, die Antriebswelle mit einem definierten, insbesondere von einem maximalen Wert verschiedenen, Wert eines Drehmoments zu bewegen.

Die Antriebseinheit 110c weist zumindest zwei Betriebsmodi auf. Die Antriebseinheit 110c weist mehr als zwei Betriebsmodi auf. Ein jeder der Betriebsmodi setzt sich aus einer Kombination mehrerer der Betriebsfunktionen zusammen. Ein jeder der Betriebsmodi setzt sich aus einer Kombination zumindest zweier der Betriebsfunktionen zusammen. Eine Verfügbarkeit der Betriebsmodi ist abhängig von einer Bauweise und/oder Funktion eines mit dem Antriebsmodul 100c gekoppelten Aufsatzmoduls.

Ein erster der Betriebsmodi ist in einem gekoppelten Zustand des Antriebsmoduls 100c und eines in Figur 33 gezeigten, als Schraubermodul, insbesondere Schraubendrehermodul, ausgebildeten Aufsatzmoduls 400c verfügbar. In dem ersten Betriebsmodus sind die erste Betriebsfunktion und die zweite Betriebsfunktion aktiviert. Ein weiterer erster der Betriebsmodi ist in dem gekoppelten Zustand des Antriebsmoduls 100c und des als Schraubermodul ausgebildeten Aufsatzmoduls verfügbar. In dem weiteren ersten Betriebsmodus sind die weitere erste Betriebsfunktion und die zweite Betriebsfunktion aktiviert.

Ein zweiter der Betriebsmodi ist in einem gekoppelten Zustand des Antriebsmoduls 100c und eines nicht näher gezeigten, als Häckslermodul, insbesondere Kräuterhäckslermodul, ausgebildeten Aufsatzmoduls verfügbar. In dem zweiten Betriebsmodus sind die weitere erste Betriebsfunktion und die zusätzliche zweite Betriebsfunktion aktiviert. Ein weiterer zweiter der Betriebsmodi ist in dem gekoppelten Zustand des Antriebsmoduls 100c und des als Häckslermodul ausgebildeten Aufsatzmoduls verfügbar. In dem weiteren zweiten Betriebsmodus sind die weitere erste Betriebsfunktion und die zusätzliche zweite Betriebsfunktion aktiviert. In dem weiteren zweiten Betriebsmodus ist eine Drehzahl höher als in dem zweiten Betriebsmodus. Ein zusätzlicher zweiter der Betriebsmodi ist in dem gekoppelten Zustand des Antriebsmoduls 100c und des als Häckslermodul ausgebildeten Aufsatzmoduls verfügbar. In dem zusätzlichen zweiten Betriebsmodus sind die weitere erste Betriebsfunktion und die zusätzliche dritte Betriebsfunktion aktiviert.

Ein dritter der Betriebsmodi ist in einem gekoppelten Zustand des Antriebsmoduls 100c und eines nicht näher gezeigten, als Mühlenmodul, insbesondere Gewürzmühlenmodul, ausgebildeten Aufsatzmoduls verfügbar. In dem dritten Betriebsmodus sind die weitere erste Betriebsfunktion und die zusätzliche zweite Betriebsfunktion aktiviert.

Ein vierter der Betriebsmodi ist in einem gekoppelten Zustand des Antriebsmoduls 100c und eines nicht näher gezeigten, als Hobel- und/oder Reibemodul, insbesondere Käsereibemodul, ausgebildeten Aufsatzmoduls verfügbar. In dem vierten Betriebsmodus sind die erste Betriebsfunktion und die zusätzliche zweite Betriebsfunktion aktiviert. Ein weiterer vierter der Betriebsmodi ist in dem gekoppelten Zustand des Antriebsmoduls 100c und des als Hobel- und/oder Reibemodul ausgebildeten Aufsatzmoduls verfügbar. In dem weiteren vierten Betriebsmodus sind die weitere erste Betriebsfunktion und die zusätzliche zweite Betriebsfunktion aktiviert.

Ein fünfter der Betriebsmodi ist in einem gekoppelten Zustand des Antriebsmoduls 100c und eines in den Figuren 20, 21, 23 und 24 gezeigten, als Aufschäumermodul, insbesondere Milchaufschäumermodul, ausgebildeten Aufsatzmoduls 480c verfügbar. In dem fünften Betriebsmodus sind die weitere erste Betriebsfunktion, die weitere zweite Betriebsfunktion und die zusätzliche zweite Betriebsfunktion aktiviert. Ein weiterer fünfter der Betriebsmodi ist in dem gekoppelten Zustand des Antriebsmoduls 100c und des als Aufschäumermodul ausgebildeten Aufsatzmoduls verfügbar. In dem weiteren fünften Betriebsmodus sind die weitere erste Betriebsfunktion, die weitere zweite Betriebsfunktion und die zusätzliche zweite Betriebsfunktion aktiviert. In dem weiteren fünften Betriebsmodus ist eine Drehzahl höher als in dem fünften Betriebsmodus.

Ein sechster der Betriebsmodi ist in einem gekoppelten Zustand des Antriebsmoduls 100c und eines nicht näher gezeigten, als Pressenmodul, insbesondere Zitruspressenmodul, ausgebildeten Aufsatzmoduls verfügbar. In dem sechsten Betriebsmodus sind die weitere erste Betriebsfunktion und die zusätzliche zweite Betriebsfunktion aktiviert.

Alternativ könnte die Antriebseinheit 110c in Abhängigkeit gekoppelter Aufsatzmodule die in der folgenden ersten Tabelle gelisteten Betriebsmodi aufweisen. Die in der ersten Tabelle gelisteten Betriebsfunktionen sind dabei stets mit der zweiten Betriebsfunktion kombiniert. Beispielsweise soll eine zweite Zeile der ersten Tabelle verstanden werden als "Ein siebter Betriebsmodus, insbesondere ein Eindrehbetriebsmodus, der Betriebsmodi ist in einem gekoppelten Zustand des Antriebsmoduls 100c und eines als ein Schraubendrehermodul ausgebildeten Aufsatzmoduls verfügbar. In dem siebten Betriebsmodus sind die weitere erste Betriebsfunktion und die zweite Betriebsfunktion aktiviert."

| Aufsatzmodul | Nummer Betriebsmodus | Name Betriebsmodus | kombinierte Betriebsfunktionen |
|---|---|---|---|
| Schraubendreheraufsatzmodul | siebter | Eindrehbetriebsmodus | weitere erste |
| | achter | Ausdrehbetriebsmodus | erste |
| Häcksleraufsatzmodul, insbesondere Kräuterhäcksleraufsatzmodul | neunter | Häckselbetriebsmodus | weitere erste |
| | zehnter | weiterer Häckselbetriebsmodus | weitere erste und zusätzliche dritte |
| Mühlenaufsatz, insbesondere Gewürzmühlenaufsatz | elfter | Mahlbetriebsmodus | weitere erste |
| Hobel- und/oder Reibeaufsatz, insbesondere Käsereibeaufsatz | zwölfter | Hobel- und/oder Reibebetriebsmodus, vorteilhaft Reibebetriebsmodus | weitere erste |
| | dreizehnter | weiterer Hobel- und/oder Reibebetriebsmodus, vorteilhaft weiterer Reibebetriebsmodus | erste |
| Aufschäumeraufsatz, insbesondere Milchaufschäumeraufsatz | vierzehnter | Rührbetriebsmodus | weitere erste |
| | fünfzehnter | weiterer Rührbetriebsmodus | erste |
| Pressenaufsatz, insbesondere Zitruspressenaufsatz | sechzehnter | Pressbetriebsmodus | weitere erste |
| | siebzehnter | Endpositionsbetriebsmodus | |
| | achtzehnter | Rückstellbetriebsmodus | erste |

Der sechzehnte Betriebsmodus, der siebzehnte Betriebsmodus und der achtzehnte Betriebsmodus sind als aufeinanderfolgende Betriebsmodi ausgebildet. In dem siebzehnten Betriebsmodus sind die Betriebsfunktionen der Antriebseinheit 110c deaktiviert. In dem siebzehnten Betriebsmodus steht die Antriebseinheit 110c still. In dem achtzehnten Betriebsmodus ist die Antriebseinheit 110c dazu vorgesehen, ein Presselement, insbesondere einen Presskegel, eines als Pressenaufsatz, insbesondere Zitronenpressenaufsatz, ausgebildeten Aufsatzmoduls zurückzustellen.

Ferner könnte die Antriebseinheit 110c in Abhängigkeit gekoppelter Aufsatzmodule die in der folgenden zweiten Tabelle gelisteten Betriebsmodi aufweisen. Die in der zweiten Tabelle gelisteten Betriebsfunktionen sind dabei stets mit der zusätzlichen zweiten Betriebsfunktion kombiniert. Beispielsweise soll eine zweite Zeile der zweiten Tabelle verstanden werden als "Ein neunzehnter Betriebsmodus, insbesondere ein langsamer Eindrehbetriebsmodus, der Betriebsmodi ist in einem gekoppelten Zustand des Antriebsmoduls 100c und eines als ein Schraubendrehermodul ausgebildeten Aufsatzmoduls verfügbar. In dem neunzehnten Betriebsmodus sind die weitere erste Betriebsfunktion und die zusätzliche zweite Betriebsfunktion aktiviert." In einem Betriebszustand mit dem Zusatz "schnell" weist die Antriebseinheit 110c dabei eine höhere Drehzahl auf als in einem korrespondierenden Betriebszustand mit dem Zusatz "langsam".

| Aufsatzmodul | Nummer Betriebsmo-dus | Name Betriebsmodus | kombinierte Betriebsfunktionen |
|---|---|---|---|
| Schraubendreheraufsatzmodul | neunzehnter | langsamer Eindrehbetriebsmodus | weitere erste |
| | zwanzigster | schneller Eindrehbetriebsmodus | weitere erste |
| | einundzwanzigster | Langsamer Ausdrehbetriebsmodus | erste |
| | zweiundzwanzigster | schneller Ausdrehbetriebsmodus | erste |
| Häcksleraufsatzmodul, insbesondere Kräuterhäcksleraufsatzmodul | Dreiundzwanzigster | langsamer Häckselbetriebsmodus | weitere erste |
| | vierundzwanzigster | schneller Häckselbetriebsmodus | weitere erste |
| | fünfundzwanzigster | weiterer langsamer Häckselbetriebsmodus | weitere erste und zusätzliche dritte |
| | sechsundzwanzigster | weiterer schneller Häckselbetriebsmodus | weitere erste und zusätzliche dritte |
| Mühlenaufsatz, insbesondere Gewürzmühlenaufsatz | siebenundzwanzigster | langsamer Mahlbetriebsmodus | weitere erste |
| | achtundzwanzigster | schneller Mahlbetriebsmodus | weitere erste |
| Hobel- und/oder Reibeaufsatz, insbesondere Käsereibeaufsatz | neunundzwanzigster | langsamer Hobel- und/oder Reibebetriebsmodus, insbesondere langsamer Reibebetriebsmodus | weitere erste |
| | dreißigster | schneller Hobel- und/oder Reibebetriebsmodus, insbesondere schneller Reibebetriebsmodus | weitere erste |
| | einunddreißigster | weiterer langsamer Hobel- und/oder Reibebetriebsmodus, insbesondere weiterer langsamer Reibebetriebsmodus | erste |
| | zweiunddreißigster | weiterer schneller Hobel- und/oder Reibebetriebsmodus, insbesondere weiterer schneller Reibebetriebsmodus | erste |
| Aufschäumeraufsatz, insbesondere Milchaufschäumeraufsatz | dreiunddreißigster | langsamer Rührbetriebsmodus | weitere erste |
| | vierunddreißigster | schneller Rührbetriebsmodus | weitere erste |
| | fünfunddreißigster | weiterer langsamer Rührbetriebsmodus | erste |
| | sechsunddreißigster | weiterer schneller Rührbetriebsmodus | erste |
| Pressenaufsatz, insbesondere Zitruspressenaufsatz | siebenunddreißigster | langsamer Pressbetriebsmodus | weitere erste |
| | achtunddreißigster | schneller Pressbetriebsmodus | weitere erste |
| | neununddreißigster | Endpositionsbetriebsmodus | |
| | vierzigster | Langsamer Rückstellbetriebsmodus | erste |
| | einundvierzigster | schneller Rückstellbetriebsmodus | erste |

Der siebenunddreißigste Betriebsmodus und/oder der achtunddreißigste Betriebsmodus, der neununddreißigste Betriebsmodus und der vierzigste Betriebsmodus und/oder der einundvierzigste Betriebsmodus sind als aufeinanderfolgende Betriebsmodi ausgebildet. In dem neununddreißigsten Betriebsmodus sind die Betriebsfunktionen der Antriebseinheit 110c deaktiviert. In dem neununddreißigsten Betriebsmodus steht die Antriebseinheit 110c still. In dem vierzigsten Betriebsmodus ist die Antriebseinheit 110c dazu vorgesehen, ein Presselement, insbesondere einen Presskegel, eines als Pressenaufsatz, insbesondere Zitronenpressenaufsatz, ausgebildeten Aufsatzmoduls zurückzustellen. In dem einundvierzigsten Betriebsmodus ist die Antriebseinheit 110c dazu vorgesehen, ein Presselement, insbesondere einen Presskegel, eines als Pressenaufsatz, insbesondere Zitronenpressenaufsatz, ausgebildeten Aufsatzmoduls zurückzustellen.

Das Antriebsmodul 100c weist eine in Figur 4 dargestellte Getriebeeinheit 112c auf. Die Getriebeeinheit 112c ist koaxial zu der Antriebseinheit 110c angeordnet. Die Getriebeeinheit 112c ist koaxial zu der Antriebswelle angeordnet. Die Getriebeeinheit 112c ist koaxial zu der Rotationsachse 124c angeordnet. Die Getriebeeinheit 112c ist der Antriebseinheit 110c im Drehmomentenfluss nachgeschaltet. Die Getriebeeinheit 112c weist ein Rädergetriebe auf. Das Rädergetriebe ist als ein Zahnradgetriebe ausgebildet. Das Rädergetriebe ist als ein Stirnradgetriebe ausgebildet. Das Rädergetriebe ist als ein Planetenradgetriebe ausgebildet. Die Getriebeeinheit 112c weist eine Mehrzahl an Getriebeelementen 116c auf, wovon der Übersichtlichkeit wegen lediglich ein Teil mit Bezugszeichen versehen ist. Die Getriebeelemente 116c umfassen Wellen und Räder, insbesondere Zahnräder und vorzugsweise Stirnräder. Die Getriebeeinheit 112c weist ein Getriebegehäuse 114c auf. Das Getriebegehäuse 114c umschließt die Getriebeelemente 116c. Alternativ kann eine Getriebeeinheit als ein Kurbelgetriebe, als ein Kurvengetriebe, als ein Rollengetriebe und/oder als ein Sperrgetriebe ausgebildet sein.

Die Getriebeeinheit 112c ist zu einer Drehzahländerung vorgesehen. Die Getriebeeinheit 112c ist zu einer Drehmomentänderung vorgesehen. Die Getriebeeinheit 112c ist dazu vorgesehen, eine Drehzahl der Antriebswelle an eine Drehzahl einer Hauptabtriebswelle 118c zu übersetzen. Die Getriebeeinheit 112c ist dazu vorgesehen, ein Drehmoment von der Antriebswelle an die die Hauptabtriebswelle 118c zu übertragen. Alternativ oder zusätzlich kann eine Getriebeeinheit zu einer Änderung einer Rotationsachse vorgesehen und/oder ein Zahnradgetriebe als ein Kegelradgetriebe ausgebildet sein.

Das Antriebsmodul 100c weist die Hauptabtriebswelle 118c auf. Die Hauptabtriebswelle 118c ist koaxial zu der Antriebseinheit 110c angeordnet. Die Hauptabtriebswelle 118c ist koaxial zu der Antriebswelle angeordnet. Die Hauptabtriebswelle 118c ist koaxial zu der Getriebeeinheit 112c angeordnet. Die Hauptabtriebswelle 118c ist drehbar um die Rotationsachse 120c gelagert. Die Hauptabtriebswelle 118c ist der Antriebseinheit 110c im Drehmomentenfluss nachgeschaltet. Die Hauptabtriebswelle 118c ist der Getriebeeinheit 112c im Drehmomentenfluss nachgeschaltet. Die Hauptabtriebswelle 118c weist eine Ausnehmung 120c. Ein abtriebsseitiges Ende der Hauptabtriebswelle 118c weist die Ausnehmung 120c auf. Die Ausnehmung 120c ist als eine Sechskantausnehmung ausgebildet. Die Ausnehmung 120c weist einen sechseckigen Querschnitt auf. Die Ausnehmung 120c ist zu einer Wellenaufnahme vorgesehen.

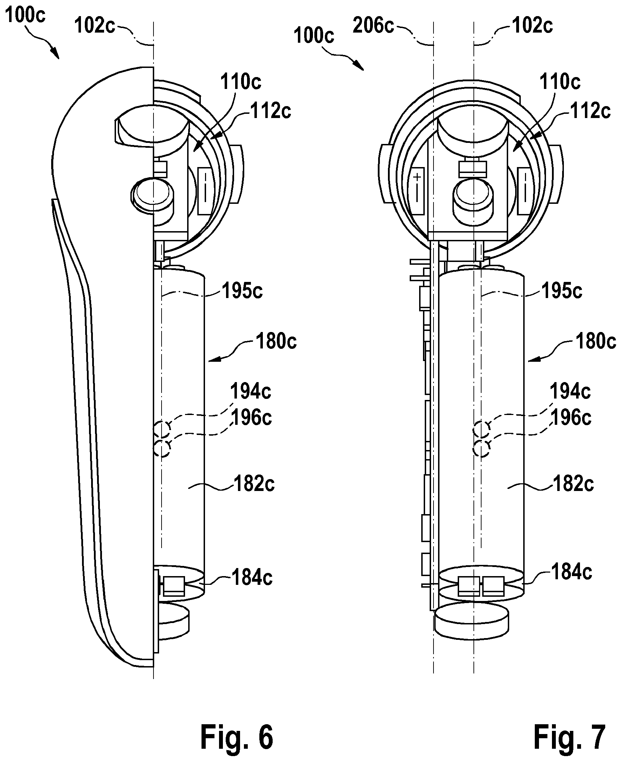

Das Antriebsmodul 100c weist eine Hauptplatine 204c auf. Die Hauptplatine 204c ist in den Figuren 4 bis 10 gezeigt. Die Hauptplatine 204c weist eine in Figur 7 ersichtliche Haupterstreckungsebene 206c auf, die mit einer Haupterstreckungsebene 102c des Antriebsmoduls 100c einen Winkel von höchstens 60° einschließt. Die Haupterstreckungsebene 206c der Hauptplatine 204c und die Haupterstreckungsebene 102c des Antriebsmoduls 100c sind parallel zueinander angeordnet. Die Haupterstreckungsebene 206c der Hauptplatine 204c und die Haupterstreckungsebene 102c des Antriebsmoduls 100c sind zueinander beabstandet angeordnet. Die Haupterstreckungsebene 206c der Hauptplatine 204c und die Haupterstreckungsebene 102c des Antriebsmoduls 100c weisen einen Abstand von zumindest 5 mm auf. Die Haupterstreckungsebene 206c der Hauptplatine 204c und die Haupterstreckungsebene 102c des Antriebsmoduls 100c weisen einen Abstand von höchstens 15 mm auf.

Die Hauptplatine 204c weist zwei Teilabschnitte 208c, 210c auf. Die Teilabschnitte 208c, 210c sind einteilig ausgebildet. Die Hauptplatine 204c weist einen ersten Teilabschnitt 208c auf. Der erste Teilabschnitt 208c weist senkrecht zu der Haupterstreckungsebene 206c der Hauptplatine 204c betrachtet im Wesentlichen eine Form eines Rechtecks auf. Die Hauptplatine 204c weist einen zweiten Teilabschnitt 210c auf. Der zweite Teilabschnitt 210c weist senkrecht zu der Haupterstreckungsebene 206c der Hauptplatine 204c betrachtet im Wesentlichen eine Form eines Dreiecks, insbesondere eines rechtwinkligen Dreiecks, auf. Der zweite Teilabschnitt 210c grenzt mit einer Hypotenuse an eine kurze Seitenkante des ersten Teilabschnitts 208c. Ein, insbesondere geometrischer, Schwerpunkt des zweiten Teilabschnitts 210c ist näher an der Antriebseinheit 110c angeordnet als ein, insbesondere geometrischer, Schwerpunkt des ersten Teilabschnitts 208c.

Die Hauptplatine 204c umfasst drei Schnittstellen 212c, 214c, 216c. Die Schnittstellen 212c, 214c, 216c weisen jeweils eine Schnittstellenöffnung auf. Die Schnittstellen 212c, 214c, 216c weisen jeweils einen Leiterkontakt auf. Die Schnittstellen 212c, 214c, 216c sind als Kabelschuhe ausgebildet. Eine erste Schnittstelle 212c der Schnittstellen 212c, 214c, 216c ist an einer dem zweiten Teilabschnitt 210c zugewandten Seite des ersten Teilabschnitts 208c angeordnet. Eine zweite Schnittstelle 214c der Schnittstellen 212c, 214c, 216c ist an einer dem zweiten Teilabschnitt 210c zugewandten Seite des ersten Teilabschnitts 208c angeordnet. Eine dritte Schnittstelle 216c der Schnittstellen 212c, 214c, 216c ist an einer dem zweiten Teilabschnitt 210c abgewandten Seite des ersten Teilabschnitts 208c angeordnet. Alternativ könnte eine Hauptplatine eine von drei verschiedene Anzahl an Schnittstellen aufweisen.

Die Hauptplatine 204c kann zumindest einen Teil einer Elektronikeinheit 168c, einer Empfangs- und/oder Kommunikationseinheit 176c und/oder eine Speichereinheit 178c aufweisen. Dazu umfasst die Hauptplatine 204c eine Mehrzahl an elektronischen Bausteinen und/oder Baugruppen, beispielsweise Leiterbahnen, Kondensatoren, Schaltungen, Speicherbausteine und/oder Rechenbausteine, insbesondere Mikrochips. Die elektronischen Bausteine und/oder Baugruppen weisen zumindest eine Signalübertragungs-, Energiespeicher-, Datenspeicher-, Steuerungs-, Regelungs-, und/oder Berechnungsfunktion auf.

Das Antriebsmodul 100c weist eine Energiespeichereinheit 180c auf. Die Energiespeichereinheit 180c ist in den Figuren 4 bis 10 gezeigt. Die Energiespeichereinheit 180c ist als eine elektrische Energiespeichereinheit ausgebildet. Die Energiespeichereinheit 180c ist als eine wiederaufladbare Energiespeichereinheit ausgebildet. Die Energiespeichereinheit 180c ist als eine Akkueinheit, insbesondere Lithium-Ionen-Akkueinheit, ausgebildet. Die Energiespeichereinheit 180c ist dazu vorgesehen, zumindest die Antriebseinheit 110c mit Energie, insbesondere elektrischer Energie, zu versorgen.

Die Energiespeichereinheit 180c weist eine Mehrzahl an Energiespeicherzellen 182c, 184c auf. Die Energiespeichereinheit 180c umfasst zwei Energiespeicherzellen 182c, 184c. Die Energiespeichereinheit 180c weist genau zwei Energiespeicherzellen 182c, 184c auf. Alternativ könnte eine Energiespeichereinheit auch mehr als zwei Energiespeicherzellen aufweisen.

Die Energiespeichereinheit 180c umfasst eine erste Energiespeicherzelle 182c mit einem ersten Schwerpunkt 194c, insbesondere ersten Massenschwerpunkt. Die erste Energiespeicherzelle 182c weist im Wesentlichen eine Form eines Zylinders auf. Die erste Energiespeicherzelle 182c ist als elektrische Energiespeicherzelle ausgebildet. Die erste Energiespeicherzelle 182c ist als wiederaufladbare Energiespeicherzelle ausgebildet. Die erste Energiespeicherzelle 182c ist als Akku-Zelle, insbesondere Lithium-Ionen-Akkuzelle, ausgebildet.

Die Energiespeichereinheit 180c umfasst eine zweite Energiespeicherzelle 184c mit einem zweiten Schwerpunkt 196c, insbesondere zweiten Massenschwerpunkt. Die zweite Energiespeicherzelle 184c ist als elektrische Energiespeicherzelle ausgebildet. Die zweite Energiespeicherzelle 184c ist als wiederaufladbare Energiespeicherzelle ausgebildet. Die zweite Energiespeicherzelle 184c ist als Akku-Zelle, insbesondere Lithium-Ionen-Akkuzelle, ausgebildet. Die zweite Energiespeicherzelle 184c weist im Wesentlichen eine Form eines Zylinders auf. Eine Längserstreckungsachse 192c der zweiten Energiespeicherzelle 184c ist parallel zu einer Längserstreckungsachse 190c der ersten Energiespeicherzelle 182c angeordnet.

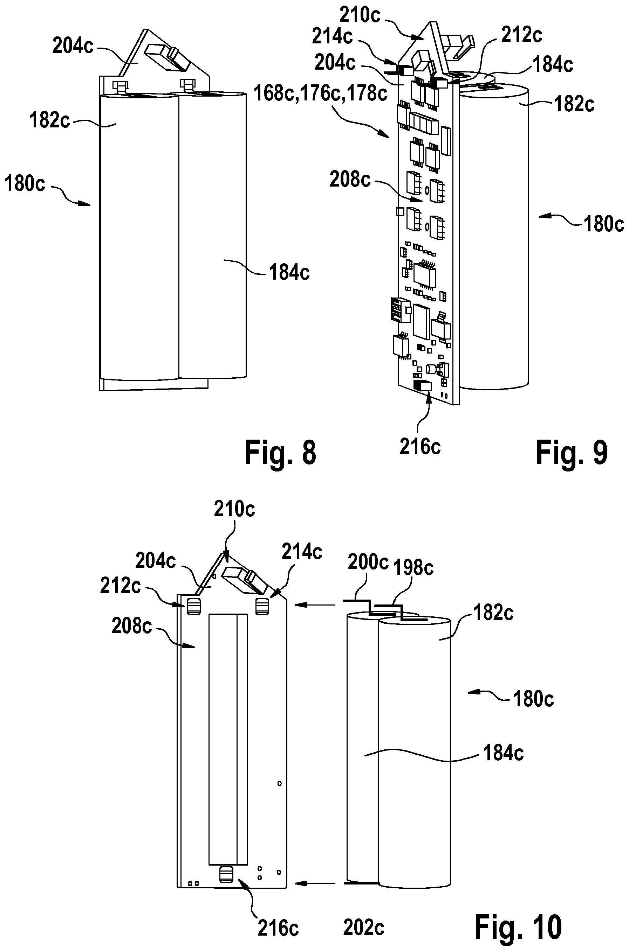

Die Energiespeicherzellen 182c, 184c umfassen drei Steckkontakte 198c, 200c, 202c, welche in Figur 10 dargestellt sind. Die drei Steckkontakte 198c, 200c, 202c korrespondieren zu den Schnittstellen 212c, 214c, 216c. Die erste Energiespeicherzelle 182c umfasst einen ersten Steckkontakt 198c der Steckkontakte 198c, 200c, 202c. Der erste Steckkontakt 198c korrespondiert zu der ersten Schnittstelle 212c. Der erste Steckkontakt 198c und die erste Schnittstelle 212c sind zu einer ersten Steckverbindung vorgesehen. Die zweite Energiespeicherzelle 184c umfasst einen zweiten Steckkontakt 200c der Steckkontakte 198c, 200c, 202c. Der zweite Steckkontakt 200c korrespondiert zu der zweiten Schnittstelle 214c. Der zweite Steckkontakt 200c und die zweite Schnittstelle 214c sind zu einer zweiten Steckverbindung vorgesehen. Die erste Energiespeicherzelle 182c und die zweite Energiespeicherzelle 184c umfassen einen gemeinsamen dritten Steckkontakt 202c der Steckkontakte 198c, 200c, 202c. Der dritte Stecckontakt 202c ist an einem dem ersten Steckkontakt 198c gegenüberliegenden Ende der ersten Energiespeicherzelle 182c angeordnet. Der dritte Steckkontakt 202c ist an einem dem zweiten Steckkontakt 200c gegenüberliegenden Ende der zweiten Energiespeicherzelle 182c angeordnet. Der dritte Steckkontakt 202c korrespondiert zu der dritten Schnittstelle 216c. Der dritte Steckkontakt 202c und die dritte Schnittstelle 216c sind zu einer dritten Steckverbindung vorgesehen.

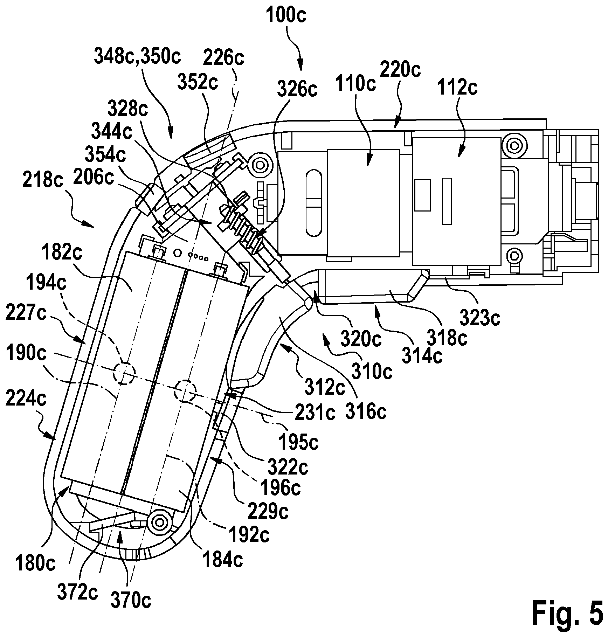

In den Figuren 5, 6 und 7 ist eine Schwerpunktachse 195c durch den ersten Schwerpunkt 194c der ersten Energiespeicherzelle 182c und durch den zweiten Schwerpunkt 196c der zweiten Energiespeicherzelle 184c dargestellt. Die Schwerpunktachse 195c schließt mit einer Haupterstreckungsebene 102c des Antriebsmoduls 100c einen Winkel von höchstens 60° ein. Die Schwerpunktachse 195c ist parallel zu der Haupterstreckungsebene 102c des Antriebsmoduls 100c angeordnet. Die Schwerpunktachse 195c ist beabstandet zu der Haupterstreckungsebene 102c des Antriebsmoduls 100c angeordnet. Die Schwerpunktachse 195c weist zu der Haupterstreckungsebene 102c des Antriebsmoduls 100c einen Abstand von mehr als 1 mm auf. Die Schwerpunktachse 195c weist zu der Haupterstreckungsebene 102c des Antriebsmoduls 100c einen Abstand von weniger als 3 mm auf. Die Schwerpunktachse 195c weist zu der Haupterstreckungsebene 102c des Antriebsmoduls 100c einen Abstand von ungefähr 2 mm auf.

Eine maximale Anzahl von senkrecht zu der Haupterstreckungsebene 102c des Antriebsmoduls 100c hintereinander angeordneten Energiespeicherzellen 182c, 184c der Energiespeichereinheit 180c beträgt eins. Die erste Energiespeicherzelle 182c und die zweite Energiespeicherzelle 184c sind senkrecht zu der Haupterstreckungsebene 102c des Antriebsmoduls 100c betrachtet überlappungsfrei angeordnet. Somit sind die erste Energiespeicherzelle 182c und die zweite Energiespeicherzelle 184c unabhängig voneinander auf die Hauptplatine 204c steckbar. Eine maximale Anzahl von in der Haupterstreckungsebene 102c hintereinander angeordneten Energiespeicherzellen 182c, 184c der Energiespeichereinheit 180c beträgt zwei. Die erste Energiespeicherzelle 182c und die zweite Energiespeicherzelle 182c sind in der Haupterstreckungsebene 102c hintereinander angeordnet. Die maximale Anzahl der senkrecht zu der Haupterstreckungsebene 102c des Antriebsmoduls 100c hintereinander angeordneten Energiespeicherzellen 182c, 184c ist geringer als die maximale Anzahl der in der Haupterstreckungsebene 102c hintereinander angeordneten Energiespeicherzellen 182c, 184c.

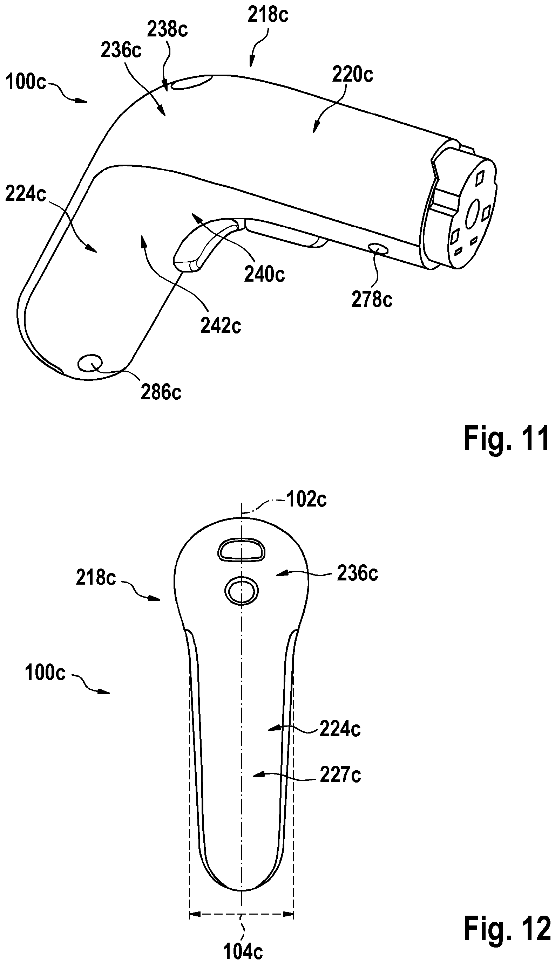

Das Antriebsmodul 100c weist eine Gehäuseeinheit 218c auf. Die Gehäuseeinheit 218c ist in den Figuren 11 bis 19 näher dargestellt. Die Gehäuseeinheit 218c ist pistolenförmig ausgebildet. Die Gehäuseeinheit 218c ist mehrteilig ausgebildet. Die Gehäuseeinheit 218c besteht zumindest teilweise aus einem Kunststoff, insbesondere einem Thermoplast und vorzugsweise aus Acrylnitril-Butadien-Styrol-Copolymeren (ABS). Die Gehäuseeinheit 218c besteht zumindest zu einem Großteil aus einem Kunststoff, insbesondere aus einem Thermoplast und vorzugsweise aus ABS. Die Gehäuseeinheit 218c weist parallel zu der Rotationsachse 124c eine in Figur 14 gezeigte maximale Erstreckung 228c von höchstens 18 cm auf. Die Gehäuseeinheit 218c weist parallel zu der Rotationsachse 124c eine maximale Erstreckung 228c von ungefähr 15,3 cm auf. Die Gehäuseeinheit 218c weist senkrecht zu der Rotationsachse 124c eine maximale Erstreckung 230c von höchstens 15 cm auf. Die Gehäuseeinheit 218c weist senkrecht zu der Rotationsachse 124c eine maximale Erstreckung 230c von ungefähr 12,1 cm auf.

Die Gehäuseeinheit 218c umfasst einen Antriebsgehäuseabschnitt 220c. Der Antriebsgehäuseabschnitt 220c weist im Wesentlichen eine Form eines Hohlzylinders auf. Ein Querschnitt durch den Antriebsgehäuseabschnitt 220c senkrecht zu einer Längserstreckungsachse 222c des Antriebsgehäuseabschnitts 220c weist im Wesentlichen eine Form eines Kreisrings auf. Eine Längserstreckung des Antriebsgehäuseabschnitts 220c ist größer als ein mittlerer Durchmesser des Antriebsgehäuseabschnitts 220c. Eine Längserstreckung des Antriebsgehäuseabschnitts 220c ist geringer als ein doppelter Durchmesser des Antriebsgehäuseabschnitts 220c. Eine in Figur 13 gezeigte Erstreckung 106c des Antriebsgehäuseabschnitts 220c senkrecht zu der Haupterstreckungsebene 102c des Antriebsmoduls 100c beträgt höchstens 55 mm. Die Erstreckung 106c des Antriebsgehäuseabschnitts 220c senkrecht zu der Haupterstreckungsebene 102c des Antriebsmoduls 100c beträgt ungefähr 55 mm.

Der Antriebsgehäuseabschnitt 220c umschließt die in Figur 4 gezeigte Antriebseinheit 110c. Eine Längserstreckungsachse 222c des Antriebsgehäuseabschnitts 220c ist im Wesentlichen parallel zu der Rotationsachse 124c angeordnet. Zwischen dem Antriebsgehäuseabschnitt 220c und der Antriebseinheit 110c ist ein Hohlraum 221c angeordnet. Der Antriebsgehäuseabschnitt 220c umschließt die in Figur 4 gezeigte Getriebeeinheit 112c. Der Antriebsgehäuseabschnitt 220c ist im Wesentlichen koaxial zu der Getriebeeinheit 112c angeordnet.

Die Gehäuseeinheit 218c umfasst einen Griffgehäuseabschnitt 224c. Der Griffgehäuseabschnitt 224c verjüngt sich entlang einer Längserstreckungsachse 226c des Griffgehäuseabschnitts 224c zu einem freien Ende 225c des Griffgehäuseabschnitts 224c hin kontinuierlich. Der Griffgehäuseabschnitt 224c verjüngt sich in der Schwerpunktachse 195c betrachtet zu dem freien Ende 225c hin kontinuierlich.

Ein Querschnitt durch den Griffgehäuseabschnitt 224c senkrecht zu der Längserstreckungsachse 226c des Griffgehäuseabschnitts 224c weist im Wesentlichen eine Form eines ovalen Rings auf. Der Griffgehäuseabschnitt 224c weist senkrecht zu der Haupterstreckungsebene 102c des Antriebsmoduls 100c eine in Figur 12 gezeigte maximale Erstreckung 104c von höchstens 44 mm auf. Der Griffgehäuseabschnitt 224c weist senkrecht zu der Haupterstreckungsebene 102c des Antriebsmoduls 100c eine Erstreckung 104c von ungefähr 35 mm auf. Der Griffgehäuseabschnitt 224c weist parallel zu der Schwerpunktachse 195c eine in Figur 14 gezeigte maximale Erstreckung 232c von höchstens 60 mm auf. Der Griffgehäuseabschnitt 224c weist parallel zu der Schwerpunktachse 195c eine maximale Erstreckung 232c von ungefähr 45 mm auf. Die maximale Erstreckung 104c des Griffgehäuseabschnitts 224c senkrecht zu der Haupterstreckungsebene 102c des Antriebsmoduls 100c ist geringer als die maximale Erstreckung 232c des Griffgehäuseabschnitts 224c parallel zu der Schwerpunktachse 195c.

Der Griffgehäuseabschnitt 224c umschließt die in Figur 4 gezeigte Hauptplatine 204c zu einem Großteil. Der Griffgehäuseabschnitt 224c umschließt die Energiespeichereinheit 180c zu einem Großteil. Eine äußere Schmalseite 227c des Griffgehäuseabschnitts 224c kontaktiert die erste Energiespeicherzelle 182c.

Eine innere Schmalseite 229c des Griffgehäuseabschnitts 224c ist durch einen Hohlraum 231c von der zweiten Energiespeicherzelle 184c getrennt. Die Längserstreckungsachse 226c des Griffgehäuseabschnitts 224c ist zumindest im Wesentlichen parallel zu der Längserstreckungsachse 190c der ersten Energiespeicherzelle 182c angeordnet. Die Längserstreckungsachse 226c des Griffgehäuseabschnitts 224c ist im Wesentlichen parallel zu der Längserstreckungsachse 192c der zweiten Energiespeicherzelle 184c angeordnet. Die Längserstreckungsachse 226c des Griffgehäuseabschnitts 224c ist zumindest im Wesentlichen senkrecht zu der Schwerpunktachse 195c angeordnet.

Der Griffgehäuseabschnitt 224c ist gewinkelt zu dem Antriebsgehäuseabschnitt 220c angeordnet. Ein in Figur 14 gezeigter Innenwinkel 234c zwischen der Längserstreckungsachse 222c des Antriebsgehäuseabschnitts 220c und der Längserstreckungsachse 226c des Griffgehäuseabschnitts 224c beträgt zumindest 80°. Der Innenwinkel 234c beträgt höchstens 170°. Der Innenwinkel 234c beträgt ungefähr 110°. Der Antriebsgehäuseabschnitt 220c und der Griffgehäuseabschnitt 224c spannen die Haupterstreckungsebene 102c des Antriebsmoduls 100c auf.

Zwischen dem Griffgehäuseabschnitt 224c und dem Antriebsgehäuseabschnitt 220c ist ein gekrümmter Übergangsbereich 236c angeordnet. Der Griffgehäuseabschnitt 224c und der Antriebsgehäuseabschnitt 220c sind über den Übergangsbereich 236c verbunden. Jeweils ein Längsende des Griffgehäuseabschnitts 224c und des Antriebsgehäuseabschnitts 220c grenzt an den Übergangsbereich 236c. Der Antriebsgehäuseabschnitt 220c und der Übergangsbereich 236c sind teilweise einteilig ausgebildet. Der Griffgehäuseabschnitt 224c und der Übergangsbereich 236c sind teilweise einteilig ausgebildet. Der Antriebsgehäuseabschnitt 220c, der Übergangsbereich 236c und der Griffgehäuseabschnitt 224c sind teilweise einteilig ausgebildet. Der Übergangsbereich 236c umfasst einen konvex gekrümmten Außenbereich 238c. Der Übergangsbereich 236c umfasst einen sattelförmig gekrümmten Innenbereich 240c.

Die Gehäuseeinheit 218c weist ein Basisgehäuse 242c auf. Das Basisgehäuse 242c erstreckt sich über den Antriebsgehäuseabschnitt 220c. Das Basisgehäuse 242c erstreckt sich über den Griffgehäuseabschnitt 224c. Das Basisgehäuse 242c erstreckt sich über den Übergangsbereich 236c. Das Basisgehäuse 242c besteht zumindest zu einem Großteil aus einem Kunststoff, insbesondere einem Thermoplast. Das Basisgehäuse 242c besteht vollständig aus einem Kunststoff, insbesondere einem Thermoplast.

Das Basisgehäuse 242c ist zu einer Fixierung von Funktionselementen, insbesondere sämtlicher Funktionselemente des Antriebsmoduls 100c, vorgesehen. Das Basisgehäuse 242c ist zu einer Fixierung der Hauptplatine 204c vorgesehen. Das Basisgehäuse 242 ist zu einer Fixierung der Antriebseinheit 110c vorgesehen. Das Basisgehäuse 242c ist zu einer Fixierung der Getriebeeinheit 112c vorgesehen.

Das Basisgehäuse 242c weist einen Sichtbereich 248c, 250c auf. Der Sichtbereich 248c, 250c ist in einem montierten Zustand des Antriebsmoduls 100c sichtbar. Der Sichtbereich 248c, 250c erstreckt sich über den Antriebsgehäuseabschnitt 220c, insbesondere in dem montierten Zustand des Antriebsmoduls 100c an einer Unterseite des Antriebsgehäuseabschnitts 220c, vorzugsweise bezüglich der ersten Greifposition. Der Sichtbereich 248c, 250c erstreckt sich über den Griffgehäuseabschnitt 224c, insbesondere in dem montierten Zustand des Antriebsmoduls 100c an einer, vorzugsweise in der ersten Greifposition einem Nutzer abgewandten, Vorderseite des Griffgehäuseabschnitts 224c. Der Sichtbereich 248c, 250c erstreckt sich über den Übergangsbereich 236c, insbesondere den Innenbereich 240c des Übergangsbereichs 236c.

Das Basisgehäuse 242c weist einen Trägerbereich 252c, 254c auf. Der Trägerbereich 252c, 254c ist in dem montierten Zustand des Antriebsmoduls 100c verdeckt. Der Trägerbereich 252c, 254c erstreckt sich über den Antriebsgehäuseabschnitt 220c, insbesondere in dem montierten Zustand des Antriebsmoduls 100c an einer Oberseite des Antriebsgehäuseabschnitts 220c, vorzugsweise bezüglich der ersten Greifposition. Der Trägerbereich 252c, 254c erstreckt sich über den Griffgehäuseabschnitt 224c, insbesondere in dem montierten Zustand des Antriebsmoduls 100c an einer, vorzugsweise in der ersten Greifposition einem Nutzer zugewandten, Rückseite des Griffgehäuseabschnitts 224c. Der Trägerbereich 252c, 254c erstreckt sich über den Übergangsbereich 236c, insbesondere den Außenbereich 238c des Übergangsbereichs 236c.

Das Basisgehäuse 242c weist eine Gehäusestufe 256c, 258c auf. Der Sichtbereich 248c, 250c und der Trägerbereich 252c, 254c sind durch die Gehäusestufe 256c, 258c voneinander getrennt. Der Sichtbereich 248c, 250c erhebt sich an der Gehäusestufe 256c, 258c gegenüber dem Trägerbereich 252c, 254c.

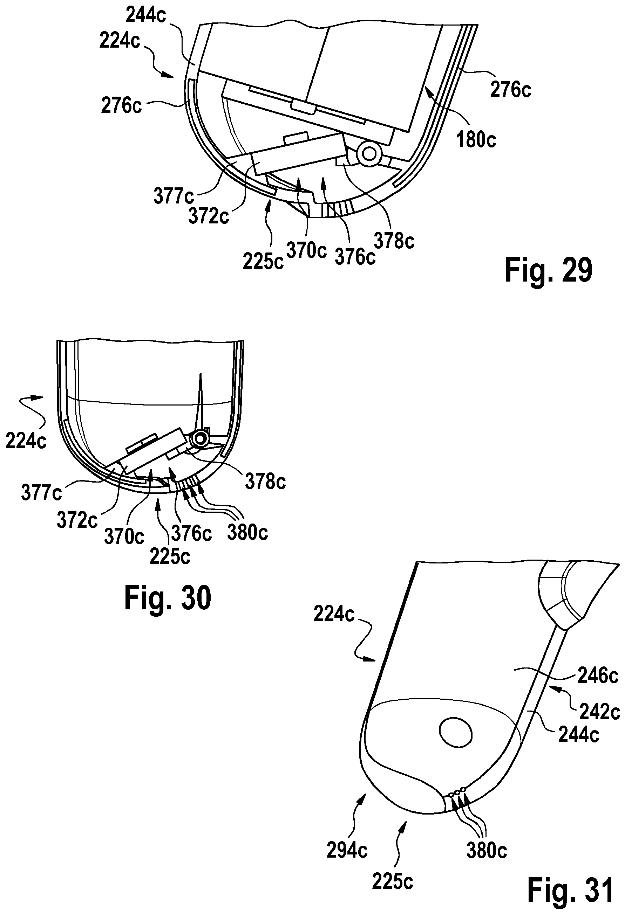

Das Basisgehäuse 242c ist mehrteilig ausgebildet. Das Basisgehäuse 242c ist zweiteilig ausgebildet. Das Basisgehäuse 242c umfasst ein erstes Basisgehäusebauteil 244c. Das erste Basisgehäusebauteil 244c besteht zumindest zu einem Großteil aus einem Kunststoff, insbesondere einem Thermoplast. Das erste Basisgehäusebauteil 244c besteht aus einem Kunststoff, insbesondere einem Thermoplast. Das erste Basisgehäusebauteil 244c ist als eine erste Halbschale ausgebildet. Das erste Basisgehäusebauteil 244c ist in dem montierten Zustand des Antriebsmoduls 100c ungefähr durch die Haupterstreckungsebene 102c des Antriebsmoduls 100c begrenzt. Das erste Basisgehäusebauteil 244c weist eine Mehrzahl an ersten Form- und/oder Reibschlusselementen 276c auf. Die ersten Form- und/oder Reibschlusselemente 276c sind in Figur 29 dargestellt. Die ersten Form- und/oder Reibschlusselemente 276c sind an einer Gehäusekante zwischen einer konkaven Gehäuseinnenseite und einer konvexen Gehäuseaußenseite des ersten Basisgehäusebauteils 244c angeordnet.

Das erste Basisgehäusebauteil 244c weist einen ersten Sichtbereich 248c auf. Das erste Basisgehäusebauteil 244c weist einen ersten Trägerbereich 252c auf. Der erste Sichtbereich 248c und der erste Trägerbereich 252c sind durch eine erste Gehäusestufe 256c voneinander getrennt. Der erste Sichtbereich 248c erhebt sich an der ersten Gehäusestufe 256c gegenüber dem ersten Trägerbereich 252c.

Das erste Basisgehäusebauteil 244c weist eine Mehrzahl an Aufnahmeelementen 260c, 262c, 264c, 266c auf. Das erste Basisgehäusebauteil 244c weist vier Aufnahmeelemente 260c, 262c, 264c, 266c auf. Ein erstes Aufnahmeelement 260c der Aufnahmeelemente 260c, 262c, 264c, 266c ist Teil eines das Ende 225c umfassenden letzten Drittels des Griffgehäuseabschnitts 224c. Das erste Aufnahmeelement 260c ist Teil des ersten Sichtbereichs 248c. Ein zweites Aufnahmeelement 262c der Aufnahmeelemente 260c, 262c, 264c, 266c ist Teil des Außenbereichs 238c des Übergangsbereichs 236c. Das zweite Aufnahmeelement 262c ist Teil des ersten Trägerbereichs 252c. Ein drittes Aufnahmeelement 264c der Aufnahmeelemente 260c, 262c, 264c, 266c ist Teil einer dem Übergangsbereich 236c abgewandten Hälfte des Antriebsgehäuseabschnitts 220c. Das dritte Aufnahmeelement 266c ist Teil des ersten Sichtbereichs 248c. Ein viertes Aufnahmeelement 266c der Aufnahmeelemente 260c, 262c, 264c, 266c ist Teil der dem Übergangsbereich 236c abgewandten Hälfte des Antriebsgehäuseabschnitts 220c. Das vierte Aufnahmeelement 266c ist Teil des ersten Trägerbereichs 252c.

Die Aufnahmeelemente 260c, 262c, 264c, 266c sind im Wesentlich form- und funktionsgleich ausgebildet. Beispielhaft ist im Folgenden das erste Aufnahmeelement 260c näher beschrieben. Die Merkmale des ersten Aufnahmeelements 260c gelten analog für das zweite Aufnahmeelement 262c, für das dritte Aufnahmeelement 264c und für das vierte Aufnahmeelement 266c.

Das erste Aufnahmeelement 260c ist als ein erster Schraubdom ausgebildet. Das erste Aufnahmeelement 260c ist in eine Gehäuseschale des ersten Basisgehäusebauteils 244c eingelassen. Das erste Aufnahmeelement 260c ist zu einer Aufnahme eines ersten Verbindungselements, insbesondere eines Bolzens und/oder einer Schraube, vorgesehen. Das erste Aufnahmeelement 260c umschließt eine erste Ausnehmung, welche im Wesentlichen eine Form eines Kreiszylinders aufweist. Die erste Ausnehmung ist, insbesondere in einem unmontierten Zustand des ersten Basisgehäusebauteils 244c, von einer Gehäuseinnenseite des ersten Basisgehäusebauteils 244c zugänglich.

Das Basisgehäuse 242c umfasst ein zweites Basisgehäusebauteil 246c. Das zweite Basisgehäusebauteil 246c besteht zumindest zu einem Großteil aus einem Kunststoff, insbesondere einem Thermoplast. Das zweite Basisgehäusebauteil 246c besteht aus einem Kunststoff, insbesondere einem Thermoplast. Das zweite Basisgehäusebauteil 246c ist als eine zweite Halbschale ausgebildet. Das zweite Basisgehäusebauteil 246c ist in dem montierten Zustand des Antriebsmoduls 100c ungefähr durch die Haupterstreckungsebene 102c des Antriebsmoduls 100c begrenzt. Das erste Basisgehäusebauteil 244c und das zweite Basisgehäusebauteil 246c sind im Wesentlichen spiegelsymmetrisch zueinander ausgebildet. Das zweite Basisgehäusebauteil 246c weist eine Mehrzahl an nicht näher gezeigten zweiten Form- und/oder Reibschlusselementen auf. Die zweiten Form- und/oder Reibschlusselemente sind an einer Gehäusekante zwischen einer konkaven Gehäuseinnenseite und einer konvexen Gehäuseaußenseite des zweiten Basisgehäusebauteils 246c angeordnet. Die zweiten Form- und/oder Reibschlusselemente korrespondieren zu den ersten Form- und/oder Reibschlusselementen 276c. Die ersten Form- und/oder Reibschlusselemente 276c und die zweiten Form- und/oder Reibschlusselemente sind zu einer reib- und/oder formschlüssigen Verbindung des ersten Basisgehäusebauteils 244c und des zweiten Basisgehäusebauteils 246c vorgesehen.

Das zweite Basisgehäusebauteil 246c weist einen zweiten Sichtbereich 250c auf. Das zweite Basisgehäusebauteil 246c weist einen zweiten Trägerbereich 254c auf. Der zweite Sichtbereich 250c und der zweite Trägerbereich 254c sind durch eine zweite Gehäusestufe 258c voneinander getrennt. Der zweite Sichtbereich 250c erhebt sich an der zweiten Gehäusestufe 258c gegenüber dem zweiten Trägerbereich 254c.

Das zweite Basisgehäusebauteil 246c weist eine Mehrzahl an weiteren Aufnahmeelementen 268c, 270c, 272c, 274c auf. Das zweite Basisgehäusebauteil 246c weist vier weitere Aufnahmeelemente 268c, 270c, 272c, 274c auf. Ein erstes weiteres Aufnahmeelement 268c der weiteren Aufnahmeelemente 268c, 270c, 272c, 274c ist Teil des das Ende 225c umfassenden letzten Drittels des Griffgehäuseabschnitts 224c. Das erste weitere Aufnahmeelement 268c ist Teil des zweiten Sichtbereichs 250c. Ein zweites weiteres Aufnahmeelement 270c der weiteren Aufnahmeelemente 268c, 270c, 272c, 274c ist Teil des Außenbereichs 238c des Übergangsbereichs 236c. Das zweite weitere Aufnahmeelement 270c ist Teil des zweiten Trägerbereichs 254c. Ein drittes weiteres Aufnahmeelement 272c der Aufnahmeelemente 268c, 270c, 272c, 274c ist Teil einer dem Übergangsbereich 236c abgewandten Hälfte des Antriebsgehäuseabschnitts 220c. Das dritte weitere Aufnahmeelement 272c ist Teil des zweiten Sichtbereichs 250c. Ein viertes weiteres Aufnahmeelement 274c der Aufnahmeelemente 268c, 270c, 272c, 274c ist Teil der dem Übergangsbereich 236c abgewandten Hälfte des Antriebsgehäuseabschnitts 220c. Das vierte weitere Aufnahmeelement 274c ist Teil des zweiten Trägerbereichs 254c.

Die weiteren Aufnahmeelemente 268c, 270c, 272c, 274c sind im Wesentlich form- und funktionsgleich ausgebildet. Beispielhaft ist im Folgenden das erste weitere Aufnahmeelement 268c näher beschrieben. Die Merkmale des ersten weiteren Aufnahmeelements 268c gelten analog für das zweite weitere Aufnahmeelement 270c, für das dritte weitere Aufnahmeelement 272c und für das vierte weitere Aufnahmeelement 274c.

Das erste weitere Aufnahmeelement 268c ist als ein erster weiterer Schraubdom ausgebildet. Das erste weitere Aufnahmeelement 268c ist in eine Gehäuseschale des zweiten Basisgehäusebauteils 246c eingelassen. Das erste weitere Aufnahmeelement 268c ist zu einer Aufnahme des ersten Verbindungselements, insbesondere eines ersten Schraubelements, vorgesehen. Das erste weitere Aufnahmeelement 268c korrespondiert zu dem ersten Aufnahmeelement 260c. Das erste weitere Aufnahmeelement 268c umschließt eine erste weitere Ausnehmung, welche im Wesentlichen eine Kreiszylinderform aufweist. Die erste weitere Ausnehmung ist, insbesondere in dem unmontierten Zustand des zweiten Basisgehäusebauteils 246c, von einer Gehäuseinnenseite des zweiten Basisgehäusebauteils 246c zugänglich. Die erste weitere Ausnehmung ist, insbesondere in dem unmontierten Zustand des zweiten Basisgehäusebauteils 246c, von einer Gehäuseaußenseite des zweiten Basisgehäusebauteils 246c zugänglich. Das erste Verbindungselement ist bei einer Montage durch die erste weitere Ausnehmung des ersten weiteren Aufnahmeelements 268c in die erste Ausnehmung des ersten Aufnahmeelements 260c einbringbar.

Der erste Sichtbereich 248c und der zweite Sichtbereich 250c bilden in einem verbundenen Zustand des ersten Basisgehäusebauteils 244c und des zweiten Basisgehäusebauteils 246c den Sichtbereich 248c, 250c des Basisgehäuses 242c aus. Der erste Trägerbereich 252c und der zweite Trägerbereich 254c bilden in einem verbundenen Zustand des ersten Basisgehäusebauteils 244c und des zweiten Basisgehäusebauteils 246c den Trägerbereich 252c, 254c des Basisgehäuses 242c aus. Die erste Gehäusestufe 256c und die zweite Gehäusestufe 258c bilden in einem verbundenen Zustand des ersten Basisgehäusebauteils 244c und des zweiten Basisgehäusebauteils 246c die Gehäusestufe 256c, 258c des Basisgehäuses 242c aus.

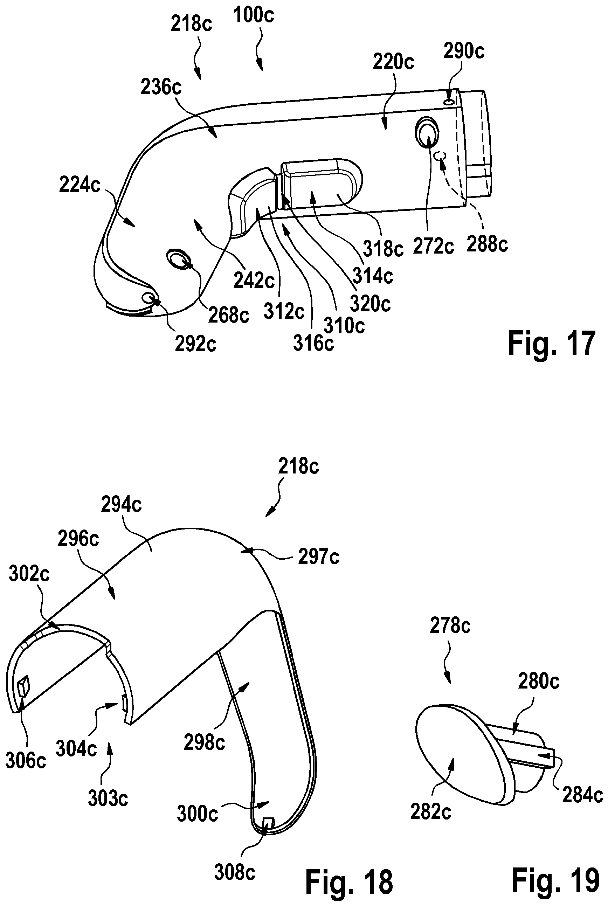

Das Basisgehäuse 242c weist eine erste Verkleidungseinheit 278c auf. Die erste Verkleidungseinheit 278c ist in den Figuren 11 und 19 dargestellt. Die erste Verkleidungseinheit 278c ist einstückig, insbesondere einteilig, ausgebildet. Die erste Verkleidungseinheit 278c ist als ein erster Stopfen ausgebildet. Die erste Verkleidungseinheit 278c ist dazu vorgesehen, das dritte weitere Aufnahmeelement 272c zu verkleiden und/oder zu bedecken. Die erste Verkleidungseinheit 278c ist dazu vorgesehen, das dritte weitere Aufnahmeelement 272c vor Verschmutzung zu schützen.

Die erste Verkleidungseinheit 278c umfasst einen ersten Grundkörper 280c. Die erste Verkleidungseinheit 278c umfasst ein erstes Abdeckelement 282c. Das erste Abdeckelement 282c weist eine erste gewölbte Ansichtsfläche auf. Die Wölbung der ersten Ansichtsfläche ist einer Wölbung des zweiten Basisgehäusebauteils 246c in einem Umgebungsbereich des ersten weiteren Aufnahmeelements 268c angepasst. Die erste Verkleidungseinheit 278c umfasst ein erstes Führungselement 284c. Das erste Führungselement 284c ist als eine Führungsrippe ausgebildet. Das erste Führungselement 284c ist als eine Montierrippe ausgebildet. Das erste Führungselement 284c ist dazu vorgesehen, die erste Verkleidungseinheit 278c bei einer Montage auf dem ersten weiteren Aufnahmeelement 268c in einer korrespondierenden Gehäuseausnehmung zu führen.

Das Basisgehäuse 242c weist eine zweite Verkleidungseinheit 286c auf. Die zweite Verkleidungseinheit 286c ist in Figur 11 dargestellt. Die zweite Verkleidungseinheit 286c entspricht im Wesentlichen der ersten Verkleidungseinheit 278c. Die zweite Verkleidungseinheit 286c ist dazu vorgesehen, das erste weitere Aufnahmeelement 268c zu verkleiden und/oder zu bedecken. Die zweite Verkleidungseinheit 286c ist dazu vorgesehen, das erste weitere Aufnahmeelement 268c vor Verschmutzung zu schützen. Die zweite Verkleidungseinheit 286c weist von der ersten Verkleidungseinheit 278c abweichende Maße auf. Eine zweite gewölbte Ansichtsfläche eines zweiten Abdeckelements der zweiten Verkleidungseinheit ist einer Wölbung des zweiten Basisgehäusebauteils 246c in einem Umgebungsbereich des dritten weiteren Aufnahmeelements 272c angepasst. Dadurch kann vorteilhaft eine schnelle Montage erreicht werden. Besonders vorteilhaft kann eine Fehlmontage einer Verkleidungseinheit verhindert werden.

Das Basisgehäuse 242c weist eine Mehrzahl an Ausnehmungen 288c, 290c, 292c auf. Die Ausnehmungen 288c, 290c, 292c sind in Figur 17 dargestellt. Das Basisgehäuse 242c weist drei Ausnehmungen 288c, 290c, 292c auf. Die Ausnehmungen 288c, 290c, 292c sind in den Trägerbereich 252c, 254c des Basisgehäuses 242c eingelassen. Eine erste Ausnehmung 288c der Ausnehmungen 288c, 290c, 292c ist in das erste Basisgehäusebauteil 244c eingelassen. Die erste Ausnehmung 288c ist in einem dem Übergangsbereich 236c abgewandten letzten Viertel des Antriebsgehäuseabschnitts 220c angeordnet. Eine zweite Ausnehmung 290c der Ausnehmungen 288c, 290c, 292c ist in das zweite Basisgehäusebauteil 246c eingelassen. Die zweite Ausnehmung 290c ist in dem dem Übergangsbereich 236c abgewandten letzten Viertel des Antriebsgehäuseabschnitts 220c angeordnet. Eine dritte Ausnehmung 292c der Ausnehmungen 288c, 290c, 292c ist jeweils zur Hälfte in das erste Basisgehäusebauteil 244c und in das zweite Basisgehäusebauteil 246c eingelassen. Die dritte Ausnehmung 292c ist an dem Ende 225c des Griffgehäuseabschnitts 224c angeordnet.

Das Antriebsmodul 100c weist zwei Sichtbauteile 294c, 350c auf. Die zwei Sichtbauteile 294c, 350c sind als metallicbeschichtete Sichtbauteile ausgebildet. Die zwei Sichtbauteile 294c, 350c sind als metallbeschichtete Sichtbauteile ausgebildet. Die zwei Sichtbauteile 294c, 350c sind als galvanobeschichtete Sichtbauteile ausgebildet.

Das Antriebsmodul 100c weist ein erstes Sichtbauteil 294c auf. Das erste Sichtbauteil ist in Figur 18 dargestellt. Das erste Sichtbauteil 294c ist als ein metallicbeschichtetes Sichtbauteil ausgebildet. Das erste Sichtbauteil 294c ist als ein metallbeschichtetes Sichtbauteil ausgebildet. Das erste Sichtbauteil 294c ist als ein galvanobeschichtetes Sichtbauteil ausgebildet.

Die Gehäuseeinheit 218c weist ein erstes Sichtbauteil 294c auf. Das erste Sichtbauteil 294c ist als ein Gehäuseaufsatz ausgebildet. Das erste Sichtbauteil 294c bedeckt in einem montierten Zustand den Trägerbereich 252c, 254c des Basisgehäuses 242c. Das erste Sichtbauteil 294c und der Sichtbereich 248c, 250c des Basisgehäuses 242c bilden einen Großteil einer Sichtfläche des Antriebsmoduls 100c aus. Eine Sichtfläche des ersten Sichtbauteils 294c entspricht zumindest 30 % der Sichtfläche des Antriebsmoduls 100c. Die Sichtfläche des ersten Sichtbauteils 294c entspricht höchstens 90 % der Sichtfläche des Antriebsmoduls 100c. Das erste Sichtbauteil 294c verdeckt in einem montierten Zustand zumindest eine Gehäuseverbindung. Das erste Sichtbauteil 294c verdeckt in dem montierten Zustand das zweite weitere Aufnahmeelement 270c. Das erste Sichtbauteil 294c verdeckt in dem montierten Zustand das vierte weitere Aufnahmeelement 274c. Das erste Sichtbauteil 294c ist dazu vorgesehen, das zweite weitere Aufnahmeelement 270c vor Verschmutzung zu schützen. Das erste Sichtbauteil 294c ist dazu vorgesehen, das vierte weitere Aufnahmeelement 274c vor Verschmutzung zu schützen.

Das erste Sichtbauteil 294c weist einen Grundkörper auf. Der Grundkörper des ersten Sichtbauteils 294c besteht aus einem Kunststoff, insbesondere aus einem Thermoplast und vorzugsweise aus ABS. Das erste Sichtbauteil 294c weist zumindest eine Metallicbeschichtung, insbesondere Metallbeschichtung, auf. Das erste Sichtbauteil 294c weist eine Mehrzahl an Metallbeschichtungen, insbesondere galvanischen Beschichtungen, auf. Das erste Sichtbauteil 294c weist eine matte Oberfläche auf. Das erste Sichtbauteil 294c weist beispielsweise eine roségoldene Oberfläche auf. Alternativ oder zusätzlich könnte ein Sichtbauteil eine glänzende und/oder eine weitere aufgeraute, beispielsweise gebürstete, Oberflächenstruktur und/oder eine Oberfläche in Silber, in Dunkelgrau-Silber, in Kupfer und/oder in weiteren Metallicfarbtönen aufweisen. Dadurch kann ein vorteilhafter visueller Eindruck ermöglicht werden.

Das erste Sichtbauteil 294c weist bezüglich einer Form mehrere Teilabschnitte auf. Das erste Sichtbauteil 294c weist einen ersten Abschnitt 296c auf. Der erste Abschnitt 296c weist einen hufeisenförmigen Querschnitt auf. Der erste Abschnitt 296c bildet, insbesondere in dem montierten Zustand des ersten Sichtbauteils 294c, einen Teil des Antriebsgehäuseabschnitts 220c aus. Ein in dem montierten Zustand des ersten Sichtbauteils 294c dem Übergangsbereich 236c abgewandtes Ende des ersten Sichtbauteils 294c weist eine Aussparung 302c auf.

Das erste Sichtbauteil 294c weist einen zweiten Abschnitt 298c auf. Der zweite Abschnitt 298c ist gewinkelt zu dem ersten Abschnitt 296c angeordnet. Eine Längserstreckungsachse des ersten Abschnitts 296c und eine Längserstreckungsachse des zweiten Abschnitts 298c schließen einen Winkel von zumindest 80° ein. Die Längserstreckungsachse des ersten Abschnitts 296c und die Längserstreckungsachse des zweiten Abschnitts 298c schließen einen Winkel von höchstens 170° ein. Die Längserstreckungsachse des ersten Abschnitts 296c und die Längserstreckungsachse des zweiten Abschnitts 298c schließen einen Winkel von ungefähr 107° ein. Der zweite Abschnitt 298c bildet, insbesondere in dem montierten Zustand des ersten Sichtbauteils 294c, einen Teil des Griffgehäuseabschnitts 224c aus.

Das erste Sichtbauteil 294c weist einen Übergangsabschnitt 297c zwischen dem ersten Abschnitt 296c und dem zweiten Abschnitt 298c auf. Der Übergangsabschnitt 297c bildet in dem montierten Zustand des ersten Sichtbauteils 294c einen Teil des Übergangsbereichs 236c der Gehäuseeinheit 218c aus. Der Übergangsabschnitt 297c bildet in dem montierten Zustand des ersten Sichtbauteils 294c einen Teil des Außenbereichs 238c des Übergangsbereichs 236c aus. Der Übergangsabschnitt 297c weist eine erste Öffnung auf. Der Übergangsabschnitt 297c weist eine zweite Öffnung auf.

Das erste Sichtbauteil 294c weist eine Nase 300c auf. Die Nase 300c schließt sich an ein Ende des zweiten Abschnitts 298c an. Die Nase 300c schließt das erste Sichtbauteil 294c ab. Die Nase 300c ist gekrümmt ausgebildet. Eine Spitze der Nase 300c bildet in dem montierten Zustand des ersten Sichtbauteils 294c das Ende 225c des Griffgehäuseabschnitts 224c aus.

Das erste Sichtbauteil 294c ist als ein Clipbauteil ausgebildet. Das erste Sichtbauteil 294c ist als ein abschließendes Clipbauteil ausgebildet. Das erste Sichtbauteil 294c ist zu einer Clipverbindung mit dem Basisgehäuse 242c vorgesehen. Das erste Sichtbauteil 294c weist eine Fixiereinheit 303c auf. Die Fixiereinheit 303c ist dazu vorgesehen, das erste Sichtbauteil 294c an dem Basisgehäuse 242c zu fixieren.

Die Fixiereinheit 303c umfasst ein erstes Fixierelement 304c. Das erste Fixierelement 304c ist als ein Rastelement, insbesondere Rasthaken, ausgebildet. Das erste Fixierelement 304c ist an dem ersten Abschnitt 296c angeordnet. Das erste Fixierelement 304c ist dazu vorgesehen, in die erste Ausnehmung 288c zu greifen, insbesondere einzurasten. Die Fixiereinheit 303c umfasst ein zweites Fixierelement 306c. Das zweite Fixierelement 306c ist als ein Rastelement, insbesondere Rasthaken, ausgebildet. Das zweite Fixierelement 306c ist an dem ersten Abschnitt 296c angeordnet. Das zweite Fixierelement 306c ist dazu vorgesehen, in die zweite Ausnehmung 290c zu greifen, insbesondere einzurasten. Die Fixiereinheit 303c umfasst ein drittes Fixierelement 308c. Das dritte Fixierelement 308c ist als ein Rastelement, insbesondere Rasthaken, ausgebildet. Das dritte Fixierelement 308c ist an der Nase 300c angeordnet. Das dritte Fixierelement 308c ist dazu vorgesehen, in die dritte Ausnehmung 292c zu greifen, insbesondere einzurasten.

Das Antriebsmodul 100c weist zwei Betätigungseinheiten 310c, 348c auf. Das Antriebsmodul 100c weist eine erste Betätigungseinheit 310c auf. Die erste Betätigungseinheit 310c ist beispielsweise in den Figuren 5 und 17 dargestellt. Die erste Betätigungseinheit 310c ist als eine Druckbetätigungseinheit ausgebildet. Die erste Betätigungseinheit 310c ist zu einer manuellen Einstellung zumindest eines Antriebsparameters der Antriebseinheit 110c vorgesehen. Der Antriebsparameter ist zumindest als eine Drehzahl ausgebildet. Alternativ oder zusätzlich könnte ein Antriebsparameter als ein Drehmoment, als eine Betriebsfunktion und/oder als ein Betriebsmodus ausgebildet sein.

Die erste Betätigungseinheit 310c ist teilweise in dem gekrümmten Übergangsbereich 236c zwischen dem Griffgehäuseabschnitt 224c und dem Antriebsgehäuseabschnitt 220c angeordnet. Die erste Betätigungseinheit 310c ist in dem Innenbereich 240c des Übergangsbereichs 236c angeordnet. Die erste Betätigungseinheit 310c ist teilweise in dem Antriebsgehäuseabschnitt 220c angeordnet. Die erste Betätigungseinheit 310c ist teilweise an der Unterseite des Antriebsgehäuseabschnitts 220c angeordnet. Die erste Betätigungseinheit 310c ist teilweise in dem Griffgehäuseabschnitt 224c angeordnet. Die erste Betätigungseinheit 310c ist teilweise an der Vorderseite des Griffgehäuseabschnitts 224c angeordnet.

Die erste Betätigungseinheit 310c weist zwei Betätigungsflächen 312c, 314c auf. Die erste Betätigungseinheit 310c weist eine erste Betätigungsfläche 312c auf. Die erste Betätigungsfläche 312c weist in zumindest einer Richtung betrachtet eine konkave Form auf. Die erste Betätigungsfläche 312c weist senkrecht zu der Haupterstreckungsebene 102c des Antriebsmoduls 100c betrachtet eine konkave Form auf. Die erste Betätigungsfläche 310c ist sattelförmig ausgebildet. Die erste Betätigungseinheit 310c weist eine zweite Betätigungsfläche 314c auf. Die zweite Betätigungsfläche 314c ist zumindest im Wesentlichen parallel zu einer Längserstreckungsachse 222c des Antriebsgehäuseabschnitts 220c. Die Betätigungsflächen 312c, 314c sind für grundsätzlich differierende Handhabungen vorgesehen.

Die erste Betätigungsfläche 312c ist für die erste Greifposition vorgesehen. Die erste Betätigungsfläche 312c ist für die weitere erste Greifposition vorgesehen. Die erste Betätigungsfläche 312c ist in der ersten Greifposition in Zeigefingerreichweite angeordnet. Die erste Betätigungsfläche 312c ist in der weiteren ersten Greifposition in Kleinfingerreichweite angeordnet. Die erste Betätigungsfläche 312c weist eine Längserstreckung von zumindest 2 cm auf. Die erste Betätigungsfläche 312c weist eine Quererstreckung von zumindest 1 cm auf.

Die zweite Betätigungsfläche 314c ist für die zweite Greifposition vorgesehen. Die zweite Betätigungsfläche 314c ist in der zweiten Greifposition in Daumenreichweite angeordnet. Die zweite Betätigungsfläche 314c ist für die weitere zweite Greifposition vorgesehen. Die zweite Betätigungsfläche 314c ist in der weiteren zweiten Greifposition in Zeigefingerreichweite angeordnet. Die zweite Betätigungsfläche 314c weist eine Längserstreckung von zumindest 2 cm auf. Die zweite Betätigungsfläche 314c weist eine Quererstreckung von zumindest 1 cm auf.

Die erste Betätigungseinheit 310c weist ein erstes Betätigungselement 316c auf. Das erste Betätigungselement 316c ist teilweise in dem Griffgehäuseabschnitt 224c, insbesondere an einem Ende des Griffgehäuseabschnitts 224c, angeordnet. Das erste Betätigungselement 316c ist teilweise in dem Übergangsbereich 236c angeordnet. Das erste Betätigungselement 316c ist in die Gehäuseeinheit 218c eingelassen. Das erste Betätigungselement 316c ist in das Basisgehäuse 242c eingelassen. Das erste Betätigungselement 316c ist zwischen das erste Basisgehäusebauteil 244c und das zweite Basisgehäusebauteil 246c eingelassen. Das erste Betätigungselement 316c ist in zumindest einer Greifposition in Zeigefingerreichweite angeordnet. Das erste Betätigungselement 316c ist der ersten Greifposition in Zeigefingerreichweite angeordnet. Figur 22 zeigt das erste Betätigungselement 316c in einem betätigten Zustand.

Das erste Betätigungselement 316c ist zungenförmig ausgebildet. Das erste Betätigungselement 316c weist die erste Betätigungsfläche 312c auf. Die erste Betätigungsfläche 312c erhebt sich gegenüber der Gehäuseeinheit 218c um zumindest 2 mm. Die erste Betätigungsfläche 312c erhebt sich gegenüber der Gehäuseeinheit 218c um ungefähr 4 mm.

Das erste Betätigungselement 316c ist als ein Schalter, insbesondere ein Druckschalter und/oder ein Gasgebeschalter, ausgebildet. Ein zunehmender Betätigungsdruck auf das erste Betätigungselement 316c bewirkt eine zunehmende Drehzahl der Antriebseinheit 110c.

Die erste Betätigungseinheit 310c weist ein weiteres erstes Betätigungselement 318c auf. Das weitere erste Betätigungselement 318c ist in dem Antriebsgehäuseabschnitt 220c angeordnet. Das weitere erste Betätigungselement 318c ist in die Gehäuseeinheit 218c eingelassen. Das weitere erste Betätigungselement 318c ist in das Basisgehäuse 242c eingelassen. Das weitere erste Betätigungselement 318c ist zwischen das erste Basisgehäusebauteil 244c und das zweite Basisgehäusebauteil 246c eingelassen. Das weitere erste Betätigungselement 318c ist in zumindest einer Greifposition in Zeigefingerreichweite angeordnet. Das weitere erste Betätigungselement 318c ist in der weiteren zweiten Greifposition in Zeigefingerreichweite angeordnet. Figur 25 zeigt das weitere erste Betätigungselement 318c in einem betätigten Zustand.

Das weitere erste Betätigungselement 318c ist zungenförmig ausgebildet. Das weitere erste Betätigungselement 318c weist die zweite Betätigungsfläche 314c auf. Die zweite Betätigungsfläche 314c erhebt sich gegenüber der Gehäuseeinheit 218c um zumindest 2 mm. Die zweite Betätigungsfläche 314c erhebt sich gegenüber der Gehäuseeinheit 218c um ungefähr 4 mm.

Ein kuppenförmiges Längsende des ersten Betätigungselements 316c und ein kuppenförmiges Längsende des weiteren ersten Betätigungselements 318c sind einander zugewandt angeordnet. Ein flaches Längsende des ersten Betätigungselements 316c und ein flaches Längsende des weiteren ersten Betätigungselements 318c sind einander abgewandt angeordnet.

Das weitere erste Betätigungselement 318c ist als ein Schalter, insbesondere ein Druckschalter und/oder ein Gasgebeschalter, ausgebildet. Ein zunehmender Betätigungsdruck auf das weitere erste Betätigungselements 318c bewirkt eine zunehmende Drehzahl der Antriebseinheit 110c. Das weitere erste Betätigungselement 318c ist redundant zu dem ersten Betätigungselement 316c. Das weitere erste Betätigungselement 318c ist funktionsredundant zu dem ersten Betätigungselement 316c.

Das Antriebsmodul 100c weist ein Trennelement 320c auf. Der gekrümmte Übergangsbereich 236c weist das Trennelement 320c auf. Das Trennelement 320c ist als eine Erhebung des gekrümmten Übergangsbereichs 236c ausgebildet. Das Trennelement 320c ist als eine Trennrippe ausgebildet. Das Trennelement 320c ist zwischen dem ersten Betätigungselement 316c und dem weiteren ersten Betätigungselement 318c angeordnet. Das Trennelement 320c trennt das erste Betätigungselement 316c und das weitere erste Betätigungselement 318c voneinander.

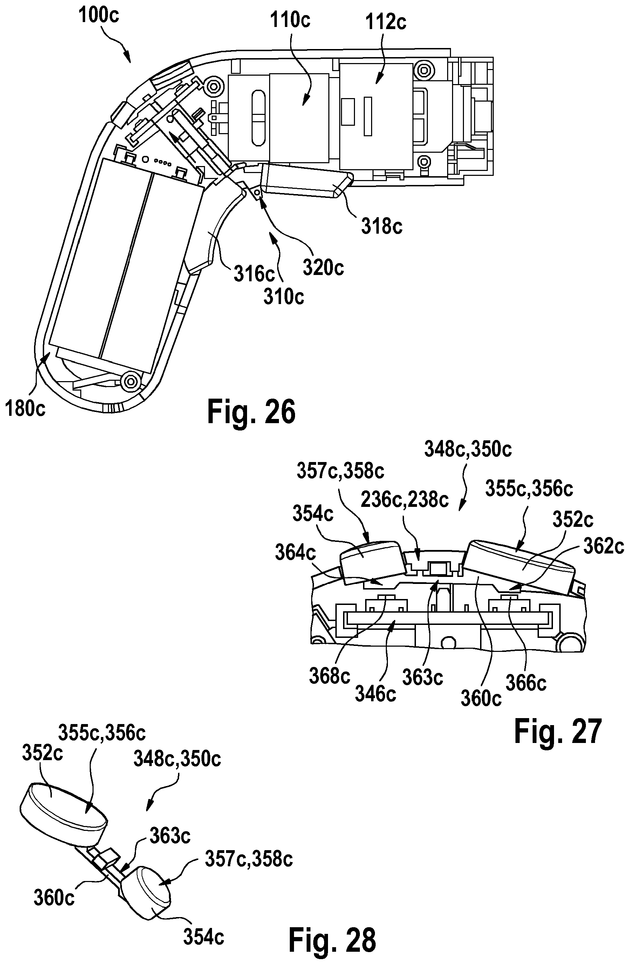

Figur 26 zeigt das erste Betätigungselement 316c und das weitere erste Betätigungselement 318c in einem betätigten Zustand. In dem betätigten Zustand des ersten Betätigungselements 316c und des weiteren ersten Betätigungselements 318c erhebt sich das Trennelement 320c über das erste Betätigungselement 316c und über das weitere erste Betätigungselement 318c. In dem betätigten Zustand des ersten Betätigungselements 316c und des weiteren ersten Betätigungselements 318c erschwert das Trennelement 320c eine Betätigung des ersten Betätigungselement 316c und/oder des weiteren ersten Betätigungselements 318c.

Das Antriebsmodul 100c weist ein Schaltelement 326c auf. Das Schaltelement 326c ist beispielsweise in Figur 5 dargestellt. Das Schaltelement 326c ist stiftförmig ausgebildet. Das Schaltelement 326c ist als ein, insbesondere federvorgespannter, Stößel ausgebildet. Das Schaltelement 326c ist entlang einer Längsachse des Schaltelements 326c bewegbar gelagert. Das Schaltelement 326c ist über die Betätigungsflächen 312c, 314c der ersten Betätigungseinheit 310c gleichermaßen betätigbar. Die Betätigungsflächen 312c, 314c sind funktionsredundant. Das Schaltelement 326c ist über das erste Betätigungselement 316c und über das weitere erste Betätigungselement 318c gleichermaßen betätigbar. Das Schaltelement 326c ist mit dem ersten Betätigungselement 316c und mit dem weiteren ersten Betätigungselement 318c gekoppelt.

Das Antriebsmodul 100c weist ein Federelement 328c auf. Das Federelement 328c ist als ein Druckfederelement ausgebildet. Das Federelement 328c ist als eine Schraubenfeder ausgebildet. Eine Längserstreckungsachse des Federelements 328c entspricht einer Längserstreckungsachse des Schaltelements 326c. Das Federelement 328c umgibt das Schaltelement 326c teilweise. Das Federelement 328c windet sich um das Schaltelement 326c. Das Federelement 328c ist dazu vorgesehen, eine Rückstellkraft auf das Schaltelement 326c auszuüben.

Das Antriebsmodul 100c weist eine elektrische Baugruppe 344c auf. Die Baugruppe 344c ist senkrecht zu der Haupterstreckungsebene 102c des Antriebsmoduls 100c betrachtet in einem Schnittpunkt der Längserstreckungsachse 222c des Antriebsgehäuseabschnitts 220c und der Längserstreckungsachse 226c des Griffgehäuseabschnitts 224c angeordnet. Die Baugruppe 344c ist als ein Potentiometer ausgebildet. Die Baugruppe 344c ist dazu vorgesehen, zumindest einen elektrischen Widerstand in Abhängigkeit einer mechanischen Bewegung des Schaltelements 326c zu beeinflussen. Die Baugruppe 344c ist dazu vorgesehen, eine mechanische Bewegung des Schaltelements 326c in ein elektrisches Signal, insbesondere Steuersignal, umzuwandeln.

In dem in Figur 22 gezeigten betätigten Zustand des ersten Betätigungselements 316c ist das Schaltelement 326c in Richtung der elektrischen Baugruppe 344c verschoben. In dem betätigten Zustand des ersten Betätigungselements 316c wirkt das Schaltelement 326c auf die elektrische Baugruppe 344c ein. In dem in Figur 25 gezeigten betätigten Zustand des weiteren ersten Betätigungselements 318c ist das Schaltelement 326c in Richtung der elektrischen Baugruppe 344c verschoben. In dem betätigten Zustand des weiteren ersten Betätigungselements 318c wirkt das Schaltelement 326c auf die elektrische Baugruppe 344c ein. In dem in Figur 26 gezeigten betätigten Zustand des ersten Betätigungselements 316c und des weiteren ersten Betätigungselements 318c ist das Schaltelement 326c in Richtung der elektrischen Baugruppe 344c verschoben. In dem betätigten Zustand des ersten Betätigungselements 316c und des weiteren ersten Betätigungselements 318c wirkt das Schaltelement 326c auf die elektrische Baugruppe 344c ein.

Das Antriebsmodul 100c weist ein Blattfederelement 322c auf. Das Blattfederelement 322c ist als ein Federblech ausgebildet. Das Blattfederelement 322c ist dazu vorgesehen, eine Rückstellkraft auf das erste Betätigungselement 316c auszuüben. Das Blattfederelement 322c ist dazu vorgesehen, das erste Betätigungselement 316c aus der Gehäuseeinheit 218c zu drücken. Das Blattfederelement 322c ist dazu vorgesehen, das erste Betätigungselement 316c an der Gehäuseeinheit 218c, insbesondere an dem Griffgehäuseabschnitt 224c, zu fixieren.

Das Antriebsmodul 100c weist ein weiteres Blattfederelement 323c auf. Das weitere Blattfederelement 323c ist als weiteres Federblech ausgebildet. Das weitere Blattfederelement 323c ist dazu vorgesehen, eine Rückstellkraft auf das weitere erste Betätigungselement 318c auszuüben. Das weitere Blattfederelement 323c ist dazu vorgesehen, das weitere erste Betätigungselement 318c aus der Gehäuseeinheit 218c zu drücken. Das weitere Blattfederelement 323c ist dazu vorgesehen, das weitere erste Betätigungselement 318c an der Gehäuseeinheit 218c, insbesondere an dem Griffgehäuseabschnitt 224c, zu fixieren.

Das Antriebsmodul 100c weist eine zweite Betätigungseinheit 348c auf. Die zweite Betätigungseinheit 348c ist beispielsweise in den Figuren 27 und 28 dargestellt. Die zweite Betätigungseinheit 348c ist als eine Druckbetätigungseinheit ausgebildet. Die zweite Betätigungseinheit 348c ist zu einer manuellen Betätigung der Antriebseinheit 110c vorgesehen.

Die zweite Betätigungseinheit 348c weist ein zweites Betätigungselement 352c auf. Das zweite Betätigungselement 352c ist in dem gekrümmten Übergangsbereich 236c angeordnet. Das zweite Betätigungselement 352c ist in dem Außenbereich 238c des gekrümmten Übergangsbereichs 236c angeordnet. Das zweite Betätigungselement 352c ist in die Gehäuseeinheit 218c eingelassen. Das zweite Betätigungselement 352c ist zwischen das erste Basisgehäusebauteil 244c und das zweite Basisgehäusebauteil 246c eingelassen. Das zweite Betätigungselement 352c ist in die erste Öffnung des Übergangsabschnitts des ersten Sichtbauteils 294c eingelassen.

Das zweite Betätigungselement 352c ist in der ersten Greifposition in Daumenreichweite angeordnet. Das zweite Betätigungselement 352c ist in der weiteren zweiten Greifposition in Daumenreichweite angeordnet. Das zweite Betätigungselement 352c ist zu einer manuellen Auswahl der Betriebsmodi vorgesehen. Das zweite Betätigungselement 352c weist im Wesentlichen eine Form eines Kreiszylinders auf. Das zweite Betätigungselement 352c weist eine konvexe Betätigungsfläche 356c auf.

Die zweite Betätigungseinheit 348c weist ein zusätzliches zweites Betätigungselement 354c auf. Das zusätzliche zweite Betätigungselement 354c ist in dem gekrümmten Übergangsbereich 236c angeordnet. Das zusätzliche zweite Betätigungselement 354c ist in dem Außenbereich 238c des Übergangsbereichs 236c angeordnet. Das zusätzliche zweite Betätigungselement 354c ist in die Gehäuseeinheit 218c eingelassen. Das zusätzliche zweite Betätigungselement 354c ist zwischen das erste Basisgehäusebauteil 244c und das zweite Basisgehäusebauteil 246c eingelassen. Das zusätzliche zweite Betätigungselement 354c ist in die zweite Öffnung des Übergangsabschnitts des ersten Sichtbauteils 294c eingelassen.

Das zusätzliche zweite Betätigungselement 354c ist in der ersten Greifposition in Daumenreichweite angeordnet. Das zusätzliche zweite Betätigungselement 354c ist in der weiteren zweiten Greifposition in Daumenreichweite angeordnet. Das zusätzliche zweite Betätigungselement 354c ist zu einem manuellen Einschalten des Antriebsmoduls 100c vorgesehen. Das zusätzliche zweite Betätigungselement 354c ist zu einem manuellen Ausschalten des Antriebsmoduls 100c vorgesehen. Das zusätzliche zweite Betätigungselement 354c weist im Wesentlichen eine Form eines Kreiszylinders auf. Das zusätzliche zweite Betätigungselement 354c weist eine konvexe Betätigungsfläche 358c auf.

Die zweite Betätigungseinheit 348c ist einteilig ausgebildet. Das zweite Betätigungselement 352c und das zusätzliche zweite Betätigungselement 354c sind unlösbar verbunden. Das zweite Betätigungselement 352c und das zusätzliche zweite Betätigungselement 354c sind einstückig, insbesondere einteilig, ausgebildet.

Die zweite Betätigungseinheit 348c weist ein Verbindungselement 360c auf. Das Verbindungselement 360c ist in dem Übergangsbereich 236c angeordnet. Das Verbindungselement 360c ist in dem Außenbereich 238c des Übergangsbereichs 236c angeordnet. Das Verbindungselement 360c ist mit dem zweiten Betätigungselement 352c unlösbar verbunden. Das Verbindungselement 360c und das zweite Betätigungselement 352c sind einstückig, insbesondere einteilig, ausgebildet. Das Verbindungselement 360c ist mit dem zusätzlichen zweiten Betätigungselement 354c unlösbar verbunden. Das Verbindungselement 360c und das zusätzliche zweite Betätigungselement 354c sind einstückig, insbesondere einteilig, ausgebildet. Das Verbindungselement 360c weist eine erste Auswölbung 362c auf. Die erste Auswölbung 362c ist an einem dem zweiten Betätigungselement 352c zugewandten Ende des Verbindungselements 360c angeordnet. Das Verbindungselement 360c weist eine zweite Auswölbung 364c auf. Die zweite Auswölbung 364c ist an einem dem zusätzlichen zweiten Betätigungselement 354c zugewandten Ende des Verbindungselements 360c angeordnet. Das Verbindungselement 360c weist einen Mittelsteg 363c auf. Der Mittelsteg 363c verbindet die erste Auswölbung 362c und die zweite Auswölbung 364c. Der Mittelsteg 363c ist schwenkbar angeordnet.

Das Antriebsmodul 100c umfasst eine Nebenplatine 346c. Die Nebenplatine 346c ist innerhalb des Übergangsbereichs 236c angeordnet. Eine Haupterstreckungsebene der Nebenplatine 346c ist senkrecht zu der Haupterstreckungsebene 206c der Hauptplatine 204c angeordnet. Die Nebenplatine 346c ist mit dem Mittelsteg 363c gekoppelt. Die Nebenplatine 346c weist einen ersten Schalter 366c auf. Der erste Schalter 366c ist als Druckschalter ausgebildet. Der erste Schalter 366c ist als Mikroschalter ausgebildet. Der erste Schalter 366c ist mittels der ersten Auswölbung 362c betätigbar. Der erste Schalter 366c ist mittels des zweiten Betätigungselements 352c betätigbar. Die Nebenplatine 346c weist einen zweiten Schalter 368c auf. Der zweite Schalter 368c ist als Druckschalter ausgebildet. Der zweite Schalter 368c ist als Mikroschalter ausgebildet. Der zweite Schalter 368c ist mittels der zweiten Auswölbung 364c betätigbar. Der zweite Schalter 368c ist mittels des zusätzlichen zweiten Betätigungselements 354c betätigbar. Die Nebenplatine 346c ist mit der Baugruppe 344c verbunden. Die Baugruppe 344c ist auf der Nebenplatine 346c befestigt.

Das Antriebsmodul 100c weist ein zweites Sichtbauteil 350c auf. Das zweite Sichtbauteil 350c umfasst das zusätzliche zweite Betätigungselement 354c. Das zweite Sichtbauteil 350c umfasst das Verbindungselement 360c. Das zweite Sichtbauteil 350c ist als das zweite Betätigungselement 352c, als das zusätzliche zweite Betätigungselement 354c und als das Verbindungselement 360c ausgebildet. Das erste Sichtbauteil 294c umschließt das zweite Sichtbauteil 350c. Das zweite Sichtbauteil 350c weist zwei voneinander getrennte Teilsichtflächen 355c, 357c auf. Eine erste Teilsichtfläche 355c der Teilsichtflächen 355c, 357c umfasst die erste Betätigungsfläche 356c. Eine zweite Teilsichtfläche 357c der Teilsichtflächen 355c, 357c umfasst die zweite Betätigungsfläche 358c. Das zweite Sichtbauteil 350c umfasst das zweite Betätigungselement 352c.

Das zweite Sichtbauteil 350c ist als ein metallicbeschichtetes Sichtbauteil ausgebildet. Das zweite Sichtbauteil 350c ist als ein metallbeschichtetes Sichtbauteil ausgebildet. Das zweite Sichtbauteil 350c ist als ein galvanobeschichtetes Sichtbauteil ausgebildet. Das zweite Sichtbauteil 350c weist einen Grundkörper auf. Der Grundkörper des zweiten Sichtbauteils 350c besteht aus einem Kunststoff, insbesondere aus einem Thermoplast und vorzugsweise aus ABS. Das zweite Sichtbauteil 350c weist zumindest eine Metallicbeschichtung, insbesondere Metallbeschichtung, auf. Das zweite Sichtbauteil 350c weist eine Mehrzahl an Metallbeschichtungen, insbesondere galvanischen Beschichtungen, auf. Das zweite Sichtbauteil 350c weist eine glänzende Oberfläche auf. Das zweite Sichtbauteil 350c weist beispielsweise eine roségoldene Oberfläche auf. Alternativ oder zusätzlich könnte ein Sichtbauteil eine aufgeraute, beispielsweise matte und/oder gebürstete, Oberflächenstruktur und/oder eine Oberfläche in Silber, in Dunkelgrau-Silber, in Kupfer und/oder in weiteren Metallicfarbtönen aufweisen. Dadurch kann ein vorteilhafter visueller Eindruck ermöglicht werden.

Das Antriebsmodul 100c weist eine Informationsausgabeeinheit 370c auf. Die Informationsausgabeeinheit 370c ist in den Figuren 29 und 30 dargestellt. Die Informationsausgabeeinheit 370c weist ein Soundmodul 372c auf. Das Soundmodul 372c ist innerhalb des Griffgehäuseabschnitts 224c an dem Ende 225c des Griffgehäuseabschnitts 224c angeordnet. Das Soundmodul 372c ist an einer Gehäuseinnenseite angeordnet. Das Soundmodul 372c ist als ein Lautsprecher ausgebildet. Das Soundmodul 372c weist im Wesentlichen eine Form eines Kreiszylinders auf.

Das Basisgehäuse 242c weist eine Fixiereinheit 376c auf. Die Fixiereinheit 376c ist dazu vorgesehen, das Soundmodul 372c zu fixieren. Die Fixiereinheit 376c weist ein Fixierelement 377c auf. Das Fixierelement 377c umgreift eine Kante des Soundmoduls 372c. Die Fixiereinheit 376c weist ein weiteres Fixierelement 378c auf. Das weitere Fixierelement 378c umgreift die Kante des Soundmoduls 372c. Das Fixierelement 377c und das weitere Fixierelement 378c wirken zu einer Fixierung des Soundmoduls 372c zusammen.

Die Informationsausgabeeinheit 370c weist einen nicht näher dargestellten Verstärker auf. Der Verstärker ist auf der Hauptplatine 204c angeordnet. Die Informationsausgabeeinheit 370c weist einen nicht näher dargestellten Soundprozessor auf. Der Soundprozessor ist auf der Hauptplatine 204c angeordnet. Der Soundprozessor ist zu einer Ansteuerung des Verstärkers und/oder des Lautsprechers vorgesehen.

In die Gehäuseeinheit 218c ist eine Mehrzahl an Schallöffnungen 380c eingelassen. Die Schallöffnungen 380c sind in den Figuren 29 bis 31/ dargestellt. In die Gehäuseeinheit 218c sind drei Schallöffnungen 380c eingelassen. Die Haupterstreckungsebene 102c des Antriebsmoduls 100c schneidet die Schallöffnungen 380c. Die Schallöffnungen 380c sind zwischen das erste Basisgehäusebauteil 244c und das zweite Basisgehäusebauteil 246c eingelassen. Die Schallöffnungen 380c sind dazu vorgesehen, einen von dem Soundmodul 372c emittierten Schall von einem Gehäuseinnenbereich der Gehäuseeinheit 218c an einen Umgebungsbereich des Antriebsmoduls 100c zu leiten. Die Schallöffnungen 380c strahlen nach einer von einem Benutzer abgewandten Seite des Endes 225c des Griffgehäuseabschnitts 224c ab.

Die Informationsausgabeeinheit 370c ist zu einer akustischen Informationsausgabe vorgesehen. Die Informationsausgabeeinheit 370c ist dazu vorgesehen, zumindest drei, insbesondere zumindest vier und vorteilhaft zumindest fünf, voneinander verschiedene Informationen auszugeben. Die Informationen sind als Tonfolgen ausgebildet. Die Informationsausgabeeinheit 370c ist dazu vorgesehen, zumindest eine Einschaltinformation auszugeben. Die Einschaltinformation informiert einen Bediener über ein Einschalten des Antriebsmoduls 100c und/oder der Antriebseinheit 110c. Die Informationsausgabeeinheit 370c ist dazu vorgesehen, zumindest eine Ausschaltinformation auszugeben. Die Ausschaltinformation informiert einen Bediener über ein Ausschalten des Antriebsmoduls 100c und/oder der Antriebseinheit 110c.

Die Informationsausgabeeinheit 370c ist dazu vorgesehen, zumindest eine Ladekabelverbindungsinformation auszugeben. Die Ladekabelverbindungsinformation informiert einen Bediener über eine Kopplung und/oder eine Entkopplung eines nicht näher dargestellten Ladekabels und des Antriebsmoduls 100c. Das Ladekabel ist zu einem Laden der Energiespeichereinheit 180c vorgesehen. Die Informationsausgabeeinheit 370c ist dazu vorgesehen, zumindest eine Ladeinformation der Energiespeichereinheit 180c auszugeben. Die Ladeinformation der Energiespeichereinheit 180c informiert einen Bediener über einen Ladestand der Energiespeichereinheit 180c. Eine beispielhafte Ladeinformation der Energiespeichereinheit 180c kann ein abgeschlossener Ladevorgang der Energiespeichereinheit 180c sein.

Die Informationsausgabeeinheit 370c ist dazu vorgesehen, zumindest eine Moduswechselinformation auszugeben. Die Moduswechselinformation informiert einen Bediener über einen Wechsel eines Betriebsmodus der Antriebseinheit 110c. Das zweite Betätigungselement 352c ist zu einem Wechseln des Betriebsmodus der Antriebseinheit 110c vorgesehen.

Die Informationsausgabeeinheit 370c ist dazu vorgesehen, zumindest eine Montageinformation auszugeben. Die Montageinformation informiert einen Bediener über eine Kopplung des Antriebsmoduls 100c und des Aufsatzmoduls 400c, 480c. Die Montageinformation ist abhängig von einer Art des Aufsatzmoduls 400c, 480c. Die Informationsausgabeeinheit 370c ist dazu vorgesehen, zumindest eine Demontageinformation auszugeben. Die Demontageinformation informiert einen Bediener über eine Entkopplung des Antriebsmoduls 100c und des Aufsatzmoduls 400c, 480c. Die Demontageinformation ist abhängig von einer Art des Aufsatzmoduls 400c, 480c.

Die Informationsausgabeeinheit 370c ist dazu vorgesehen, zumindest eine Fehlerinformation auszugeben. Die Fehlerinformation informiert einen Bediener über einen Bedien- und/oder Betriebsfehler. Ein beispielhafter Bedienfehler kann ein Betätigen eines Betätigungselements 316c, 318c, 352c in einem ungekoppelten Zustand des Antriebsmoduls 100c sein. Ein beispielhafter Betriebsfehler kann eine zu geringe Restkapazität der Energiespeichereinheit 180c sein.
Das Werkzeugmodulsystem 10c weist ein Aufsatzmodul 400c auf. Das Aufsatzmodul 400c ist in Figur 33 dargestellt. Das Werkzeugmodulsystem 10c weist ein Werkzeugmodul auf. Das Aufsatzmodul 400c ist als das Werkzeugmodul ausgebildet. Das Aufsatzmodul 400c ist als ein Schraubermodul, insbesondere Schraubendrehermodul, ausgebildet. Das Aufsatzmodul 400c ist mit dem Antriebsmodul 100c koppelbar. Das Werkzeugmodul ist mit dem Antriebsmodul 100c koppelbar.

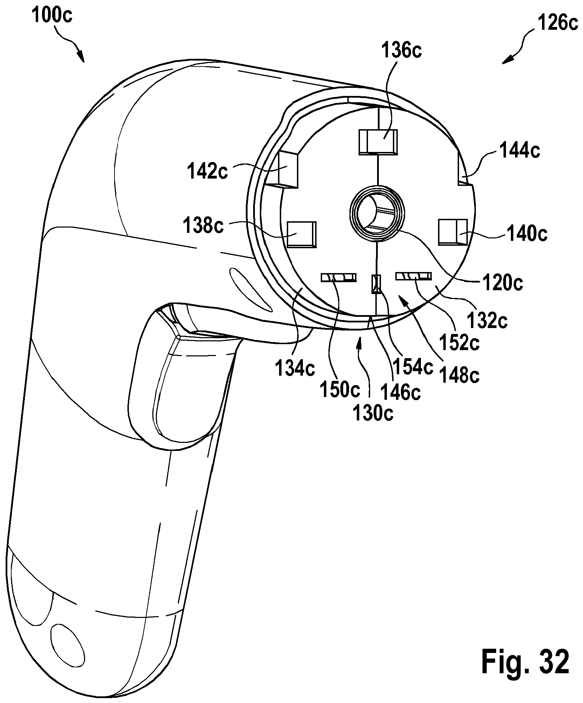

Das Antriebsmodul 100c weist eine in Figur 32 dargestellte mechanische Antriebsschnittstelle 130c auf. Das Aufsatzmodul 400c weist eine mechanische Aufsatzschnittstelle 406c auf. Die mechanische Aufsatzschnittstelle 406c ist mit der mechanischen Antriebsschnittstelle 130c koppelbar.

Das Antriebsmodul 100c weist eine elektrische Antriebsschnittstelle 148c auf. Das Aufsatzmodul 400c weist eine elektrische Aufsatzschnittstelle 422c auf. Die elektrische Aufsatzschnittstelle 422c ist mit der elektrischen Antriebsschnittstelle 148c koppelbar.

Das erste Sichtbauteil 294c weist in einem gekoppelten Zustand des Antriebsmoduls 100c und des Aufsatzmoduls 400c einen Abstand von höchstens 20 mm zu einer Kopplungsnaht zwischen der mechanischen Antriebsschnittstelle 130c und der mechanischen Aufsatzschnittstelle 406c auf. Das erste Sichtbauteil 294c grenzt in dem gekoppelten Zustand des Antriebsmoduls 100c und des Aufsatzmoduls 400c direkt an die Kopplungsnaht zwischen der mechanischen Antriebsschnittstelle 130c und der mechanischen Aufsatzschnittstelle 406c.

Das Werkzeugmodulsystem 10c weist ein weiteres Aufsatzmodul 480c auf. Das weitere Aufsatzmodul 480c ist in den Figuren 20, 21, 23 und 24 dargestellt. Das weitere Aufsatzmodul 480c ist als ein weiteres Werkzeugmodul ausgebildet. Das weitere Aufsatzmodul 480c ist als ein Küchenwerkzeugmodul ausgebildet. Das weitere Aufsatzmodul 480c ist als ein Aufschäumermodul, insbesondere Milchaufschäumermodul, ausgebildet.

Im Folgenden soll der Begriff "Werkzeugbasismodul" synonym zu "Antriebsbasismodul" und "Antriebsmodul" verstanden werden. Ferner soll der Begriff "Aufsatzvorrichtung" synonym zu "Aufsatzmodul" verstanden werden. Des Weiteren soll der Begriff "Verbindungsvorrichtung" synonym zu "Koppelvorrichtung" verstanden werden. Zudem soll der Begriff "Schnittstelle", insbesondere eines Werkzeugbasismoduls, synonym zu "Antriebsschnittstelle", insbesondere eines Antriebsmoduls, verstanden werden. Darüber hinaus soll der Begriff "Schnittstelle", insbesondere einer Aufsatzvorrichtung, synonym zu "Aufsatzschnittstelle", insbesondere eines Aufsatzmoduls, verstanden werden. Ferner soll der Begriff "Steuer- und/oder Regeleinheit" synonym zu "Elektronikeinheit" verstanden werden.

Figur 32 zeigt eine perspektivische Ansicht des Werkzeugbasismoduls 100c ohne die Aufsatzvorrichtung 400c. Das Werkzeugbasismodul 100c umfasst eine Koppelvorrichtung 126c, die eine mechanische Schnittstelle 130c zu einer antriebstechnischen mechanischen Anbindung der Aufsatzvorrichtung 400c an der Hauptabtriebswelle 118c aufweist. Die Aufsatzvorrichtung 400c weist eine zu der mechanischen Schnittstelle 130c korrespondierende mechanische Schnittstelle 406c (vgl. Fig. 33) auf. Das Werkzeugbasismodul 100c weist ferner die Hauptabtriebswelle 118c mit der Wellenaufnahme 120c auf. Die Wellenaufnahme 120c ist vorzugsweise einstückig mit einer Hauptabtriebswelle 118c des Werkzeugbasismoduls 100c ausgebildet. Alternativ oder zusätzlich könnte eine Koppelvorrichtung eine magnetische Schnittstelle zu einer magnetischen Anbindung einer Aufsatzvorrichtung an eine Hauptabtriebswelle aufweisen.

Die mechanische Schnittstelle 130c ist zumindest insbesondere im Wesentlichen zylinderförmig ausgebildet und weist eine Mehrzahl von Formschlusselementen 142c, 144c, 146c auf, welche insbesondere gleichmäßig an einem Außenumfang der mechanischen Schnittstelle 130c angeordnet und zu einer Drehmomentabstützung der Aufsatzvorrichtung 400c vorgesehen sind. Die Formschlusselemente 142c, 144c, 146c der mechanischen Schnittstelle 130c des Werkzeugbasismoduls 100c sind insbesondere dazu vorgesehen zu einer Drehmomentabstützung mit korrespondierenden Formschlusselementen 410c, 412c, 414c der Aufsatzvorrichtung 400c zusammenzuwirken. Die Formschlusselemente 142c, 144c, 146c können insbesondere als Materialausnehmungen und/oder -aussparungen in einer Mantelfläche 134c der mechanischen Schnittstelle 130c eingebracht, als Materialvorsprünge auf einer Mantelfläche 134c der mechanischen Schnittstelle 130c und/oder als Abflachungen einer Mantelfläche 134c der mechanischen Schnittstelle 130c ausgebildet sein. Die mechanische Schnittstelle 130c weist in dem vorliegenden Ausführungsbeispiel drei Formschlusselemente 142c, 144c, 146c auf, welche um jeweils 120° versetzt an dem Außenumfang der mechanischen Schnittstelle 130c angeordnet sind. In dem vorliegenden Ausführungsbeispiel weist die mechanische Schnittstelle 130c zwei artgleiche Formschlusselemente 142c, 144c auf, welche als Materialausnehmungen oder -aussparungen in der Mantelfläche 134c der mechanischen Schnittstelle 130c ausgebildet sind. Die zwei artgleichen Formschlusselemente 142c, 144c weisen einen zumindest im Wesentlichen dreieckigen Querschnitt auf. Die zwei artgleichen Formschlusselemente 142c, 144c sind zu einer Aufnahme von zwei korrespondierend ausgebildeten Formschlusselementen 410c, 412c der Aufsatzvorrichtung 400c vorgesehen. Die mechanische Schnittstelle 130c weist ferner ein als eine Abflachung der Mantelfläche 134c der mechanischen Schnittstelle 130c ausgebildetes Formschlusselement 146c auf. Insbesondere ist das als Abflachung ausgebildete Formschlusselement 146c zu einer Anlage an einem korrespondierend ausgebildeten flächigen Formschlusselement 414c der Aufsatzvorrichtung 400c vorgesehen.

Die mechanische Schnittstelle 130c weist eine zumindest im Wesentlichen senkrecht zur Hauptabtriebswelle 118c verlaufende Stirnfläche 132c auf, in welcher eine Mehrzahl von Verriegelungsöffnungen 136c, 138c, 140c angeordnet ist, welche dazu vorgesehen sind, Verriegelungshaken 416c, 418c, 420c der Aufsatzvorrichtung 400c aufzunehmen. Die mechanische Schnittstelle 130c weist im vorliegenden Ausführungsbeispiel eine zumindest im Wesentlichen senkrecht zur Hauptabtriebswelle 118c verlaufende Stirnfläche 132c auf, in welcher drei Verriegelungsöffnungen 136c, 138c, 140c angeordnet sind, welche um jeweils 90° versetzt um die Hauptabtriebswelle 118c angeordnet sind. Alle Schnittstellenelemente der mechanischen Schnittstelle 130c, einer elektrischen Schnittstelle 148c und die Wellenaufnahme 120c schließen zumindest im Wesentlichen bündig mit der Stirnfläche 132c ab. Alle Schnittstellenelemente der mechanischen Schnittstelle 130c und der elektrischen Schnittstelle 148c sind zumindest teilweise in einer die Wellenaufnahme 120c schneidenden Ebene angeordnet, welche zumindest im Wesentlichen senkrecht zur Hauptabtriebswelle 118c verläuft.

Die elektrische Schnittstelle 148c ist zu einer mit der mechanischen Anbindung gekoppelten elektrischen Anbindung der Aufsatzvorrichtung 400c an dem Werkzeugbasismodul 100c vorgesehen.

Die elektrische Schnittstelle 148c weist zwei artgleiche Leistungskontaktbuchsen 150c, 152c zu einer Übertragung einer großen elektrischen Leistung und/oder eines großen elektrischen Stroms sowie eine Signalkontaktbuchse 154c zu einer Übertragung einer kleinen elektrischen Leistung und/oder eines kleinen elektrischen Stroms auf. Die Leistungskontaktbuchsen 150c, 152c sind dazu vorgesehen, eine elektrische Leistung von dem Werkzeugbasismodul 100c auf die Aufsatzvorrichtung 400c zu übertragen. Die Leistungskontaktbuchsen 150c, 152c sind dazu vorgesehen, einen Strom von wenigstens 20 A zu übertragen. Die Leistungskontaktbuchsen 150c, 152c sind dazu vorgesehen, eine Leistung von wenigstens 100 Watt zu übertragen. Es ist denkbar, dass die Leistungskontaktbuchsen 150c, 152c zu einer Übertragung eines größeren Stroms und/oder einer höheren Leistung vorgesehen ist, von beispielsweise 30 A und/oder 500 Watt. Die Leistungskontaktbuchsen 150c, 152c weisen in einem gekoppelten Zustand einen elektrischen Widerstand von höchstens 15 mΩ auf. Die Leistungskontaktbuchsen 150c, 152c weisen in einem gekoppelten Zustand einen elektrischen Widerstand von 12 mΩ auf.

Die Signalkontaktbuchse 154c ist zu einer mit der mechanischen Anbindung gekoppelten weiteren elektrischen Anbindung der Aufsatzvorrichtung 400c an dem Werkzeugbasismodul 100c vorgesehen. Die Signalkontaktbuchse 154c ist dazu vorgesehen, eine elektrische Leistung und/oder ein elektrisches Signal zwischen dem Werkzeugbasismodul 100c und der Aufsatzvorrichtung 400c zu übertragen. Die Signalkontaktbuchse 154c ist dazu vorgesehen, einen Strom von höchstens 25 mA zu übertragen. Es ist denkbar, dass die Signalkontaktbuchse 154c dazu vorgesehen ist, einen Strom von bis zu 1 A zu übertragen. Es ist denkbar, dass die elektrische Schnittstelle 148c in einer alternativen Ausgestaltung lediglich die Leistungskontaktbuchsen 150c, 152c aufweist.

Die Aufsatzvorrichtung 400c ist zu einer antriebstechnischen mechanischen und einer elektrischen Anbindung an das Werkzeugbasismodul 100c vorgesehen. Die Aufsatzvorrichtung 400c weist eine Haupteingangswelle 408c und eine Koppelvorrichtung 126c auf, die eine mechanische Schnittstelle 406c zu einer antriebstechnischen mechanischen Anbindung der Haupteingangswelle 408c an der Hauptabtriebswelle 118c des Werkzeugbasismoduls 100c sowie eine elektrische Schnittstelle 422c zu einer elektrischen Kopplung mit einer elektrischen Schnittstelle 148c des Werkzeugbasismoduls 100c aufweist.

Die mechanische Schnittstelle 406c der Aufsatzvorrichtung 400c weist in dem vorliegenden Ausführungsbeispiel drei Formschlusselemente 410c, 412c, 414c auf, welche um jeweils 120° versetzt an einem Innenumfang der mechanischen Schnittstelle 406c der Aufsatzvorrichtung 400c angeordnet sind. Die mechanische Schnittstelle 406c der Aufsatzvorrichtung 400c weist zwei artgleiche Formschlusselemente 410c, 412c auf, welche als Materialvorsprünge an der Innenfläche der mechanischen Schnittstelle 406c der Aufsatzvorrichtung 400c ausgebildet sind. Die zwei artgleichen Formschlusselemente 410c, 412c sind als Rippen ausgebildet. Die zwei artgleichen Formschlusselemente 410c, 412c sind zu einer Aufnahme in zwei korrespondierend ausgebildeten Formschlusselementen 142c, 144c des Werkzeugbasismoduls 100c vorgesehen. Die mechanische Schnittstelle 406c der Aufsatzvorrichtung 400c weist ferner ein als eine Abflachung der Innenfläche der mechanischen Schnittstelle 406c ausgebildetes Formschlusselement 414c auf. Das als Abflachung ausgebildete Formschlusselement 414c ist zu einer Anlage an einem korrespondierend ausgebildeten flächigen Formschlusselement 146c des Werkzeugbasismoduls 100c vorgesehen.

Die mechanische Schnittstelle 406c der Aufsatzvorrichtung 400c weist eine Mehrzahl von Verriegelungshaken 416c, 418c, 420c auf, welche dazu vorgesehen sind, in die Verriegelungsöffnungen 136c, 138c, 140c der mechanischen Schnittstelle 130c des Werkzeugbasismoduls 100c einzugreifen. Die mechanische Schnittstelle 406c der Aufsatzvorrichtung 400c weist in dem vorliegenden Ausführungsbeispiel drei Verriegelungshaken 416c, 418c, 420c auf, welche um jeweils 90° versetzt um die Haupteingangswelle 408c angeordnet sind.

Die Haupteingangswelle 408c ist zu einer Übertragung eines Drehmoments von der Hauptabtriebswelle 118c des Werkzeugbasismoduls 100c auf die Aufsatzvorrichtung 400c vorgesehen. Die Haupteingangswelle 408c der Aufsatzvorrichtung 400c ist in dem vorliegenden Ausführungsbeispiel als eine Sechskantwelle ausgebildet.

Die Aufsatzvorrichtung 400c weist eine elektrische Schnittstelle 422c auf, die korrespondierend zu der elektrischen Schnittstelle 148c des Werkzeugbasismoduls 100c ausgebildet ist. Die elektrische Schnittstelle 422c weist zwei artgleiche Leistungssteckkontakte 424c, 426c zu einer Übertragung einer großen elektrischen Leistung und/oder eines großen elektrischen Stroms sowie einen Signalsteckkontakt 428c zu einer Übertragung einer kleinen elektrischen Leistung und/oder eines kleinen elektrischen Stroms auf. Der Signalsteckkontakt 428c ist zwischen den zwei Leistungssteckkontakten 424c, 426c angeordnet und zumindest im Wesentlichen senkrecht zu diesen orientiert. Die Leistungssteckkontakte 424c, 426c und der Signalsteckkontakt 428c sind vollständig innerhalb des von der mechanischen Schnittstelle 406c der Aufsatzvorrichtung 400c gebildeten Kragens angeordnet. Hierdurch kann eine Beschädigung, insbesondere ein Verbiegen, der Leistungssteckkontakte 424c, 426c und des Signalsteckkontakts 428c, beispielsweise bei einem Sturz der Aufsatzvorrichtung 400c, zumindest weitgehend verhindert werden.

Alternativ oder zusätzlich zu einer mechanischen Schnittstelle und/oder einer elektrischen Schnittstelle könnte ein Antriebsmodul und/oder ein Aufsatzmodul eine magnetische Schnittstelle aufweisen. Dadurch könnte vorteilhaft eine schnelle und/oder geführte Kopplung zumindest zweier Module, insbesondere des Antriebsmoduls und des Aufsatzmoduls, ermöglicht werden.

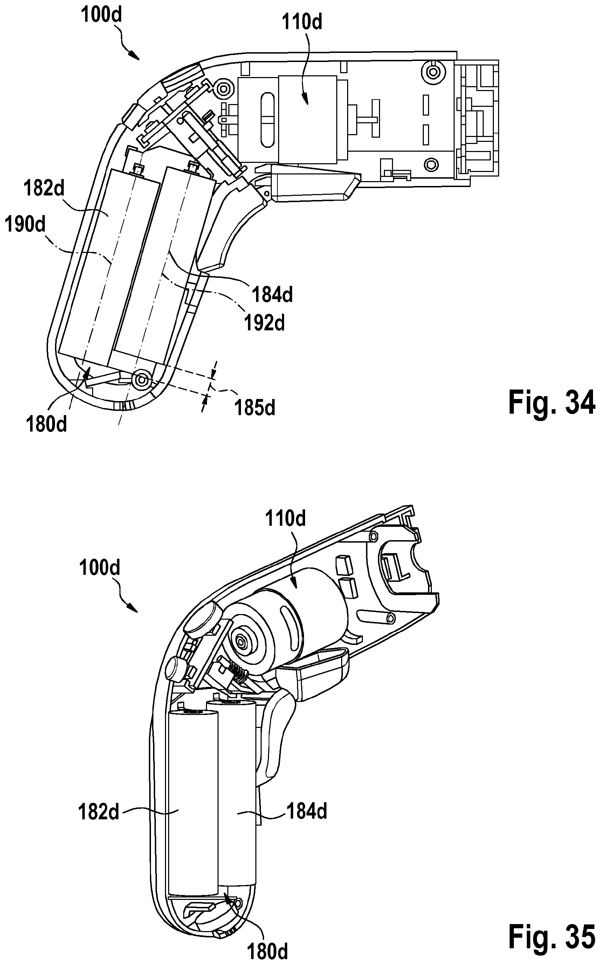

In den Figuren 34 und 35 ist ein weiteres Ausführungsbeispiel gezeigt. Dem Ausführungsbeispiel der Figuren 34 und 35 ist der Buchstabe d nachgestellt. Das weitere Ausführungsbeispiel der Figuren 34/31/34 und 35/32/35 unterscheidet sich von den vorherigen Ausführungsbeispielen zumindest im Wesentlichen durch eine Ausgestaltung einer Energiespeichereinheit 180d.

Eine erste Energiespeicherzelle 182d und eine zweite Energiespeicherzelle 184d der Energiespeichereinheit 180d weisen einen in Figur 34/ gezeigten Versatz 185d auf. Der Versatz 185d ist parallel zu einer Längserstreckungsachse 190d der ersten Energiespeicherzelle 182d gemessen. Der Versatz 185d ist parallel zu einer Längserstreckungsachse 192d der zweiten Energiespeicherzelle 184d gemessen. Der Versatz 185d beträgt zumindest 1 mm, insbesondere zumindest 4 mm. Der Versatz 185d beträgt höchstens 12 mm, insbesondere höchstens 8 mm. Der Versatz 185d beträgt ungefähr 6 mm. In Figur 35 ist eine perspektivische Ansicht einer Anordnung der ersten Energiespeicherzelle 182d und der zweiten Energiespeicherzelle 184d gezeigt.

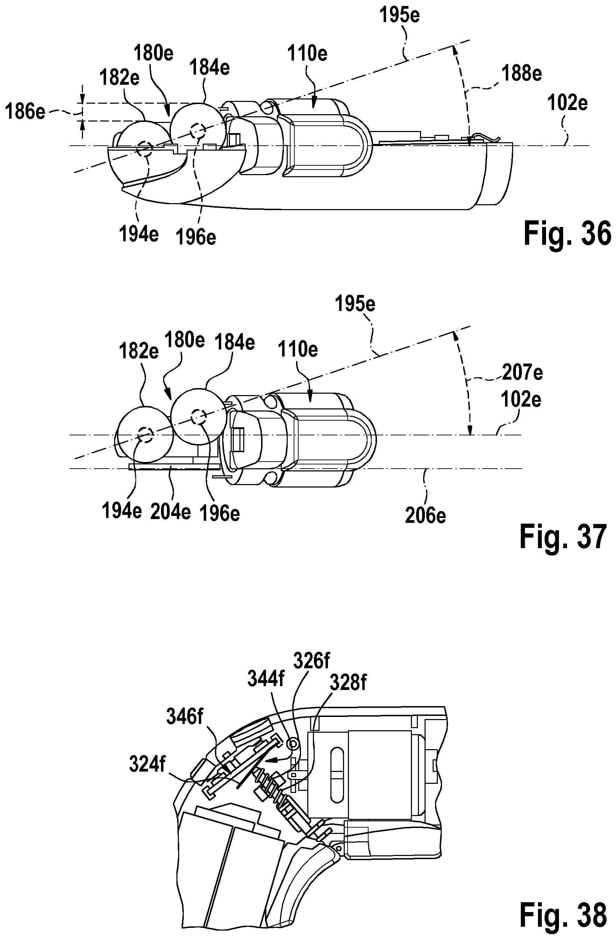

In den Figuren 36 und 37 ist ein weiteres Ausführungsbeispiel gezeigt. Dem Ausführungsbeispiel der Figuren 36 und 37 ist der Buchstabe e nachgestellt. Das weitere Ausführungsbeispiel der Figuren 36 und 37 unterscheidet sich von den vorherigen Ausführungsbeispielen zumindest im Wesentlichen durch eine Ausgestaltung einer Energiespeichereinheit 180e.

Eine erste Energiespeicherzelle 182e und eine zweite Energiespeicherzelle 184e der Energiespeichereinheit 180e weisen einen in Figur 36 gezeigten weiteren Versatz 186e auf. Der weitere Versatz 186e ist senkrecht zu einer Haupterstreckungsebene 102e eines Antriebsmoduls 100e mit der Energiespeichereinheit 180e gemessen. Der weitere Versatz 186e beträgt zumindest 1 mm, insbesondere zumindest 3 mm. Der weitere Versatz 186e beträgt höchstens 10 mm, insbesondere höchstens 7 mm. Der weitere Versatz 186e beträgt ungefähr 5 mm. Ein erster Schwerpunkt 194e der ersten Energiespeicherzelle 182e ist ungefähr in der Haupterstreckungsebene 102e des Antriebsmoduls 100e angeordnet. Ein zweiter Schwerpunkt 196e der zweiten Energiespeicherzelle 184e ist außerhalb der Haupterstreckungsebene 102e des Antriebsbasismoduls 100e angeordnet.

Eine Schwerpunktachse 195e durch einen ersten Schwerpunkt 194e der ersten Energiespeicherzelle 182e und durch einen zweiten Schwerpunkt 196e der zweiten Energiespeicherzelle 184e schließt mit der Haupterstreckungsebene 102e des Antriebsmoduls 100e einen Winkel 188e ein. Der durch die Schwerpunktachse 195e und die Haupterstreckungsebene 102e des Antriebsmoduls 100e eingeschlossene Winkel 188e beträgt zumindest 5°, insbesondere zumindest 10°. Der durch die Schwerpunktachse 195e und die Haupterstreckungsebene 102e des Antriebsmoduls 100e eingeschlossene Winkel 188e beträgt höchstens 45°, insbesondere höchstens 30°. Der durch die Schwerpunktachse 195e und die Haupterstreckungsebene 102e des Antriebsmoduls 100e eingeschlossene Winkel 188e beträgt ungefähr 19°.

Die Schwerpunktachse 195e schließt mit einer Haupterstreckungsebene 206e einer Hauptplatine 204e des Antriebsmoduls 100e einen in Figur 37 gezeigten Winkel 207e ein. Der durch die Schwerpunktachse 195e und die Haupterstreckungsebene 206e des Antriebsmoduls 100e eingeschlossene Winkel 207e beträgt zumindest 5°, insbesondere zumindest 10°. Der durch die Schwerpunktachse 195e und die Haupterstreckungsebene 206e des Antriebsmoduls 100e eingeschlossene Winkel 207e beträgt höchstens 45°, insbesondere höchstens 30°. Der durch die Schwerpunktachse 195e und die Haupterstreckungsebene 206e des Antriebsmoduls 100e eingeschlossene Winkel 207e beträgt ungefähr 19°.

In der Figur 38 ist ein weiteres Ausführungsbeispiel gezeigt. Dem Ausführungsbeispiel der Figur 38 ist der Buchstabe f nachgestellt. Das weitere Ausführungsbeispiel der Figur 38/35/38 unterscheidet sich von den vorherigen Ausführungsbeispielen zumindest im Wesentlichen durch eine Ausgestaltung einer elektrischen Baugruppe 344f.

Die elektrische Baugruppe 344f weist ein weiteres Schaltelement 324f auf. Das weitere Schaltelement 324f ist an der Nebenplatine 346f angeordnet. Das weitere Schaltelement 324f ist mit der Nebenplatine 346f verbunden. Ein Längsende des weiteren Schaltelements 324f ist mit einem Längsende der Nebenplatine 346f verbunden. Das weitere Schaltelement 324f ist als ein Schaltblech ausgebildet. Das weitere Schaltelement 324f ist als ein kapazitives Schaltelement ausgebildet.

Das weitere Schaltelement 324f weist eine von einer Verformung und/oder einer Lage des weiteren Schaltelements 324f abhängige Kapazität auf. Ein Längsende des Schaltelements 326f kontaktiert das weitere Schaltelement 324f. Eine Betätigung des Schaltelements 326f bewirkt eine Verformung des weiteren Schaltelements 324f. Eine Betätigung des Schaltelements 326f bewirkt ein Verbiegen des weiteren Schaltelements 324f.

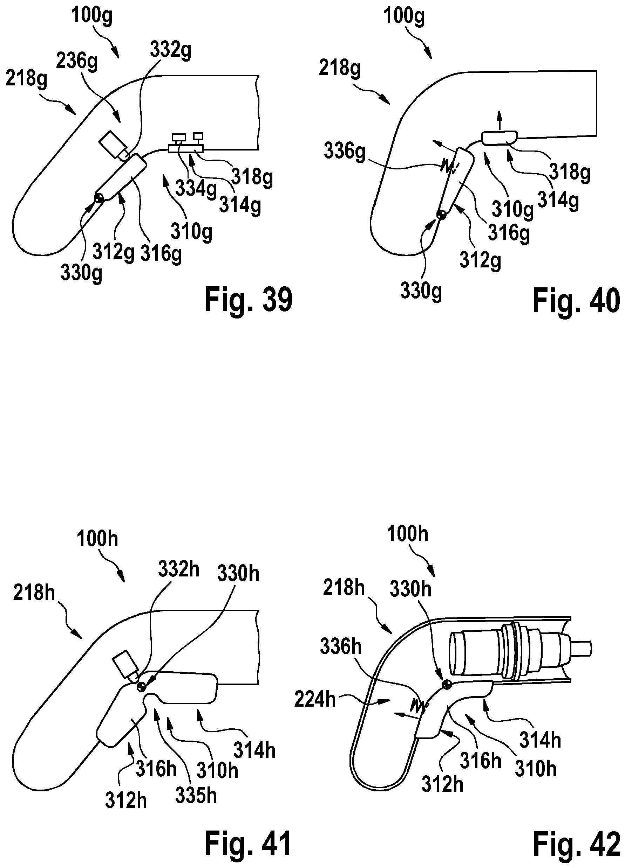

In den Figuren 39 und 40 ist ein weiteres Ausführungsbeispiel gezeigt. Dem Ausführungsbeispiel der Figuren 39 und 40 ist der Buchstabe g nachgestellt. Das weitere Ausführungsbeispiel der Figuren 39 und 40 unterscheidet sich von den vorherigen Ausführungsbeispielen zumindest im Wesentlichen durch eine Ausgestaltung einer ersten Betätigungseinheit 310g.

Ein erstes Betätigungselement 316g der ersten Betätigungseinheit 310g weist eine ebene Betätigungsfläche 312g auf. Das erste Betätigungselement 316g ist um eine Schwenkachse 330g schwenkbar gelagert. Die Schwenkachse 330g ist an einem, insbesondere einem gekrümmten Übergangsbereich 236g einer Gehäuseeinheit 218g abgewandten, Längsende des ersten Betätigungselements 316g angeordnet.

Das erste Betätigungselement 316g ist zu einer Betätigung einer elektrischen Baugruppe 332g, insbesondere eines Potentiometers, vorgesehen. Ein, insbesondere dem Längsende entgegengesetzt angeordnetes, weiteres Längsende des ersten Betätigungselements 316g kontaktiert die elektrische Baugruppe 332g.

Das erste Betätigungselement 316g ist gefedert gelagert. Das erste Betätigungselement 316g ist mittels eines Federelements 336g an der Gehäuseeinheit 218g gelagert. Das erste Betätigungselement 316g ist mittels des Federelements 336g an einem Griffgehäuseabschnitt 224g der Gehäuseeinheit 218g gelagert. Das Federelement 336g ist als eine Druckfeder ausgebildet. Das Federelement 336g ist als eine Spiralfeder ausgebildet.

Ein weiteres erstes Betätigungselement 318g der ersten Betätigungseinheit 310g weist eine ebene zweite Betätigungsfläche 314g auf. Das weitere erste Betätigungselement 318g ist zu einer Betätigung eines zweiten Schalters 334g vorgesehen. Ein, insbesondere dem Übergangsbereich 236g zugewandtes, Längsende des weiteren ersten Betätigungselements 318g kontaktiert den zweiten Schalter 334g. Der zweite Schalter 334g ist als ein Druckschalter ausgebildet. Der zweite Schalter 334g ist als ein Mikroschalter ausgebildet.

In den Figuren 41 und 42 ist ein weiteres Ausführungsbeispiel gezeigt. Dem Ausführungsbeispiel der Figuren 41 und 42 ist der Buchstabe h nachgestellt. Das weitere Ausführungsbeispiel der Figuren 41 und 42 unterscheidet sich von den vorherigen Ausführungsbeispielen zumindest im Wesentlichen durch eine Ausgestaltung einer ersten Betätigungseinheit 310h.

Die erste Betätigungseinheit 310h ist einteilig ausgebildet. Die erste Betätigungseinheit 310h ist als ein erstes Betätigungselement 316h ausgebildet. Das erste Betätigungselement 316h weist eine erste Betätigungsfläche 312h und eine zweite Betätigungsfläche 314h auf. Die erste Betätigungsfläche 312h und die zweite Betätigungsfläche 314h sind durch eine Aussparung 335h in dem ersten Betätigungselement 316h voneinander getrennt. Die Aussparung 335h ist U-förmig ausgebildet. Alternativ können eine erste Betätigungsfläche und eine zweite Betätigungsfläche ineinander übergehen. Ferner kann das erste Betätigungselement 316h aussparungsfrei ausgebildet sein.

Das erste Betätigungselement 316h ist zu einer Betätigung einer elektrischen Baugruppe 332h, insbesondere eines Potentiometers, vorgesehen. Ein, insbesondere durch die Aussparung 335h eingeengter, Mittelteil des ersten Betätigungselements 316h kontaktiert die elektrische Baugruppe 332h. Das erste Betätigungselement 316h ist um eine Schwenkachse 330h schwenkbar gelagert. Die Schwenkachse 330h ist in dem Mittelteil des ersten Betätigungselements 316h angeordnet. Die Schwenkachse 330h ist zwischen der Aussparung 335h und der elektrischen Baugruppe 332h angeordnet.

Das erste Betätigungselement 316h ist gefedert gelagert. Das erste Betätigungselement 316h ist mittels eines Federelements 336h an der Gehäuseeinheit 218h gelagert. Das erste Betätigungselement 316h ist mittels des Federelements 336h an einem Griffgehäuseabschnitt 224h der Gehäuseeinheit 218h gelagert. Das Federelement 336h ist als eine Druckfeder ausgebildet. Das Federelement 336h ist als eine Spiralfeder ausgebildet.

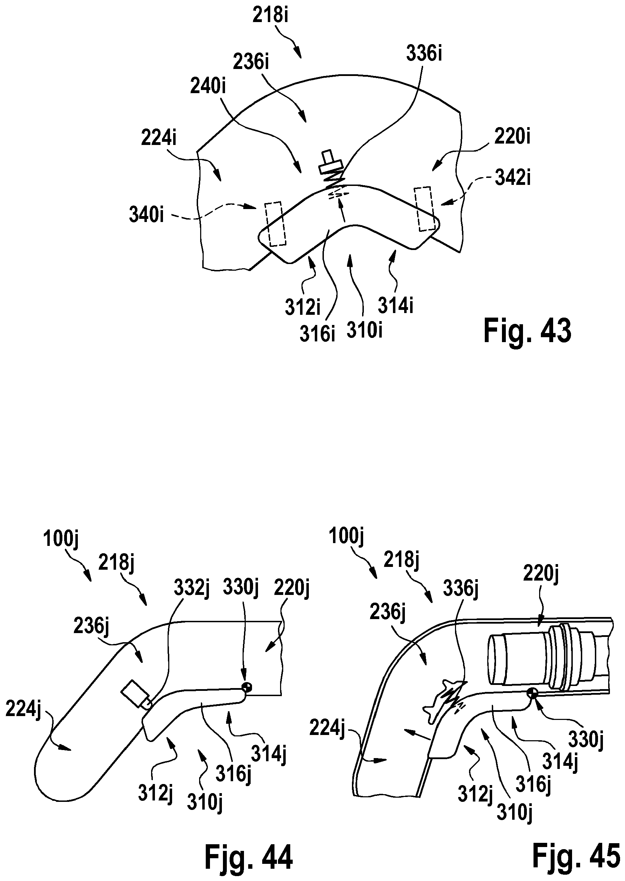

In der Figur 43 ist ein weiteres Ausführungsbeispiel gezeigt. Dem Ausführungsbeispiel der Figur 43 ist der Buchstabe i nachgestellt. Das weitere Ausführungsbeispiel der Figur 43 unterscheidet sich von den vorherigen Ausführungsbeispielen zumindest im Wesentlichen durch eine Ausgestaltung einer ersten Betätigungseinheit 310i.

Die erste Betätigungseinheit 310i ist einteilig ausgebildet. Die erste Betätigungseinheit 310i ist als ein erstes Betätigungselement 316i ausgebildet. Das erste Betätigungselement 316i weist eine erste Betätigungsfläche 312i und eine zweite Betätigungsfläche 314i auf. Die erste Betätigungsfläche 312i und die zweite Betätigungsfläche 314i gehen ineinander über.

Das erste Betätigungselement 316i ist in einer Gehäuseeinheit 218i geführt. Ein Antriebsgehäuseabschnitt 220i der Gehäuseeinheit 218i weist ein erstes Führungselement 342i auf. Das erste Führungselement 340i ist als eine erste Führungsschiene ausgebildet. Ein erstes Längsende des ersten Betätigungselements 316i ist in dem ersten Führungselement 342i geführt. Ein Griffgehäuseabschnitt 224i der Gehäuseeinheit 218i weist ein zweites Führungselement 342i auf. Das zweite Führungselement 340i ist als eine zweite Führungsschiene ausgebildet. Ein, insbesondere dem ersten Längsende entgegengesetzt angeordnetes, zweites Längsende des ersten Betätigungselements 316i ist in dem zweiten Führungselement 340i geführt.

Das erste Betätigungselement 316i ist schwimmend gelagert. Das erste Betätigungselement 316i ist gefedert gelagert. Das erste Betätigungselement 316i ist mittels eines Federelements 336i an der Gehäuseeinheit 218i gelagert. Das erste Betätigungselement 316i ist mittels des Federelements 336i an einem gekrümmten Übergangsbereich 236i, insbesondere einem Innenbereich 240i eines gekrümmten Übergangsbereichs 236i, der Gehäuseeinheit 218i gelagert. Das Federelement 336i ist als eine Druckfeder ausgebildet. Das Federelement 336i ist als eine Spiralfeder ausgebildet.

Das erste Betätigungselement 316i ist zu einer Betätigung eines nicht näher gezeigten, insbesondere mit einer elektrischen Baugruppe, beispielsweise einem Potentiometer, mechanisch gekoppelten, Schaltelements vorgesehen.

In den Figuren 44 und 45 ist ein weiteres Ausführungsbeispiel gezeigt. Dem Ausführungsbeispiel der Figuren 44 und 45 ist der Buchstabe j nachgestellt. Das weitere Ausführungsbeispiel der Figuren 44 und 45 unterscheidet sich von den vorherigen Ausführungsbeispielen zumindest im Wesentlichen durch eine Ausgestaltung einer ersten Betätigungseinheit 310j.

Die erste Betätigungseinheit 310j ist einteilig ausgebildet. Die erste Betätigungseinheit 310j ist als ein erstes Betätigungselement 316j ausgebildet. Das erste Betätigungselement 316j weist eine erste Betätigungsfläche 312j und eine zweite Betätigungsfläche 314j auf. Die erste Betätigungsfläche 312j und die zweite Betätigungsfläche 314j gehen ineinander über.

Das erste Betätigungselement 316j ist um eine Schwenkachse 330j schwenkbar gelagert. Die Schwenkachse 330j ist an einem, insbesondere einem Antriebsgehäuseabschnitt 220j einer Gehäuseeinheit 218j zugewandten, Längsende des ersten Betätigungselements 316j angeordnet.

Das erste Betätigungselement 316j ist zu einer Betätigung einer elektrischen Baugruppe 332j, insbesondere eines Potentiometers, vorgesehen. Ein, insbesondere dem Längsende entgegengesetzt angeordnetes, weiteres Längsende des ersten Betätigungselements 316j kontaktiert die elektrische Baugruppe 332j.

Das erste Betätigungselement 316j ist gefedert gelagert. Das erste Betätigungselement 316j ist mittels eines Federelements 336j an der Gehäuseeinheit 218j gelagert. Das erste Betätigungselement 316j ist mittels des Federelements 336j an einem Griffgehäuseabschnitt 224j der Gehäuseeinheit 218j gelagert. Das Federelement 336j ist als eine Druckfeder ausgebildet. Das Federelement 336j ist als eine Spiralfeder ausgebildet.

## Patentansprüche

1. Antriebsbasismodul (100a; 100b; 100c; 100d; 100g; 100h; 100j), insbesondere handgehaltenes Antriebsbasismodul, vorteilhaft einer modular aufgebauten multifunktionalen handgehaltenen Maschine, zu einer Verbindung mit verschiedenen Aufsatzvorrichtungen (400a; 400c), mit zumindest einer Verbindungsvorrichtung (126a; 126b; 126c), die zumindest eine antriebstechnische Schnittstelle (128a; 128b, 130c) und eine datentechnische Schnittstelle (156a; 156b) zu einer Verbindung mit zumindest einer Aufsatzvorrichtung (400a; 400c) aufweist, und mit zumindest einer Antriebseinheit (110a; 110b; 110c; 110d), insbesondere einem Elektromotor, zu einem Antrieb der Aufsatzvorrichtung (400a; 400c) in einem mit der Verbindungsvorrichtung (126a; 126b; 126c) verbundenen Zustand der Aufsatzvorrichtung (400a; 400c), sowie insbesondere mit zumindest einer Akkueinheit, **gekennzeichnet durch** zumindest eine Informationsausgabeeinheit (370a; 370b; 370c), die zumindest dazu vorgesehen ist, einem Bediener akustisch und/oder haptisch Informationen auszugeben.

2. Antriebsbasismodul (100a; 100b; 100c; 100d; 100g; 100h; 100j) nach Anspruch 1, **gekennzeichnet durch** zumindest eine Elektronikeinheit (168a; 168b) zumindest zu einer Steuerung und/oder Regelung der Antriebseinheit (110a; 110b; 110c; 110d), wobei die Informationsausgabeeinheit (370a; 370b; 370c) zumindest dazu vorgesehen ist, akustisch und/oder haptisch Informationen zumindest in Abhängigkeit von mittels der Elektronikeinheit (168a; 168b) einstellbaren Steuer- und/oder Regelkenngrößen der Antriebseinheit (110a; 110b; 110c; 110d) auszugeben.

3. Antriebsbasismodul (100a; 100b; 100c; 100d; 100g; 100h; 100j) nach einem der vorherigen Ansprüche, **gekennzeichnet durch** zumindest eine Elektronikeinheit (168a; 168b), die zumindest ein Sensorelement (170a; 170b) zu einer Erfassung zumindest einer Verbindungskenngröße der antriebstechnischen Schnittstelle (128a; 128b, 130c) und/oder der datentechnischen Schnittstelle (156a; 156b) aufweist, wobei die Informationsausgabeeinheit (370a; 370b; 370c) zumindest dazu vorgesehen ist, akustisch und/oder haptisch Informationen zumindest in Abhängigkeit von der erfassten Verbindungskenngröße auszugeben.

4. Antriebsbasismodul (100a; 100b; 100c; 100d; 100g; 100h; 100j) nach Anspruch 3, **dadurch gekennzeichnet, dass** die Informationsausgabeeinheit (370a; 370b; 370c) zumindest dazu vorgesehen ist, akustisch und/oder haptisch Informationen zumindest in Abhängigkeit von einer Funktion und/oder einer Art der an der Verbindungsvorrichtung (126a; 126b; 126c) angeordneten Aufsatzvorrichtung (400a; 400c) auszugeben.

5. Antriebsbasismodul (100a; 100b; 100c; 100d; 100g; 100h; 100j) nach einem der vorherigen Ansprüche, **gekennzeichnet durch** zumindest eine Elektronikeinheit (168a; 168b), die zumindest ein, insbesondere weiteres, Sensorelement (172a; 172b) zu einer Erfassung zumindest einer Energieversorgungskenngröße aufweist, wobei die Informationsausgabeeinheit (370a; 370b; 370c) zumindest dazu vorgesehen ist, akustisch und/oder haptisch Informationen zumindest in Abhängigkeit von der erfassten Energieversorgungskenngröße auszugeben.

6. Antriebsbasismodul (100a; 100b; 100c; 100d; 100g; 100h; 100j) nach einem der vorherigen Ansprüche, **gekennzeichnet durch** zumindest eine Empfangs- und/oder Kommunikationseinheit (176a; 176b), die zumindest zu einem Empfang eines Radiosignals und/oder zu einer Kommunikation mit einer externen Einheit vorgesehen ist, wobei die Informationsausgabeeinheit (370a; 370b; 370c) dazu vorgesehen ist, akustisch und/oder haptisch Informationen zumindest in Abhängigkeit von dem empfangenen Radiosignal und/oder von empfangenen elektronischen Daten auszugeben.

7. Antriebsbasismodul (100a; 100b; 100c; 100d; 100g; 100h; 100j) nach einem der vorherigen Ansprüche, **gekennzeichnet durch** zumindest eine Elektronikeinheit (168a; 168b), die zumindest ein, insbesondere zusätzliches, Sensorelement (174a; 174b) zu einer Erfassung einer Bearbeitungskenngröße aufweist, wobei die Informationsausgabeeinheit (370a; 370b; 370c) dazu vorgesehen ist, akustisch und/oder haptisch Informationen zumindest in Abhängigkeit von der erfassten Bearbeitungskenngröße auszugeben.

8. Antriebsbasismodul (100a; 100b; 100c; 100d; 100g; 100h; 100j) nach einem der vorherigen Ansprüche, **gekennzeichnet durch** zumindest eine Elektronikeinheit (168a; 168b), die zumindest eine Speichereinheit (178a; 178b), insbesondere eine wiederbeschreibbare Speichereinheit, zu einer Hinterlegung von Bedienerdaten aufweist, wobei die Informationsausgabeeinheit (370a; 370b; 370c) dazu vorgesehen ist, akustisch und/oder haptisch Informationen zumindest in Abhängigkeit von den hinterlegten Bedienerdaten auszugeben.

9. Antriebsbasismodul (100a; 100b; 100c; 100d; 100g; 100h; 100j) nach einem der vorherigen Ansprüche, **dadurch gekennzeichnet, dass** die Informationsausgabeeinheit (370c) zumindest dazu vorgesehen ist, akustisch und/oder haptisch zumindest drei voneinander verschiedene Informationen auszugeben.

10. Antriebsbasismodul (100a; 100b; 100c; 100d; 100g; 100h; 100j) nach dem Oberbegriff des Anspruchs 1 und insbesondere nach Anspruch 1, **gekennzeichnet durch** ein Gehäuse (218a; 218b; 218c; 218g; 218h; 218i; 218j), welches zumindest zwei gewinkelt zueinander angeordnete Gehäuseabschnitte (220c; 220i; 220j, 224c; 224h; 224i; 224j) aufweist.

11. Antriebsbasismodul (100a; 100b; 100c; 100d; 100g; 100h; 100j) nach Anspruch 10, **gekennzeichnet durch** eine Energieversorgungseinheit (180a; 180b; 180c; 180d; 180e) welche zumindest zwei Energiespeicherzellen (182c; 182d; 182e, 184c; 184d; 184e) aufweist, wobei eine Schwerpunktachse (195c; 195e) durch die Schwerpunkte (194c; 194e, 196c; 196e) zumindest zweier der Energiespeicherzellen (182c; 182d; 182e, 184c; 184d; 184e) mit einer Haupterstreckungsebene (102c; 102e) des Antriebsbasismoduls (100a; 100b; 100c; 100d; 100g; 100h; 100j) einen Winkel von höchstens 60° einschließt.

12. Antriebsbasismodul (100a; 100b; 100c; 100d; 100g; 100h; 100j) nach einem der vorherigen Ansprüche, **gekennzeichnet durch** eine Betätigungseinheit (348c) mit zumindest einem Betätigungselement (352c), welches zu einer manuellen Auswahl von Betriebsmodi der Antriebseinheit (110a; 110b; 110c; 110d) vorgesehen ist.

13. Antriebsbasismodul (100a; 100b; 100c; 100d; 100g; 100h; 100j) nach einem der vorherigen Ansprüche, **gekennzeichnet durch** eine weitere Betätigungseinheit (310c; 310g; 310h; 310i; 310j) mit zumindest zwei funktionsredundanten Betätigungsflächen (312c; 312g; 312h; 312i; 312j, 314c; 314g; 314h; 314i; 314j) für grundsätzlich differierende Handhabungen.

14. Antriebsbasismodul (100a; 100b; 100c; 100d; 100g; 100h; 100j) nach einem der vorherigen Ansprüche, **gekennzeichnet durch** eine maximale Erstreckung (108c) von höchstens 25 cm.

15. Antriebsbasismodul (100a; 100b; 100c; 100d; 100g; 100h; 100j) nach einem der vorherigen Ansprüche, **gekennzeichnet durch** eine Masse von höchstens 1000 g.

16. Antriebsbasismodul (100a; 100b; 100c; 100d; 100g; 100h; 100j) nach einem der vorherigen Ansprüche, **dadurch gekennzeichnet, dass** die Informationsausgabeeinheit (370c) in einem Handgriffbereich (224c; 224h; 224i; 224j) angeordnet ist.

17. Multifunktionale Maschine, insbesondere handgehaltene multifunktionale Maschine, mit zumindest einem Antriebsbasismodul (100a; 100b; 100c; 100d; 100g; 100h; 100j) nach einem der vorhergehenden Ansprüche und mit zumindest einer Aufsatzvorrichtung (400a; 400b; 400c), wobei die Informationsausgabeeinheit (370a; 370b; 370c) zumindest dazu vorgesehen ist, einem Bediener akustisch und/oder haptisch Informationen zumindest in Abhängigkeit einer Montage und/oder Demontage der Schnittstelle (128a; 128b, 130c) und der Aufsatzvorrichtung (400a) auszugeben.

18. Verfahren zu einer akustischen und/oder haptischen Ausgabe von Informationen mittels der Informationsausgabeeinheit (370a; 370b; 370c) des Antriebsbasismoduls (100a; 100b; 100c) zumindest nach einem der Ansprüche 1 bis 9.

19. Verfahren nach Anspruch 18, **dadurch gekennzeichnet, dass** in zumindest einem Verfahrensschritt haptisch und/oder akustisch Informationen mittels einer durch die Informationsausgabeeinheit (370a; 370b; 370c) hervorgerufene Anregung der Antriebseinheit (110a; 110b; 110c; 110d) ausgegeben werden.

20. Verfahren nach Anspruch 18'oder 19, **dadurch gekennzeichnet, dass** in zumindest einem Verfahrensschritt mittels der Informationsausgabeeinheit (370a; 370b; 370c) akustisch und/oder haptisch Informationen zumindest in Abhängigkeit von einem aufgetretenen Gerätefehler und/oder Bedienfehler ausgegeben werden.

21. Verfahren nach einem der Ansprüche 18 bis 20, **dadurch gekennzeichnet, dass** in zumindest einem Verfahrensschritt mittels der Informationsausgabeeinheit (370a; 370b; 370c) akustisch und/oder haptisch Informationen zumindest in Abhängigkeit eines Betriebsmoduswechsels ausgegeben werden.

22. Verfahren nach einem der Ansprüche 18 bis 21, **dadurch gekennzeichnet, dass** in zumindest einem Verfahrensschritt mittels der Informationsausgabeeinheit (370a; 370b; 370c) akustisch und/oder haptisch Informationen zumindest in Abhängigkeit einer Montage und/oder Demontage der Schnittstelle (128a; 128b, 130c) und der Aufsatzvorrichtung (400a; 400b; 400c) ausgegeben werden.

## Claims

1. Drive base module (100a; 100b; 100c; 100d; 100g; 100h; 100j), in particular handheld drive base module, advantageously of a modularly constructed multifunctional handheld machine, for connection to various attachment devices (400a; 400c), comprising at least one connection device (126a; 126b; 126c), which has at least one drive-technological interface (128a; 128b, 130c) and a data-technological interface (156a; 156b) for connection to at least one attachment device (400a; 400c), and comprising at least one drive unit (110a; 110b; 110c; 110d), in particular an electric motor, for driving the attachment device (400a; 400c) in a state in which the attachment device (400a; 400c) is connected to the connection device (126a; 126b; 126c), and in particular comprising at least one rechargeable battery unit, **characterized by** at least one information output unit (370a; 370b; 370c) provided at least for outputting information to an operator acoustically and/or haptically.

2. Drive base module (100a; 100b; 100c; 100d; 100g; 100h; 100j) according to Claim 1, **characterized by** at least one electronic unit (168a; 168b) at least for an open-loop and/or closed-loop control of the drive unit (110a; 110b; 110c; 110d), wherein the information output unit (370a; 370b; 370c) is provided at least for outputting information acoustically and/or haptically at least depending on open-loop and/or closed-loop control characteristic variables of the drive unit (110a; 110b; 110c; 110d) that are settable by means of the electronic unit (168a; 168b).

3. Drive base module (100a; 100b; 100c; 100d; 100g; 100h; 100j) according to either of the preceding claims, **characterized by** at least one electronic unit (168a; 168b) having at least one sensor element (170a; 170b) for detecting at least one connection characteristic variable of the drive-technological interface (128a; 128b, 130c) and/or of the data-technological interface (156a; 156b), wherein the information output unit (370a; 370b; 370c) is provided at least for outputting information acoustically and/or haptically at least depending on the detected connection characteristic variable.

4. Drive base module (100a; 100b; 100c; 100d; 100g; 100h; 100j) according to Claim 3, **characterized in that** the information output unit (370a; 370b; 370c) is provided at least for outputting information acoustically and/or haptically at least depending on a function and/or a type of the attachment device (400a; 400c) arranged at the connection device (126a; 126b; 126c).

5. Drive base module (100a; 100b; 100c; 100d; 100g; 100h; 100j) according to any of the preceding claims, **characterized by** at least one electronic unit (168a; 168b) having at least one, in particular further, sensor element (172a; 172b) for detecting at least one energy supply characteristic variable, wherein the information output unit (370a; 370b; 370c) is provided at least for outputting information acoustically and/or haptically at least depending on the detected energy supply characteristic variable.

6. Drive base module (100a; 100b; 100c; 100d; 100g; 100h; 100j) according to any of the preceding claims, **characterized by** at least one reception and/or communication unit (176a; 176b) provided at least for reception of a radio signal and/or for communication with an external unit, wherein the information output unit (370a; 370b; 370c) is provided for outputting information acoustically and/or haptically at least depending on the received radio signal and/or on received electronic data.

7. Drive base module (100a; 100b; 100c; 100d; 100g; 100h; 100j) according to any of the preceding claims, **characterized by** at least one electronic unit (168a; 168b) having at least one, in particular additional, sensor element (174a; 174b) for detecting a processing characteristic variable, wherein the information output unit (370a; 370b; 370c) is provided for outputting information acoustically and/or haptically at least depending on the detected processing characteristic variable.

8. Drive base module (100a; 100b; 100c; 100d; 100g; 100h; 100j) according to any of the preceding claims, **characterized by** at least one electronic unit (168a; 168b) having at least one memory unit (178a; 178b), in particular a rewritable memory unit, for storing operator data, wherein the information output unit (370a; 370b; 370c) is provided for outputting information acoustically and/or haptically at least depending on the stored operator data.

9. Drive base module (100a; 100b; 100c; 100d; 100g; 100h; 100j) according to any of the preceding claims, **characterized in that** the information output unit (370c) is provided at least for outputting at least three mutually different items of information acoustically and/or haptically.

10. Drive base module (100a; 100b; 100c; 100d; 100g; 100h; 100j) according to the preamble of Claim 1 and in particular according to Claim 1, **characterized by** a housing (218a; 218b; 218c; 218g; 218h; 218i; 218j) having at least two housing sections (220c; 220i; 220j, 224c; 224h; 224i; 224j) arranged in a manner angled with respect to one another.

11. Drive base module (100a; 100b; 100c; 100d; 100g; 100h; 100j) according to Claim 10, **characterized by** an energy supply unit (180a; 180b; 180c; 180d; 180e) having at least two energy storage cells (182c; 182d; 182e, 184c; 184d; 184e), wherein a centroid axis (195c; 195e) through the centroids (194c; 194e, 196c; 196e) of at least two of the energy storage cells (182c; 182d; 182e, 184c; 184d; 184e) forms an angle of at most 60° with a main extension plane (102c; 102e) of the drive base module (100a; 100b; 100c; 100d; 100g; 100h; 100j).

12. Drive base module (100a; 100b; 100c; 100d; 100g; 100h; 100j) according to any of the preceding claims, **characterized by** an actuation unit (348c) having at least one actuation element (352c) provided for manual selection of operating modes of the drive unit (110a; 110b; 110c; 110d).

13. Drive base module (100a; 100b; 100c; 100d; 100g; 100h; 100j) according to any of the preceding claims, **characterized by** a further actuation unit (310c; 310g; 310h; 310i; 310j) having at least two functionally redundant actuation surfaces (312c; 312g; 312h; 312i; 312j, 314c; 314g; 314h; 314i; 314j) for fundamentally different handlings.

14. Drive base module (100a; 100b; 100c; 100d; 100g; 100h; 100j) according to any of the preceding claims, **characterized by** a maximum extension (108c) of at most 25 cm.

15. Drive base module (100a; 100b; 100c; 100d; 100g; 100h; 100j) according to any of the preceding claims, **characterized by** a mass of at most 1000 g.

16. Drive base module (100a; 100b; 100c; 100d; 100g; 100h; 100j) according to any of the preceding claims, **characterized in that** the information output unit (370c) is arranged in a handle region (224c; 224h; 224i; 224j).

17. Multifunctional machine, in particular handheld multifunctional machine, comprising at least one drive base module (100a; 100b; 100c; 100d; 100g; 100h; 100j) according to any of the preceding claims and comprising at least one attachment device (400a; 400b; 400c), wherein the information output unit (370a; 370b; 370c) is provided at least for outputting information to an operator acoustically and/or haptically at least depending on mounting and/or demounting of the interface (128a; 128b, 130c) and the attachment device (400a).

18. Method for acoustically and/or haptically outputting information by means of the information output unit (370a; 370b; 370c) of the drive base module (100a; 100b; 100c) at least according to any of Claims 1 to 9.

19. Method according to Claim 18, **characterized in that** in at least one method step information is output haptically and/or acoustically by means of an excitation of the drive unit (110a; 110b; 110c; 110d) brought about by the information output unit (370a; 370b; 370c).

20. Method according to Claim 18 or 19, **characterized in that** in at least one method step information is output acoustically and/or haptically by means of the information output unit (370a; 370b; 370c) at least depending on an apparatus fault and/or operator control error that have/has occurred.

21. Method according to any of Claims 18 to 20, **characterized in that** in at least one method step information is output acoustically and/or haptically by means of the information output unit (370a; 370b; 370c) at least depending on a change of operating mode.

22. Method according to any of Claims 18 to 21, **characterized in that** in at least one method step information is output acoustically and/or haptically by means of the information output unit (370a; 370b; 370c) at least depending on mounting and/or demounting of the interface (128a; 128b, 130c) and the attachment device (400a; 400b; 400c).

## Revendications

1. Module de base d'entraînement (100a ; 100b ; 100c ; 100d ; 100g ; 100h ; 100j), notamment module de base d'entraînement tenu à la main, avantageusement d'une machine multifonctionnelle tenue à la main de construction modulaire, destiné à une connexion avec différents dispositifs rapportés (400a ; 400c), comprenant au moins un dispositif de connexion (126a ; 126b ; 126c), qui possède au moins une interface technique d'entraînement (128a ; 128b ; 130c) et une interface technique de données (156a ; 156b) destinée à une connexion avec au moins un dispositif rapporté (400a ; 400c), et comprenant au moins une unité d'entraînement (110a ; 110b ; 110c ; 110d), en particulier un moteur électrique, destiné à un entraînement du dispositif rapporté (400a ; 400c) dans un état du dispositif rapporté (400a ; 400c) connecté avec le dispositif de connexion (126a ; 126b ; 126c), ainsi que comprenant en particulier au moins une unité d'accumulateur, **caractérisé par** au moins une unité de délivrance d'informations (370a ; 370b ; 370c), laquelle est prévue au moins pour délivrer des informations sonores et/ou haptiques à un opérateur.

2. Module de base d'entraînement (100a ; 100b ; 100c ; 100d ; 100g ; 100h ; 100j) selon la revendication 1, **caractérisé par** au moins une unité électronique (168a ; 168b) destinée au moins à une commande et/ou régulation de l'unité d'entraînement (110a ; 110b ; 110c ; 110d), l'unité de délivrance d'informations (370a ; 370b ; 370c) étant au moins prévue pour délivrer des informations sonores et/ou haptiques au moins en fonction de grandeurs caractéristiques de commande et/ou de régulation de l'unité d'entraînement (110a ; 110b ; 110c ; 110d) réglables au moyen de l'unité électronique (168a ; 168b).

3. Module de base d'entraînement (100a ; 100b ; 100c ; 100d ; 100g ; 100h ; 100j) selon l'une des revendications précédentes, **caractérisé par** au moins une unité électronique (168a ; 168b), laquelle possède au moins un élément capteur (170a ; 170b) destiné à une acquisition d'au moins une grandeur caractéristique de connexion de l'interface technique d'entraînement (128a ; 128b ; 130c) et/ou de l'interface technique de données (156a ; 156b), l'unité de délivrance d'informations (370a ; 370b ; 370c) étant au moins prévue pour délivrer des informations sonores et/ou haptiques au moins en fonction de la grandeur caractéristique de connexion acquise.

4. Module de base d'entraînement (100a ; 100b ; 100c ; 100d ; 100g ; 100h 100j) selon la revendication 3, **caractérisé en ce que** l'unité de délivrance d'informations (370a ; 370b ; 370c) est au moins prévue pour délivrer des informations sonores et/ou haptiques au moins en fonction d'une fonction et/ou d'un type de dispositif rapporté (400a ; 400c) disposé sur le dispositif de connexion (126a ; 126b ; 126c).

5. Module de base d'entraînement (100a ; 100b ; 100c ; 100d ; 100g ; 100h ; 100j) selon l'une des revendications précédentes, **caractérisé par** au moins une unité électronique (168a ; 168b), laquelle possède au moins un, notamment un autre, élément capteur (172a ; 172b) destiné à une acquisition d'au moins une grandeur caractéristique d'alimentation en énergie, l'unité de délivrance d'informations (370a ; 370b ; 370c) étant au moins prévue pour délivrer des informations sonores et/ou haptiques au moins en fonction de la grandeur caractéristique d'alimentation en énergie acquise.

6. Module de base d'entraînement (100a ; 100b ; 100c ; 100d ; 100g ; 100h ; 100j) selon l'une des revendications précédentes, **caractérisé par** au moins une unité de réception et/ou de communication (176a ; 176b), laquelle est conçue pour une réception d'un signal radio et/ou pour une communication avec une unité externe, l'unité de délivrance d'informations (370a ; 370b ; 370c) étant prévue pour délivrer des informations sonores et/ou haptiques au moins en fonction du signal radio reçu et/ou de données électroniques reçues.

7. Module de base d'entraînement (100a ; 100b ; 100c ; 100d ; 100g ; 100h ; 100j) selon l'une des revendications précédentes, **caractérisé par** au moins une unité électronique (168a ; 168b), laquelle possède au moins un, notamment supplémentaire, élément capteur (174a ; 174b) destiné à une acquisition d'au moins une grandeur caractéristique de traitement, l'unité de délivrance d'informations (370a ; 370b ; 370c) étant prévue pour délivrer des informations sonores et/ou haptiques au moins en fonction de la grandeur caractéristique de traitement acquise.

8. Module de base d'entraînement (100a ; 100b ; 100c ; 100d ; 100g ; 100h ; 100j) selon l'une des revendications précédentes, **caractérisé par** au moins une unité électronique (168a ; 168b), laquelle possède au moins une unité de mémoire (178a ; 178b), notamment une unité de mémoire réinscriptible, destinée à un dépôt de données d'opérateur, l'unité de délivrance d'informations (370a ; 370b ; 370c) étant prévue pour délivrer des informations sonores et/ou haptiques au moins en fonction des données d'opérateur déposées.

9. Module de base d'entraînement (100a ; 100b ; 100c ; 100d ; 100g ; 100h ; 100j) selon l'une des revendications précédentes, caractérisé que l'unité de délivrance d'informations (370c) est au moins prévue pour délivrer de manière sonore et/ou haptique au moins trois informations différentes les unes des autres.

10. Module de base d'entraînement (100a ; 100b ; 100c ; 100d ; 100g ; 100h ; 100j) selon le préambule de la revendication 1 et notamment selon la revendication 1, **caractérisé par** un boîtier (218a ; 218b ; 218c ; 218g ; 218h ; 218i ; 218j), lequel possède au moins deux portions de boîtier (220c ; 220i ; 220j ; 224c ; 224h ; 224i ; 224j) disposées de manière coudée l'une par rapport à l'autre.

11. Module de base d'entraînement (100a ; 100b ; 100c ; 100d ; 100g ; 100h ; 100j) selon le préambule de la revendication 10, **caractérisé par** une unité d'alimentation en énergie (180a ; 180b ; 180c ; 180d ; 180e), laquelle possède au moins deux cellules d'accumulation d'énergie (182c ; 182d ; 182e ; 184c ; 184d ; 184e), un axe de centre de gravité (195c ; 195e) à travers les centres de gravité (194c ; 194e ; 196c ; 196e) d'au moins deux des cellules d'accumulation d'énergie (182c ; 182d ; 182e ; 184c ; 184d ; 184e) formant un angle maximal de 60° avec un plan d'extension principal (102c ; 102e) du module de base d'entraînement (100a ; 100b ; 100c ; 100d ; 100g ; 100h ; 100j).

12. Module de base d'entraînement (100a ; 100b ; 100c ; 100d ; 100g ; 100h ; 100j) selon l'une des revendications précédentes, **caractérisé par** une unité d'actionnement (348c) comprenant au moins un élément d'actionnement (352c), lequel est conçu pour une sélection manuelle de modes de fonctionnement de l'unité d'entraînement (110a ; 110b ; 110c ; 110d).

13. Module de base d'entraînement (100a ; 100b ; 100c ; 100d ; 100g ; 100h ; 100j) selon l'une des revendications précédentes, **caractérisé par** une unité d'actionnement supplémentaire (310c ; 310g ; 310h ; 310i ; 310j) comprenant au moins deux surfaces d'actionnement (312 ; 312g ; 312h ; 312i ; 312j ; 314c ; 314g ; 314h ; 314i ; 314j) fonctionnellement redondantes pour des manipulations fondamentalement différentes.

14. Module de base d'entraînement (100a ; 100b ; 100c ; 100d ; 100g ; 100h ; 100j) selon l'une des revendications précédentes, **caractérisé par** une extension maximale (108c) d'au plus 25 cm.

15. Module de base d'entraînement (100a ; 100b ; 100c ; 100d ; 100g ; 100h ; 100j) selon l'une des revendications précédentes, **caractérisé par** une masse d'au plus 1 000 g.

16. Module de base d'entraînement (100a ; 100b ; 100c ; 100d ; 100g ; 100h ; 100j) selon l'une des revendications précédentes, **caractérisé en ce que** l'unité de délivrance d'informations (370c) est disposée dans une zone de poignée (224c ; 224h ; 224i ; 224j) .

17. Machine multifonctionnelle, notamment machine multifonctionnelle tenue à la main, comprenant au moins un module de base d'entraînement (100a ; 100b ; 100c ; 100d ; 100g ; 100h ; 100j) selon l'une des revendications précédentes et comprenant au moins un dispositif rapporté (400a ; 400b ; 400c), l'unité de délivrance d'informations (370a ; 370b ; 370c) étant au moins prévue pour délivrer à un opérateur des informations sonores et/ou haptiques au moins en fonction d'un montage et/ou démontage de l'interface (128a ; 128b ; 130c) et du dispositif rapporté (400a).

18. Procédé de délivrance sonore et/ou haptique d'informations au moyen de l'unité de délivrance d'informations (370a ; 370b ; 370c) du module de base d'entraînement (100a ; 100b ; 100c) au moins selon l'une des revendications 1 à 9.

19. Procédé selon la revendication 18, **caractérisé en ce que** dans au moins une étape du procédé, des informations haptiques et/ou sonores sont délivrées au moyen d'une excitation de l'unité d'entraînement (110a ; 110b ; 110c ; 110d) provoquée par l'unité de délivrance d'informations (370a ; 370b ; 370c).

20. Procédé selon la revendication 18 ou 19, **caractérisé en ce que** dans au moins une étape du procédé, des informations sonores et/ou haptiques sont délivrées au moyen de l'unité de délivrance d'informations (370a ; 370b ; 370c) au moins en fonction d'une erreur d'appareil et/ou d'une erreur d'opérateur qui s'est produite.

21. Procédé selon l'une des revendications 18 à 20, **caractérisé en ce que** dans au moins une étape du procédé, des informations sonores et/ou haptiques sont délivrées au moyen de l'unité de délivrance d'informations (370a ; 370b ; 370c) au moins en fonction d'un changement de mode de fonctionnement.

22. Procédé selon l'une des revendications 18 à 21, **caractérisé en ce que** dans au moins une étape du procédé, des informations sonores et/ou haptiques sont délivrées au moyen de l'unité de délivrance d'informations (370a ; 370b ; 370c) au moins en fonction d'un montage et/ou démontage de l'interface (128a ; 128b ; 130c) et du dispositif rapporté (400a ; 400b ; 400c).
